# EUROPEAN PATENT APPLICATION

(11) **EP 1 160 251 A2**
(43) Date of publication of application: **05.12.2001**
(21) Application number: 01250197.9
(22) Date of filing: 31.05.2001
(51) Int. Cl.: C07F 7/08, C09K 19/40

(54) **Liquid crystalline compounds having a silane diyl group, liquid crystal compositions comprising the same and liquid crystal display devices**

(30) Priority: 01.06.2000 JP 2000164601
(71) Applicant: CHISSO CORPORATION, Osaka-shi Osaka (JP); Chisso Petrochemical Corporation, Chiyoda-ku, Tokyo 100-0005 (JP)
(72) Inventor: Sagou, Kouki, Chisso Petrochemical Corporation, Ichihara-shi, Chiba 290-8551 (JP); Takeuchi, Hiroyuki, Chisso Petrochemical Corp., Ichihara-shi, Chiba 290-8551 (JP); Matsui, Shuichi, Chisso Petrochemical Corp., Ichihara-shi, Chiba 290-8551 (JP); Tomoyuki, Kondo, Chisso Petrochemical Corp., Ichihara-shi, Chiba 290-8551 (JP); Yasuhiro, Kubo, Chisso Petrochemical Corp., Ichihara-shi, Chiba 290-8551 (JP); Nakagawa, Etsuo, Chisso Petrochemical Corp., Ichihara-shi, Chiba 290-8551 (JP)
(74) Representative: Ziebig, Marlene, Dr. Dipl.-Chem.

(57) **Abstract**

Liquid crystalline compounds which have large dielectric anisotropy, high electrical insulation properties (high specific resistance or high voltage holding ratio), small temperature dependence, broad liquid crystal phase temperature range, excellent compatibility and low viscosity and which are represented by formula (1) 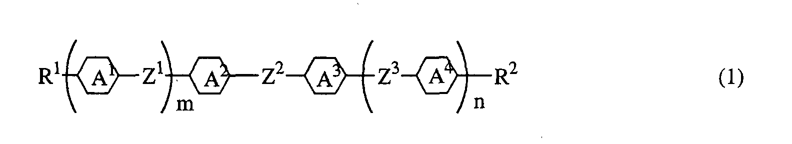 A⁴ each independently represent 1,4-cyclohexylene,1,4-phenylene, etc.; R¹ represents C₁-C₂₀ alkyl in which any methylene may be replaced by -O-, etc.; R² represents halogen, cyano or C₁-C₁₀ alkyl in which at least one hydrogen is replaced by halogen; and at least one of Z¹, Z² and Z³ represents -SiH₂CH₂- or -CH₂SiH₂-. Further, liquid crystal compositions comprising at least one liquid crystalline compound of formula (1) and liquid crystal display devices composed of the compositions, which can exhibit low threshold voltage, high electrical insulation properties and low viscosity.

## Description

### TECHNICAL FIELD

This invention relates to new liquid crystalline compounds and liquid crystal compositions, and more particularly to liquid crystalline compounds having a silanediyl group (-SiH₂-) in the linkage, liquid crystal compositions comprising the same and liquid crystal display devices composed of these liquid crystal compositions.

### BACKGROUND ART

Liquid crystal display devices using liquid crystalline compounds have been extensively utilized for a display and a monitor in watches, electronic calculators, word processors or the like. The term "liquid crystalline compound" as used herein refers generically to a compound which exhibits a liquid crystal phase and a compound which does not exhibit a liquid crystal phase, but is useful as a constituent in a liquid crystal composition. These display devices utilize optical anisotropy, dielectric anisotropy or the like of the liquid crystalline compounds.

Display modes include super twisted nematic (STN) type, thin film transistor (TFT) type or the like. The liquid crystalline compounds used in these display modes have required physical properties that they are sufficiently stable under the condition where the display device is used, and also exhibit liquid crystal phases in the temperature range as broad as possible around room temperature, have low threshold voltage to realize low voltage driving, have high electrical insulation properties (large specific resistance or high voltage holding ratio) to realize good display quality, have small temperature dependence of these characteristics, and have low viscosity. Further, a reflective TFT liquid crystal material appearing in the market recently has required the liquid crystal material having small optical anisotropy.

However, there is no compound which meets such all requirements with a single compound now. The present condition is mixing several to about twenty sorts of liquid crystalline compounds to prepare a liquid crystal composition and using the composition as liquid crystal material. Therefore, it has been desired that liquid crystalline compounds used as a component in the composition have good compatibility therewith and also they have good compatibility even at a cryogenic temperature, since the demand to the use under various environment is increasing recently.

To meet these requirements, various compounds have been developed. Among them, the compounds containing a silyl group in the molecule are known as shown by the following formulas (a), (b) and (c) which are disclosed respectively in JP A 6-9653, JP A 7-2879 and WO 97/05144.

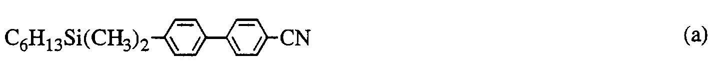

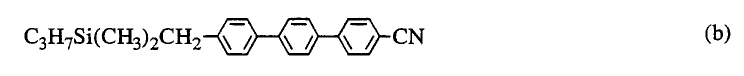

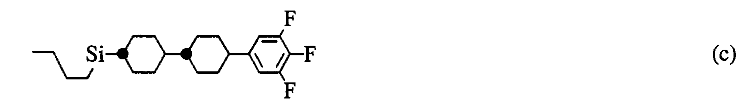

However, the compounds of formulas (a) and (b) containing a trialkylsilyl group as a terminal group have exceedingly high viscosity and poor compatibility with other components constituting the liquid crystal composition. Further, the compound of formula (c) containing a silanediyl group in the terminal group is more improved in both viscosity and compatibility than the compounds (a) and (b), but their characteristics are not sufficient yet. Practically, it has been required to reduce the viscosity of the compound much more.

### DISCLOSURE OF THE INVENTION

An object of the present invention is to provide an organosilicon compound which can overcome the defects of the prior art as mentioned above, has excellent compatibility with other liquid crystal materials, exhibits positive dielectric anisotropy, has low viscosity, suitable optical anisotropy, and low threshold voltage, a liquid crystal composition comprising the organosilicon compound and a liquid crystal display device composed of the liquid crystal composition.

We have studies intensively in an effort to solve the aforesaid problems and found that the compounds having a silanediyl in the linkage are effective, thus leading to the completion of the present invention.

In the first aspect, the present invention provides a liquid crystalline compound represented by formula (1) 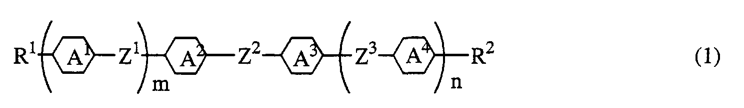 wherein rings A¹, A², A³ and A⁴ each independently represent 1,4-cyclohexylene, cyclohexene-1,4-diyl, 1,4-phenylene, pyridine-2,5-diyl, pyrimidine-2,5-diyl, 1,3-dioxane-2,5-diyl, tetrahydropyran-2,5-diyl or bicycio[1,1,1]pentane-1,3-diyl, and one or more hydrogen in these rings may be replaced by halogen or cyano; R¹ represents straight or branched C₁-C₂₀ alkyl in which any methylene may be replaced by -O-, -S-, - CO-, -CS-, -CH=CH-, -C≡C-, cyclopropane-1,2-diyl, cyclobutane-1,3-diyl or bicyclo[1,1,1]pentane-1,3-diyl, but -O- and -S- are not successive, and one or more hydrogen in R¹ may be replaced by halogen or cyano; R² represents halogen, cyano or C₁-C₁₀ alkyl in which at least one hydrogen is replaced by halogen and any methylene may be replaced by -O-, -S-, -CO-, -CS-, -CH=CH-, -C≡C-, -CH=CF- or -CF=CF-, but -O- and -S- are not successive; Z¹, Z² and Z³ each independently represent a single bond, -SiH₂CH₂-, -CH₂SiH₂-or C₁-C₄ alkylene in which one or more hydrogen may be replaced by halogen and any methylene may be replaced by -O-, -S-, -CO-, -CS-, -CH=CH- or -C≡C-, but -O- and -S- are not successive; m and n each independently represent 0 or 1, provided that at least one of Z¹, Z² and Z³ is -SiH₂CH₂- or - CH₂SiH₂-.

The liquid crystalline compounds of formula (1) according to the invention have excellent compatibility with other liquid crystal materials and low viscosity, exhibit positive dielectric anisotropy, and have low threshold voltage. Further, they are sufficiently stable physically and chemically under the condition where the liquid crystal display device is usually used.

In the formula (1), R¹ is straight or branched C₁-C₂₀ alkyl as defined above. Illustrative examples of the straight alkyl can include methyl, ethyl, propyl, butyl, pentyl, hexyl, heptyl, decyl, pentadecyl, icosyl or the like, and illustrative examples of the branched alkyl can include isopropyl, sec-butyl, tert-butyl, 2-methylbutyl, isopentyl, isohexyl or the like. Any methylene group in the alkyl group may be replaced by -O-, -S-, -CO-, -CS-, -CH=CH-, -C ≡C-, cyclopropane-1,2-diyl, cyclobutane-1,3-diyl or bicyclo[1,1,1]pentane-1,3-diyl, unless -O- and/or -S- are not successive.

Illustrative examples that any methylene in the alkyl is replaced by the above groups can include the following.

### Alkyl having -O-:

Alkoxy such as methoxy, ethoxy, propoxy, butoxy, pentyloxy, or hexyloxy, etc; alkoxyalkyl such as methoxymethyl, methoxyethyl, methoxypropyl, methoxybutyl, methoxypentyl, methoxyoctyl, ethoxymethyl, ethoxyethyl, ethoxypropyl, ethoxyhexyl, propoxymethyl, propoxyethyl, propoxypropyl, propoxypentyl, butoxymethyl, butoxyethyl, butoxybutyl, pentyloxymethyl, pentyloxybutyl, hexyloxymethyl, hexyloxyethyl, hexyloxypropyl, or heptyloxymethyl, etc; and branched alkoxy such as 2-methylpropoxy, 2-methylpentoxy or 1-methylheptoxy, etc.

### Alkyl having -S-:

Methylthio, ethylthio, propylthio, butylthio, pentylthio, methylthiomethyl, ethylthiomethyl or methylthioethyl, etc.

### Alkyl having -CH=CH-:

Alkenyl such as vinyl, propenyl, butenyl, pentenyl, hexenyl or decenyl, etc; alkoxyalkenyl such as methoxypropenyl, ethoxypropenyl, pentyloxypropenyl, methoxybutenyl, ethoxybutenyl, pentyloxybutenyl, methoxypentenyl, propoxypentenyl, methoxyhexenyl, propoxyhexenyl or methoxyheptenyl, etc; alkenyloxy such as propenyloxy, butenyloxy or pentenyloxy, etc; alkenyloxyalkyl such as propenyloxymethyl, propenyloxyethyl, propenyloxybutyl, butenyloxymethyl, butenyloxyethyl, butenyloxypentyl, pentenyloxymethyl, pentenyloxypropyl, hexenyloxymethyl, hexenyloxyethyl or heptenyloxymethyl, etc; and alkadienyl such as butadienyl, hexadienyl, heptadienyl, octadienyl or icosadienyl, etc.

### Alkyl having -C≡C-:

Alkynyl such as ethynyl, propynyl, butynyl, pentynyl or octynyl, etc; alkynyloxy such as ethynyloxy, propynyloxy, butynyloxy, pentynyloxy or tetradecynyloxy, etc; and alkoxyalkynyl such as methoxypropynyl, methoxypentynyl, ethoxybutynyl, propoxypropynyl or hexyloxyheptynyl, etc.

### Alkyl having -CO- or -CS-:

Methylcarbonyl, methylthiocarbonyl, ethylcarbonyl, propylcarbonyl, propylthiocarbonyl, methoxycarbonyl, ethoxycarbonyl, propoxycarbonyl, butoxycarbonyl, heptyloxycarbonyl, 2-oxopropyl, 2-oxobutyl, 3-oxobutyl, 2-oxopentyl, 4-oxopentyl, 3-oxohexyl, 5-oxohexyl, 2-oxoheptyl, 3-oxoheptyl, 6-oxoheptyl, 2-oxooctyl or 4-oxooctyl, etc.

Alkyl having cyclopropane-1,2-diyl, cyclobutane-1,3-diyl or bicyclo[1,1,1]pentane-1,3-diyl:
Cyclopropyl, 2-methylcyclopropyl, 2-cyclopropylethyl, 3-(cyclopropyl)propyl or 3-methylcyclobutyl, 3-propyl cyclobutyl, etc.

In the above-mentioned alkyl or alkyl in which any methylene in the alkyl is replaced by the above group which is generically called hereafter "alkyl", one or more hydrogen in the alkyl may be replaced by halogen or cyano.

Illustrative examples that any hydrogen in the alkyl is replaced by halogen can include halogen-replaced alkyl such as fluoromethyl, 2-fluoroethyl, 2-chloroethyl, 1,2-difluoroethyl, 3-fluoropropyl, 3-chloropropyl, 4-fluorobutyl, 5-fluoropentyl, 6-fluorohexyl or 8,8-difluorooctyl, etc; halogen-replaced alkoxy such as fluoromethoxy or 2-fluoroethoxy, etc; halogen-replaced alkenyl such as 3-fluoropropenyl, 4-fluoro-1-butenyl, 4-fluoro-2-butenyl, 5-fluoro-1-pentenyl, 5-fluoro-2-pentenyl, 5-fluoro-3-pentenyl, 6-fluoro-1-hexenyl, 6-fluoro-3-hexenyl, 7-fluoro-5-heptenyl, 3-fluoro-2-propenyl, 3-chloro-1-propenyl, 4-fluoro-3-butenyl, 5,5-difluoro-4-pentenyl or 3,3-difluorohexenyl, etc; halogen-replaced alkenyloxy; halogen-replaced alkynyl; or halogen-replaced alkynyloxy or the like. Further, illustrative examples of cyano-replaced alkyl can include 2-cyanoethyl or 3-cyanopropyl and the like.

Of these alkyls, those especially exhibiting low viscosity can include alkyl, alkoxy, alkoxyalkyl, alkenyl, alkoxyalkenyl, halogen-replaced alkyl, halogen-replaced alkoxy or halogen-replaced alkenyl. More preferable are alkyl, alkenyl or halogen-replaced alkenyl.

In the formula (1), R² represents, as defined above, halogen, cyano or C₁-C₁₀ alkyl in which at least one hydrogen is replaced by halogen, and any methylene in the alkyl may be replaced by -O-, -S-,-CO-, -CS-, -CH=CH- or -C≡C-, but - O- and -S- are not successive.

R² is principally selected from the group which can exhibit specified liquid crystal characteristics for the compounds of the present invention, for example large dielectric anisotropy, low viscosity or high electrical insulation properties (high specific resistance or high voltage holding ratio).

Of suitable examples of R², the groups exhibiting large dielectric anisotropy can include fluorine, chlorine, cyano, - CF₃, -OCF₃, -SCF₃, -COCF₃, -CH₂OCF₃, -C≡C-CF₃,-CF₂H,-OCF₂H,-SCF₂H,-C≡C-CF₂H,-CF₂CF₃,-OCF₂ CF₃,-SCF₂CF₃,-CFHCF₃,-OCFHCF₃,-CH,CF₃,-OCH₂ CF₃,-OCOCF₃-,-CF₂CF₂H,-OCF₂CF₂H,-SCF₂CF₂H,-CF₂CFH₂,-OCF₂CFH₂,-CF₂CF₂CF₃,-OCF₂CF₂CF₃,-SC F₂CF₂CF₃,-CF₂CFHCF₃,-OCF₂CFHCF₃,-SCF₂CFHCF₃, -CF=CF₂,-OCF=CF₂,-OCF=CFCF₃,-C≡C-CN,-CH =CH-CN,-CH=CF-CN or -CH=CF₂.

The groups exhibiting low viscosity and high electrical insulation properties can include fluorine, chlorine, -CF₃, -OCF₃,-SCF₃,-CH₂OCF₃,-CF₂H,-OCF₂H,-SCF₂H,-C F₂CF₃, -OCF₂CF₃, -SCF₂CF₃, -CFHCF₃,-OCFHCF₃, -C H₂CF₃, -OCH₂CF₃, -CF₂CF₂H, -OCF₂CF₂H, -SCF₂CF₂H, -CF₂CFH₂,-OCF₂CFH₂,-OCF₂CFHCF₃,-SCF₂CFHCF₃, - OCF=CF₂,-OCF=CFCF₃,-OCH₂CF₂H,-OCH=CF₂ or - OC₃F₇.

Rings A¹, A², A³ and A⁴ are as defined above, examples of which can include 1,4-cyclohexylene, 1,4-phenylene, fluoro-1,4-phenylene, 2,3-difluoro-1,4-phenylene, bicyclo[1.1.1]pentane-1,3-diyl, 3,5-difluoro-1,4-phenylene, chloro-1,4-phenylene, 3,5-dichloro-1,4-phenylene, 3-fluoro-5-chlorophenylene, pyridine-2,5-diyl, pyrimidine-2,5-diyl, 1,3-dioxane-2,5-diyl and tetrahydropyran-2,5-diyl or the like.

If these rings contain a six-membered structure in which there are stereostructurally cis-trans isomers, it is preferable that the six-membered structure is a trans form.

Z¹, Z² and Z³ each independently represent, as defined above, a single bond, -SiH₂CH₂-, -CH₂SiH₂- or C₁-C₄ alkylene in which one or more hydrogen may be replaced by halogen, and any methylene in the alkylene may be replaced by -O-, -S-, - CO-, -CS-, -CH=CH- or -C≡C-, but -O- and -S- are not successive, and at least one of Z¹, Z² and Z³ is -SiH₂CH₂- or - CH₂SiH₂-.

Illustrative examples of alkylene in which any methylene may be replaced by -O-, -CO-, -CS-, -CH=CH- or -C≡C- can preferably include groups such as oxymethylene, methyleneoxy, 1-oxa-1,4-butylene, 2-oxa-1,4-butylene, 3-oxa-1,4-butylene or 4-oxa-1,4-butylene, etc; groups containing -O- such as ester, thioester or oxycarbonyl bond, etc; groups containing -CH=CH- such as vinylene, 1-butenylene, 2-butenylene or 3-butenylene, etc; groups containing -C ≡ C- such as ethynylene, 1-butynylene, 2-butynylene or 3-butynylene, etc; groups in which any hydrogen may be replaced by halogen, for example fluoromethyleneoxy, oxyfluoromethylene, 1,1-difluoroethylene, 2,2-difluoroethylene, 1,2-difluorovinylene, 1-fluorovinylene, 1-chloro-2-fluorovinylene, 1,2-difluoro-1-butenylene, 2,3-difluoro-2-butenylene or 3,4-difluoro-3-butenylene, 3-oxa-1-butenylene or 4-oxa-1-butenylene, etc.

The compounds of the invention are prepared as those having specified characteristics by suitable combination of each group selected from R¹ to R², rings A¹ to A⁴ and Z¹ to Z³. The compounds having preferable characteristics can include those represented by the following formulas (1-1) to (1-12). 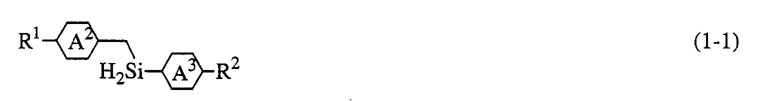 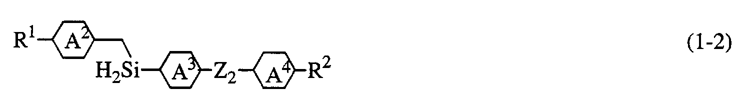 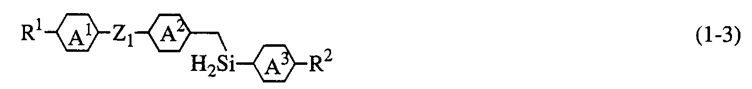 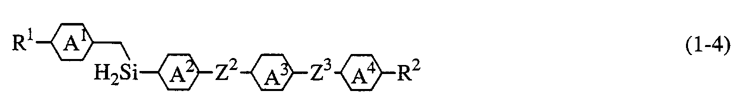 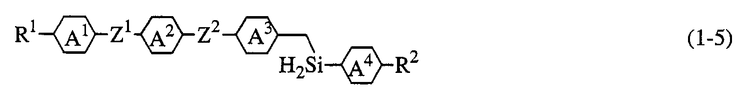 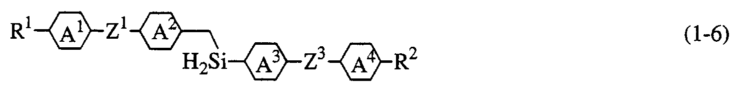 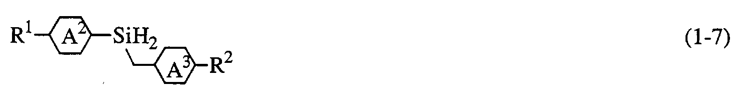 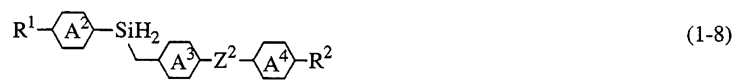 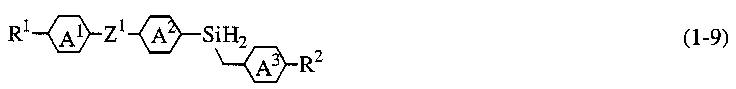 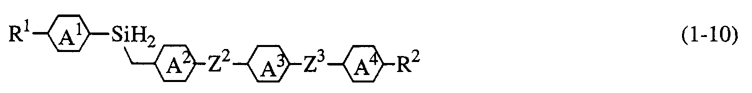 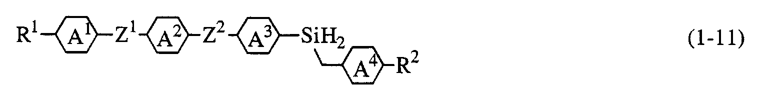 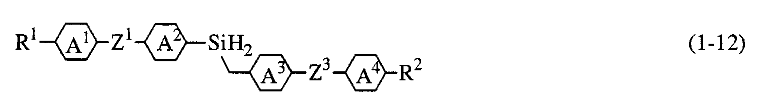 wherein R¹, R², rings A¹ to A⁴ and Z¹ to Z³ have the same meanings as defined above.

The compounds having two rings represented by formulas (1-1) and (1-7), namely the compounds of formula (1) wherein m is 0 and n is 0, are characterized by large dielectric anisotropy, low viscosity and excellent compatibility with other compounds constituting a liquid crystal composition for TFT. The compounds having three rings represented by formulas (1-2) to (1-3) and (1-8) to (1-9), namely the compounds of formula (1) wherein m plus n is 1, are characterized by large dielectric anisotropy and excellent balance of viscosity and a clearing point, and therefore they are used for constituting a liquid crystal composition for various purposes. The compounds having four rings represented by formulas (1-4) to (1-6) and (1-10) to (1-12), namely the compounds of formula (1) wherein m is 1 and n is 1, are characterized by large dielectric anisotropy and a high clearing point, and therefore they are used for the purpose of increasing the clearing point of the liquid crystal composition to extend a range of nematic phase.

Of the compounds represented by formulas (1-1) to (1-12), the corresponding species of formulas (1-a) to (1-l) are more preferable for practical use. 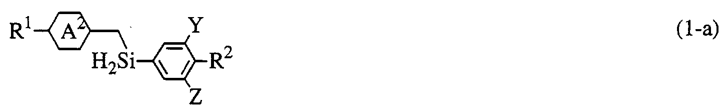 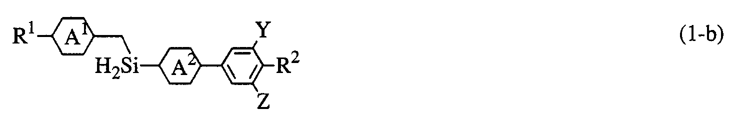 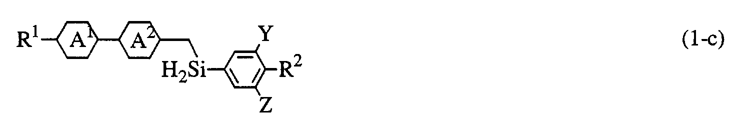 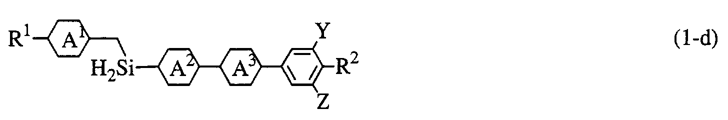 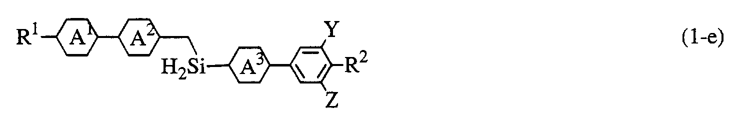 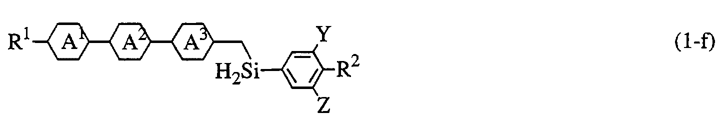 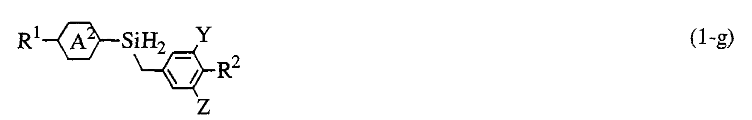 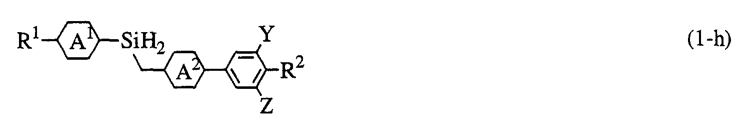 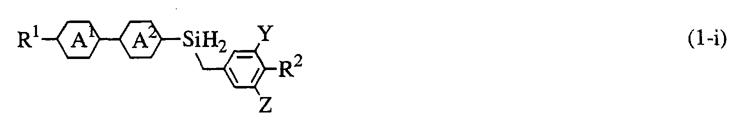 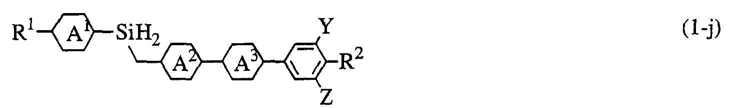 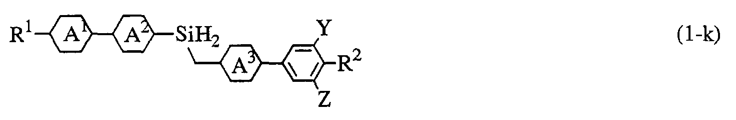 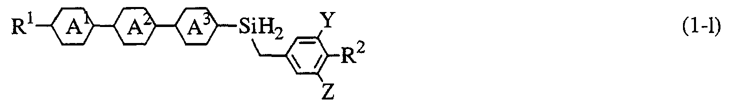 wherein R¹, R², and rings A¹, A² and A³ have the same meanings as defined for formula (1), and Y and Z each independently represent hydrogen or halogen.

The liquid crystalline compounds of formula (1) can be easily prepared by general methods for organic synthesis. Some of the methods are illustrated by the following scheme of synthesis. 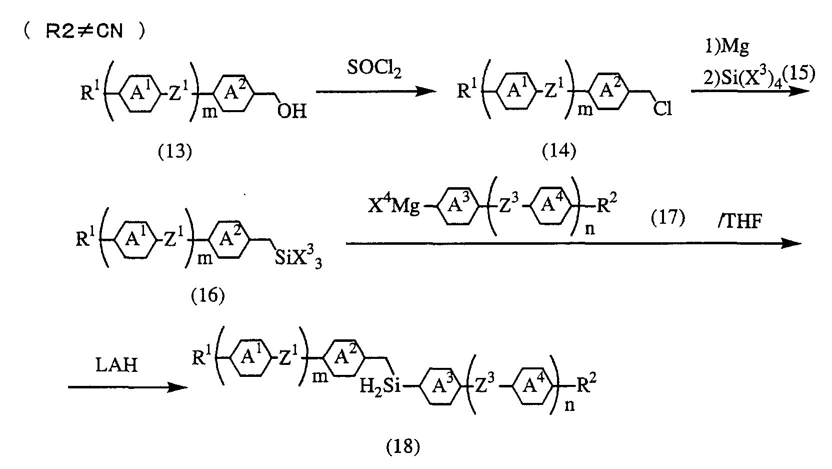 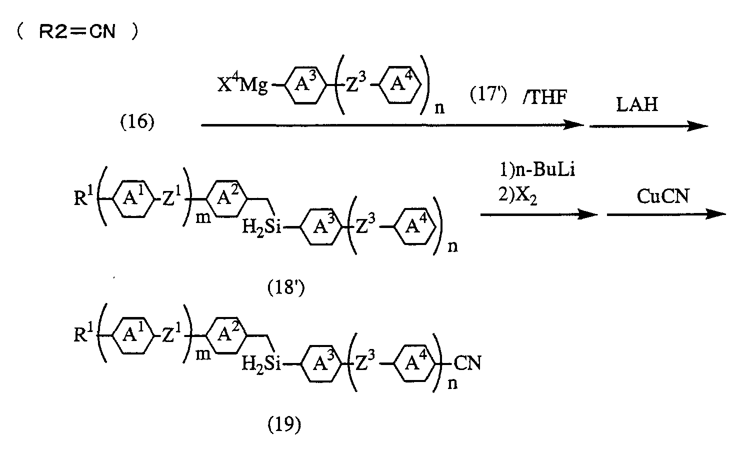 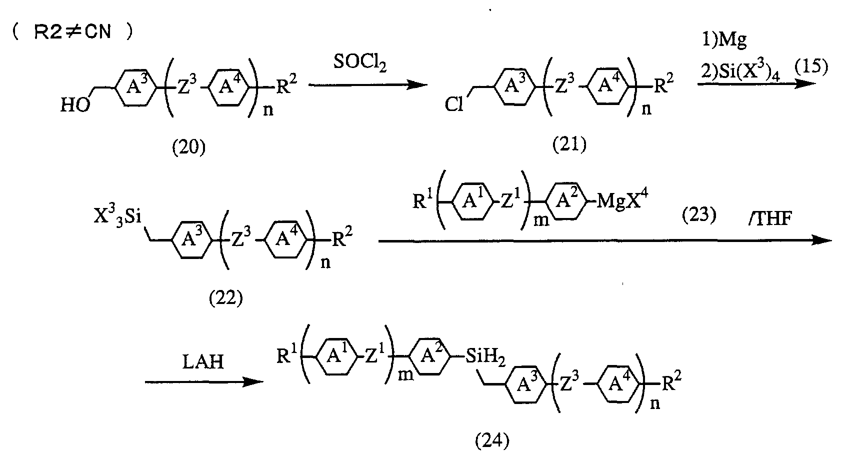 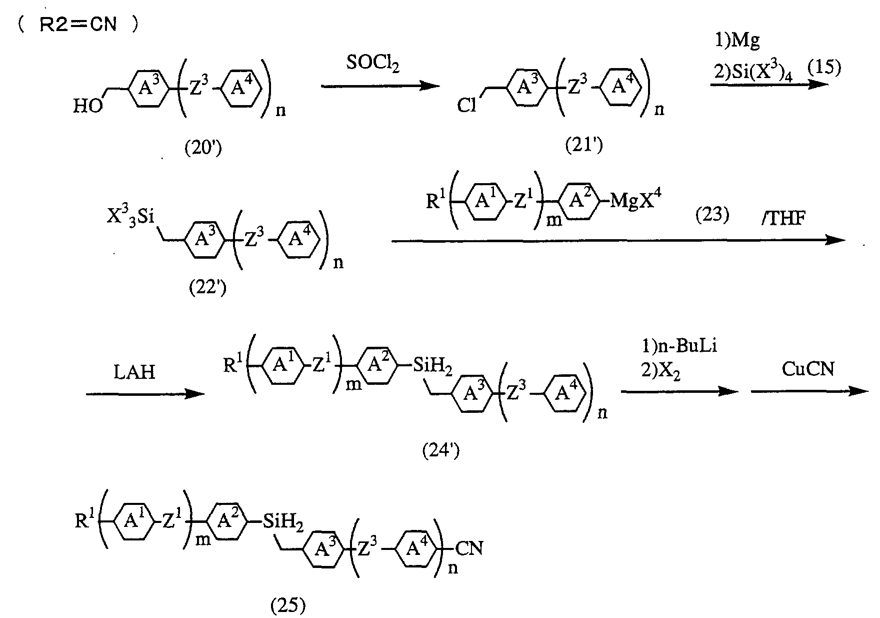 wherein R¹, R², rings A¹ to A⁴ and Z¹ to Z³ have the same meanings as defined above, X³ represents halogen or C₁-C₄ alkoxy, and X⁴ represents halogen.

Preparation of the compound of formula (1) wherein Z² is -CH₂SiH₂-:

### (In case where R² is other groups than cyano)

An alcohol derivative (13) is reacted with a halogenating agent such as thionyl chloride or the like to form a halogen derivative (14). The halogen derivative (14) is reacted with magnesium to prepare a Grignard reagent which is then reacted with a silane compound (15) to obtain a silane derivative (16). The derivative (16) is reacted with a Grignard reagent (17) which is then reduced with a reducing agent such as lithium aluminum hydride (LAH) or the like, thus preparing the compound (18) of the invention.

### (In case where R² is cyano)

The compound (18') of the invention is prepared by reacting the silane derivative (16) described above with the Grignard reagent (17'), followed by reducing with a reducing agent such as lithium aluminum hydride (LAH) or the like. This compound (18') is reacted with n-butyl lithium and then halogenating agent to obtain a halogen derivative which is then reacted with copper cyanide, thus preparing the compound (19) of the invention having a cyano group at the right terminal.

Preparation of the compound of formula (1) wherein Z² is -SiH₂CH₂-:

### (In case where R² is other groups than cyano)

An alcohol derivative (20) is reacted with a halogenating agent such as thionyl chloride or the like to form a halogen derivative (21). The halogen derivative (21) is reacted with magnesium to prepare a Grignard reagent which is then reacted with a silane compound (15) to obtain a silane derivative (22). The derivative (22) is reacted with a Grignard reagent (23) which is then reduced with a reducing agent such as lithium aluminum hydride (LAH) or the like, thus preparing the compound (24) of the invention.

### (In case where R² is cyano)

An alcohol derivative (20') is reacted with a halogenating agent such as thionyl chloride or the like to form a halogen derivative (21'). The halogen derivative (21') is reacted with magnesium to prepare a Grignard reagent which is then reacted with a silane compound (15) to obtain a silane derivative (22').

The derivative (22') is reacted with a Grignard reagent (23) which is then reduced with a reducing agent such as lithium aluminum hydride (LAH) or the like, thus preparing the compound (24') of the invention. This compound (24') is reacted with n-butyl lithium and then a halogenating agent to obtain a halogen derivative which is then reacted with copper cyanide, thus preparing the compound (25) of the invention having a cyano group at the right terminal.

The liquid crystalline compounds of the invention thus prepared exhibit liquid crystal phase in a broad temperature range around room temperature, have large dielectric anisotropy, suitable optical anisotropy, low viscosity, high electrical insulation properties (large specific resistance or high voltage holding ratio) and extremely small temperature dependence of these characteristics, and are easily mixed with various liquid crystal materials and have very excellent compatibility even at low temperature. Further, these liquid crystalline compounds of the invention are sufficiently stable physically and chemically under the condition where the display device is used, and also very excellent as a constitutive component for a nematic liquid crystal composition.

The liquid crystalline compounds of the present invention can be used suitably as a constitutive component in the liquid crystal composition for the display mode including super twisted nematic (STN) type, thin film transistor (TFT) type or the like. Further, they can be used for a reflective TFT type for which low optical anisotropy is required.

In the compounds of the present invention represented by formula (1), the compounds having two six-membered rings exhibit low transition temperature to a isotropic phase and low viscosity, and the compounds having three- or four-ring structure exhibit high transition temperature of an isotropic phase. The compounds having many of a cyclohexene ring, a dioxane ring and a tetrahydropyran ring in a molecule exhibit relatively small optical anisotropy and the compounds having a benzene ring, a pyridine ring or a pyrimidine ring exhibit broad temperature range of a liquid crystal phase and large optical anisotropy. Particularly, the compounds having a pyridine ring, a pyrimidine ring or a dioxane ring exhibit large dielectric anisotropy.

The compounds of the present invention represented by formula (1) exhibit positive and extremely large dielectric anisotropy, but the replacement of hydrogen in the ring structure by halogen can produce larger dielectric anisotropy, while improving the compatibility. In this case, halogen to be replaced is preferably fluorine for producing low viscosity.

The compounds having a double bond in R¹, R² and/or Z¹ to Z³ exhibit large elastic constant ratio K₃₃/K₁₁ (bend elastic constant/spray elastic constant) and especially low viscosity. Therefore, the use of these compounds as a constitutive component in the composition for STN can provide the composition which is steep in the change of transmittance in a T-V curve, thus providing a display device of a high contrast.

The compounds containing a triple bond in R¹, R² and/or Z¹ to Z² exhibit large optical anisotropy and low viscosity.

The compounds wherein R¹ is an optically active group are especially useful as a chiral dopant. The use of these compounds can prevent the occurrence of reverse twist domain.

Further, the compounds of the invention exhibit entirely same characteristics even when the constitutive atom is replace by its isotope, which are also preferable.

In the second aspect, the present invention provides a liquid crystal composition comprising the compound of formula (1). To exhibit excellent characteristics, the content of the compound is preferably 0.1 to 99.9% by weight, more preferably 1 to 80% by weight and most preferably 1 to 60% by weight based on the liquid crystal composition.

The liquid crystal composition of the invention may be composed of only the first component comprising at least one liquid crystalline compound of formula (1). In addition to the first component, it is preferable to mix as a second component at least one compound selected from the group consisting of the compounds having the following formulas (2), (3) and (4)(called hereafter "second A component") and/or at least one compound selected from the group consisting of the compounds having the following formulas (5) and (6)(called hereafter "second B component"). For the purpose of adjusting the threshold voltage, a temperature range of a liquid crystal phase, optical anisotropy, dielectric anisotropy and viscosity, at least one compound selected from the group consisting of the compounds having the following formulas (10), (11) and (12) can be mixed as a third component. Each component in the liquid crystal composition used in the invention may be an analogue consisting of the isotope of each element, since there is no great difference in physical characteristics. 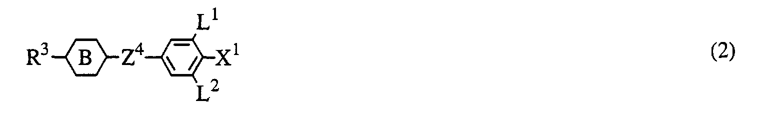 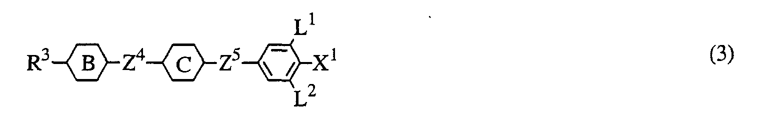 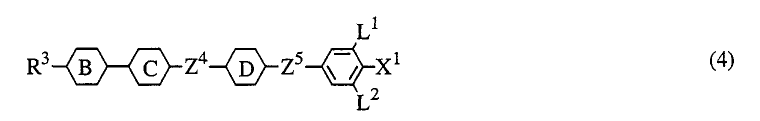 wherein R³ represents C₁-C₁₀ alkyl in which any nonadjacent - CH₂- may be replaced by -O- or -CH=CH- and any hydrogen may be replaced by fluorine; X¹ represents fluorine, chlorine, - OCF₃, -OCF₂H, -CF₃, -CF₂H, -CFH₂, -OCF₂CF₂H or -OCF₂CFHCF₃; L¹ and L² each independently represent hydrogen or fluorine; Z⁴ and Z⁵ each independently represent - (CH₂)₂-, - (CH₂)₄-, -COO-, - CF₂O-, -OCF₂-, -CH=CH- or a single bond; rings B and C each independently represent trans-1,4-cyclohexylene, 1,3-dioxane-2,5-diyl or 1,4-phenylene in which hydrogen may be replaced by fluorine; ring D represents trans-1,4-cyclohexylene or 1,4-phenylene in which hydrogen may be replaced by fluorine. 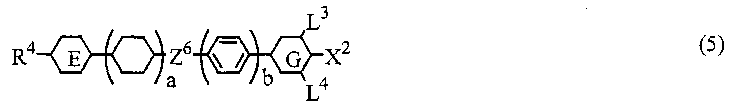 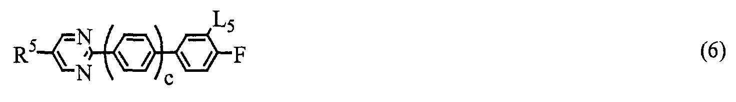 wherein R⁴ and R⁵ each independently represent C₁-C₁₀ alkyl in which any nonadjacent -CH₂- may be replaced by -O- or - CH=CH- and any hydrogen may be replaced by fluorine; X² represents -CN or -C≡C-CN; ring E represents trans-1,4-cyclohexylene, 1,4-phenylene, 1,3-dioxane-2,5-diyl or pyrimidine-2,5-diyl; ring F represents trans-1,4-cyclohexylene, 1,4-phenylene in which hydrogen may be replaced by fluorine, or pyrimidine-2,5-diyl; ring G represents trans-1,4-cyclohexylene or 1,4-phenylene; Z⁶ represents - (CH₂)₂-, -COO-, -CF₂O-, -OCF₂- or a single bond; L³, L⁴ and L⁵ each independently represent hydrogen or fluorine; and a, b and c each independently represent 0 or 1. 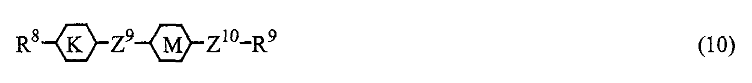 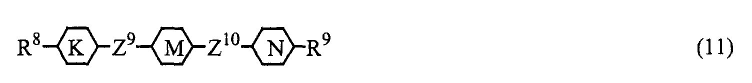 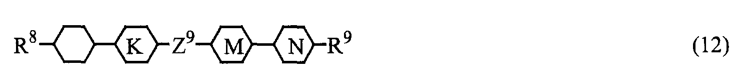 wherein R⁸ and R⁹ each independently represent C₁-C₁₀ alkyl in which any nonadjacent -CH₂- may be replaced by -O- or - CH=CH- and any hydrogen may be replaced by fluorine; rings K, M and N each independently represent trans-1,4-cyclohexylene, pyrimidine-2,5-diyl or 1,4-phenylene in which hydrogen may be replaced by fluorine; Z⁹ and Z¹⁰ each independently represent -C≡C-, -COO-, -(CH₂)₂-, -CH=CH- or a single bond.

Of the second A component as mentioned above, suitable examples of the compounds included in formula (2) can include those of the following formulas (2-1) to (2-9), suitable examples of the compounds included in formula (3) can include those of the following formulas (3-1) to (3-97) and suitable examples of the compounds included in formula (4) can include those of the following formulas (4-1) to (4-33). 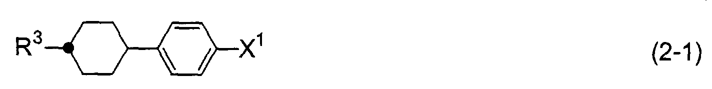 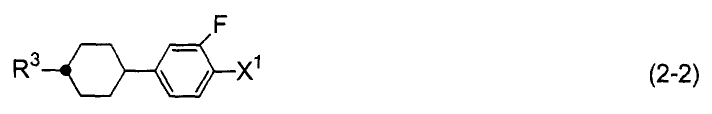 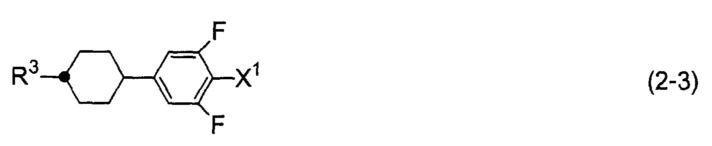 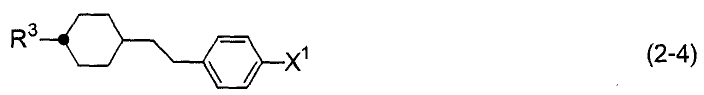 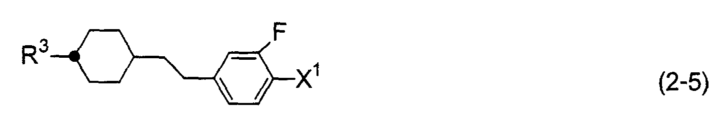 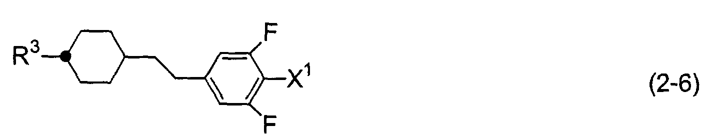 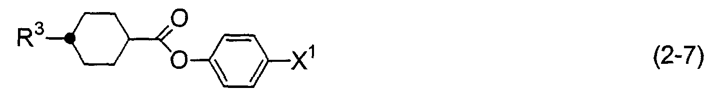 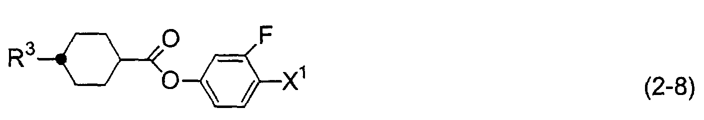 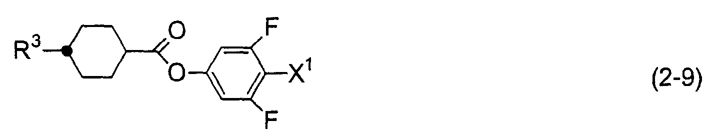 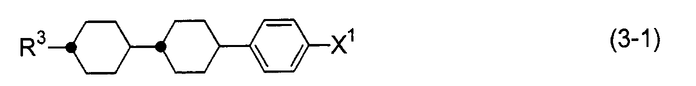 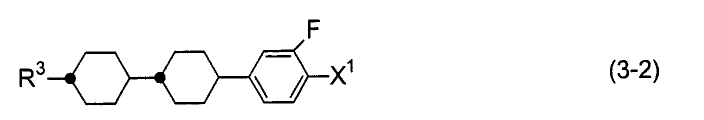 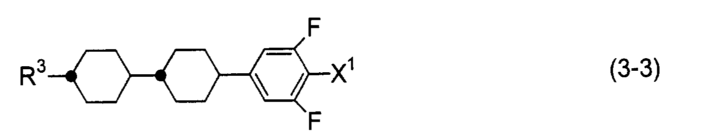 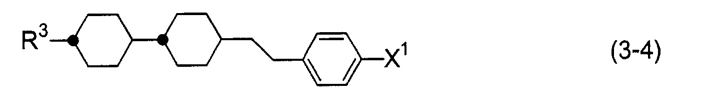 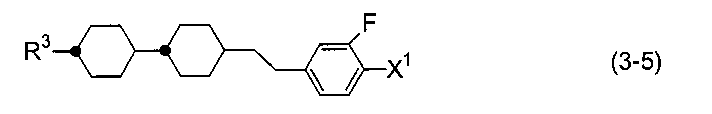 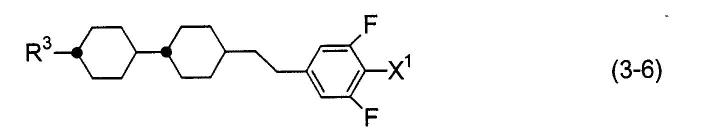 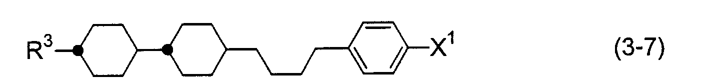 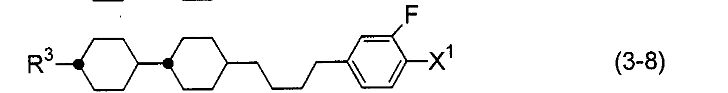 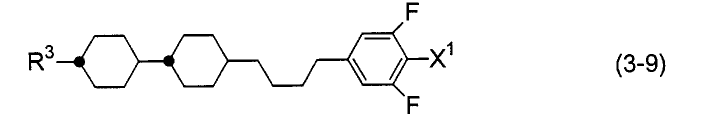 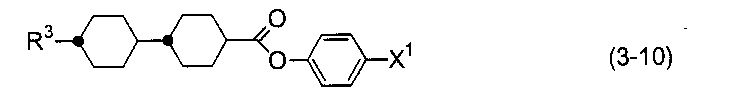 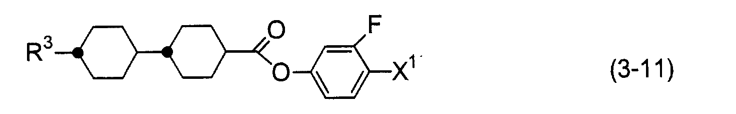 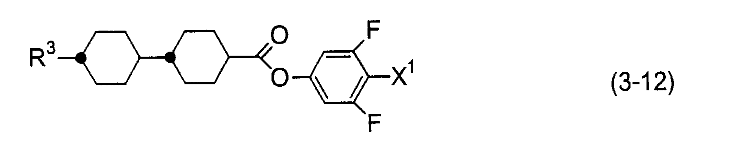 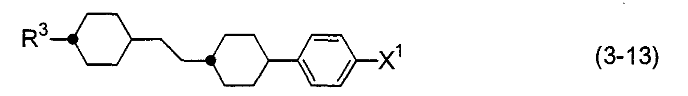 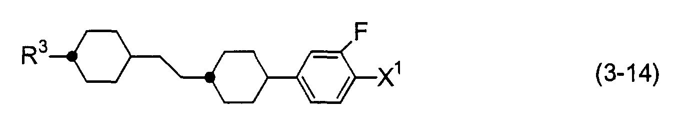 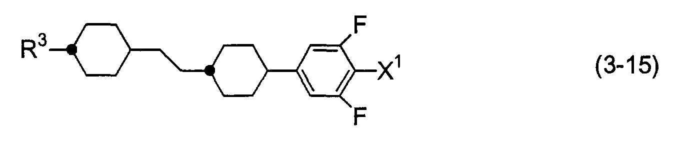 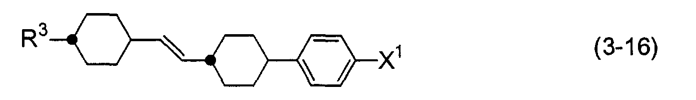 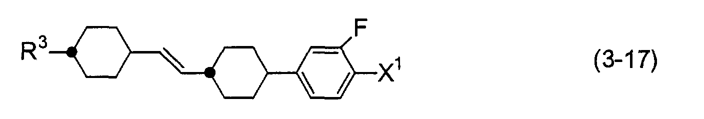 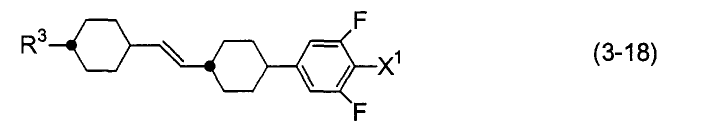 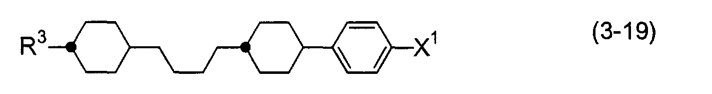 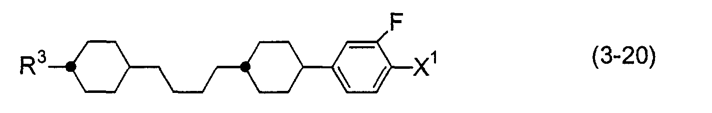 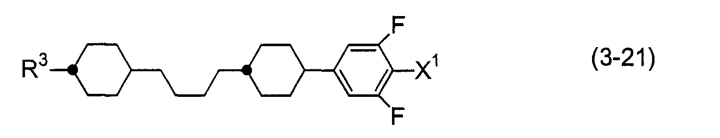 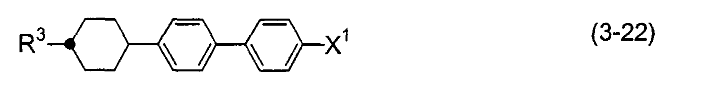 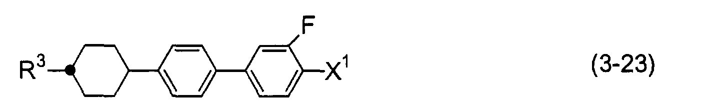 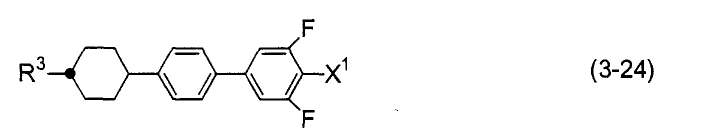 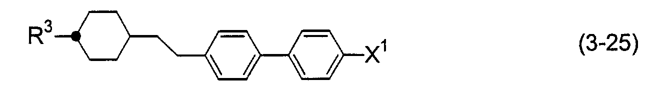 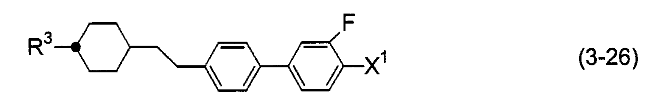 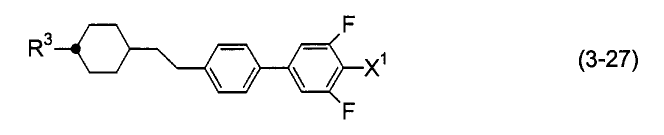 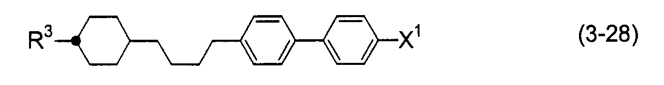 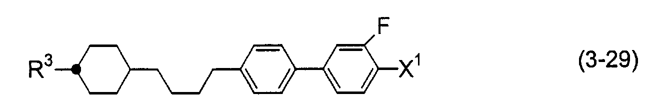 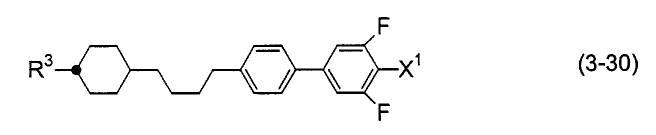 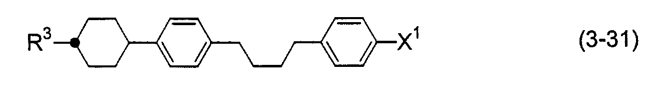 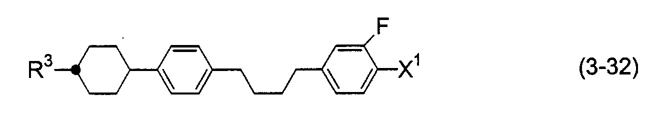 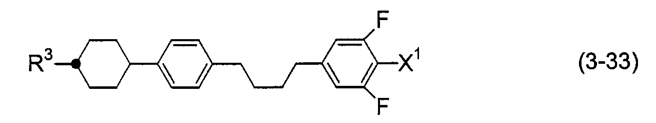 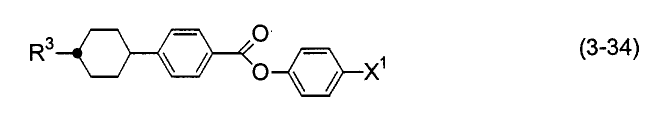 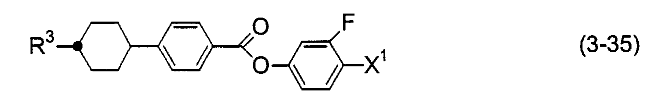 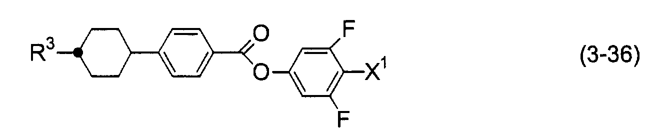 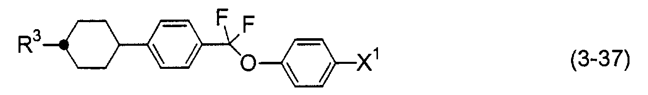 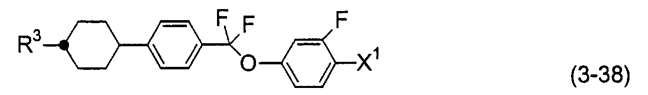 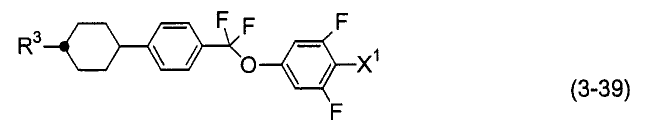 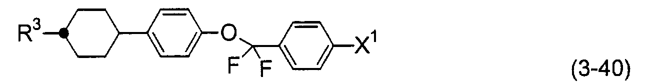 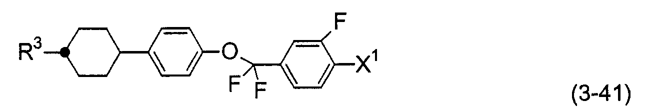 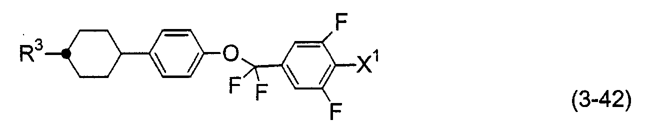 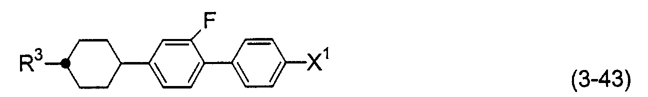 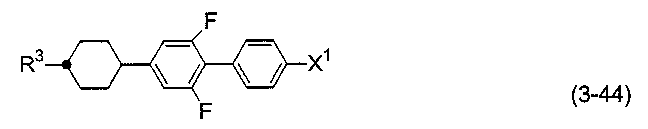 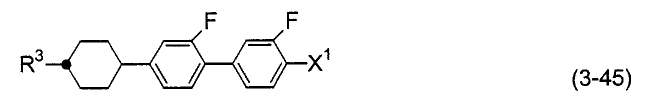 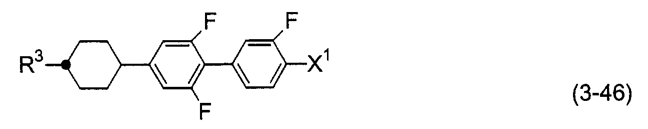 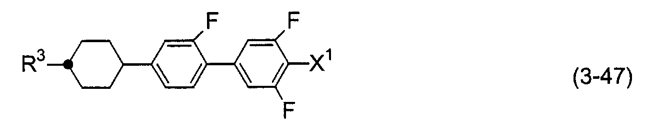 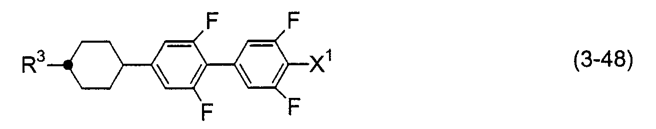 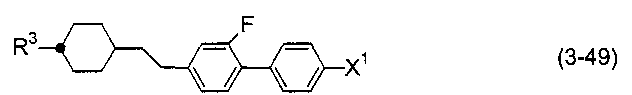 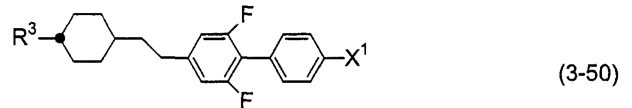 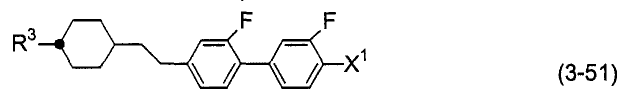 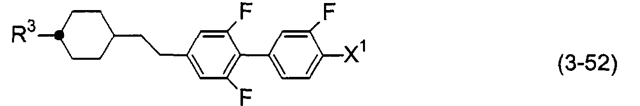 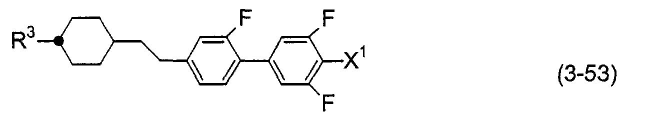 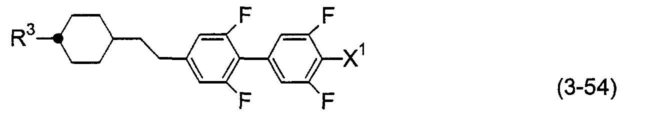 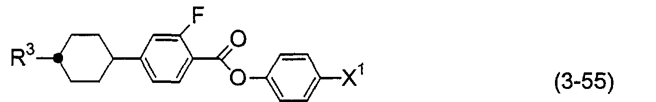 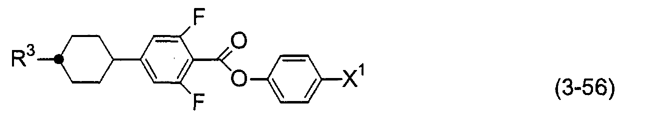 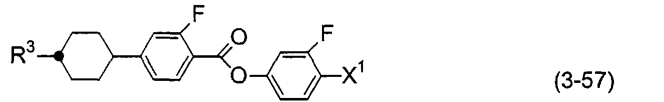 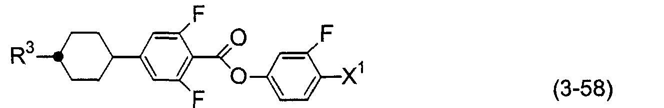 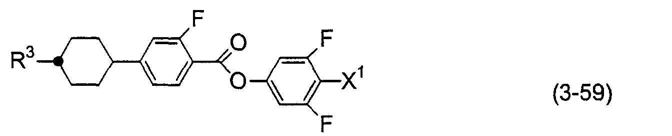 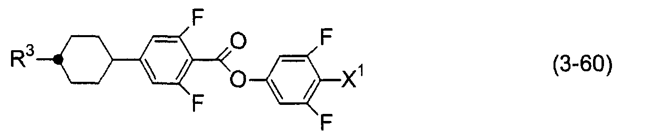 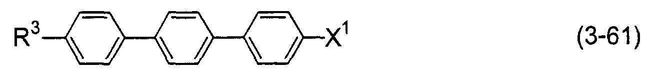 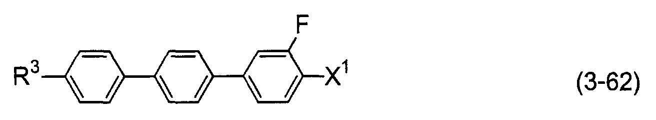 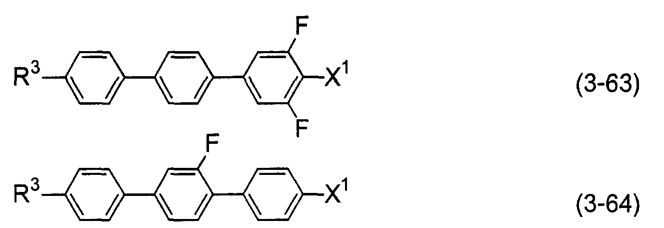 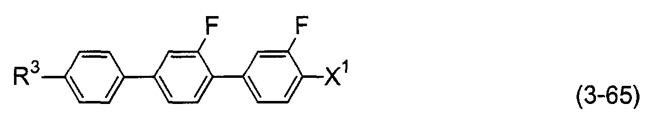 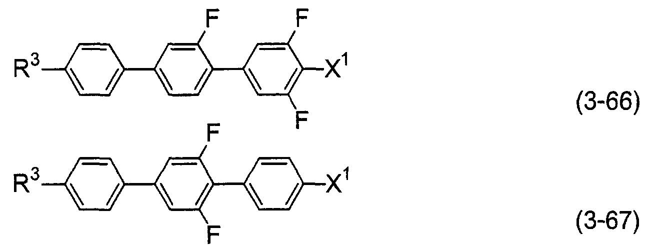 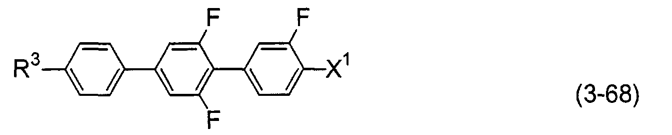 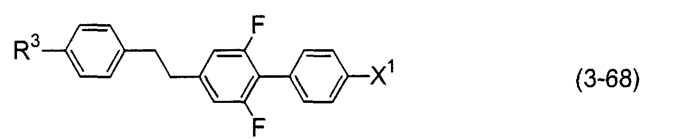 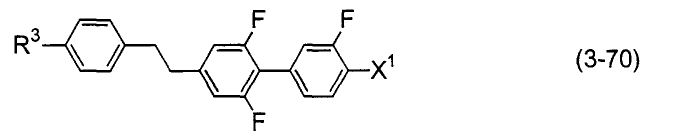 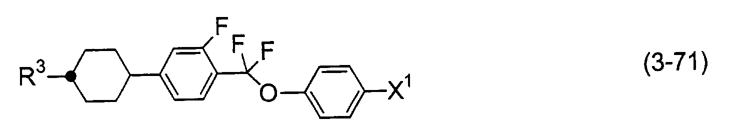 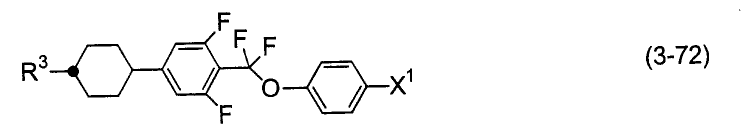 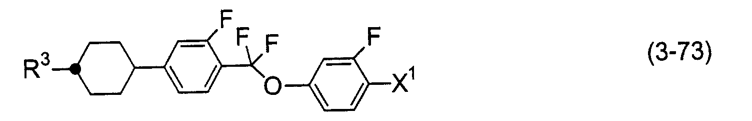 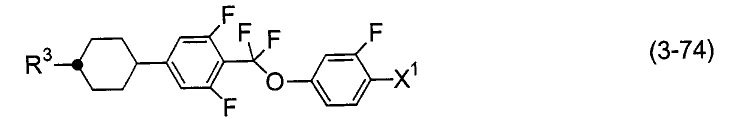 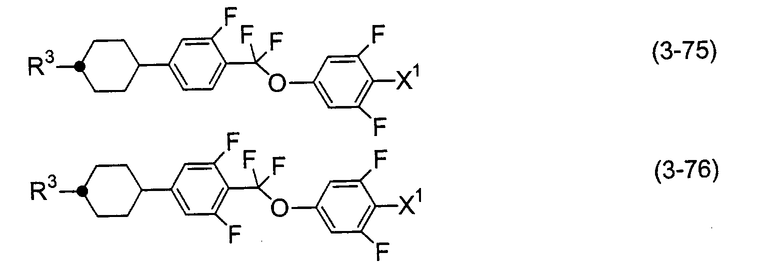 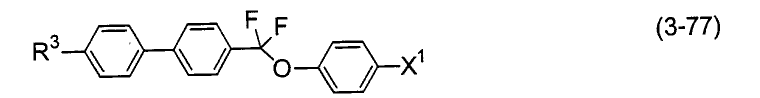 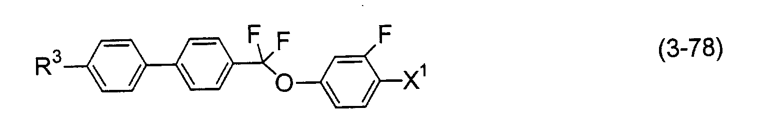 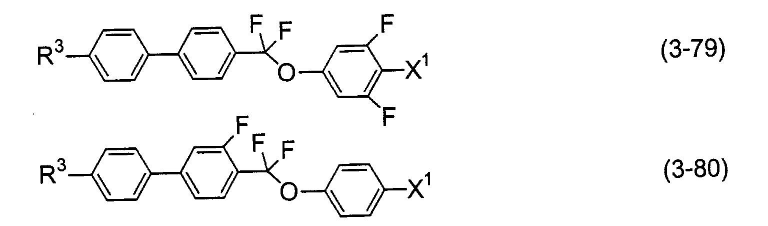 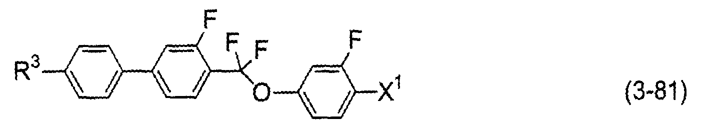 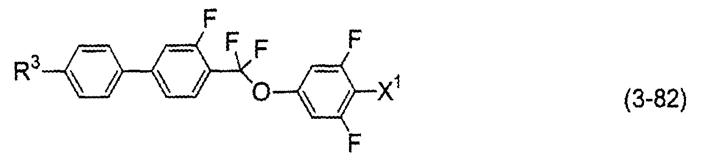 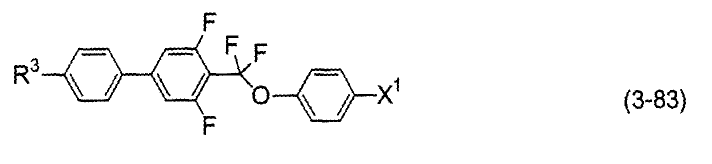 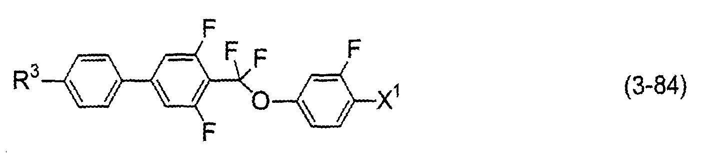 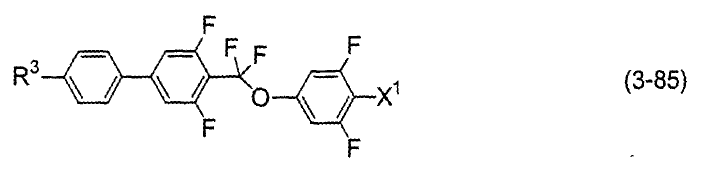 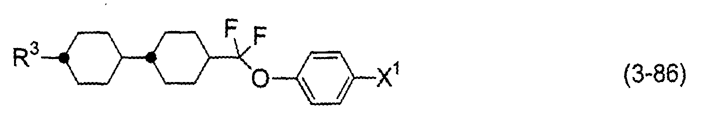 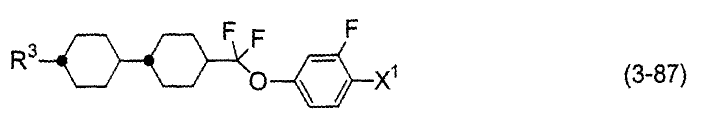 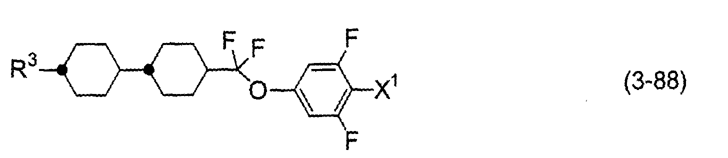 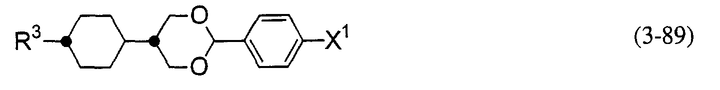 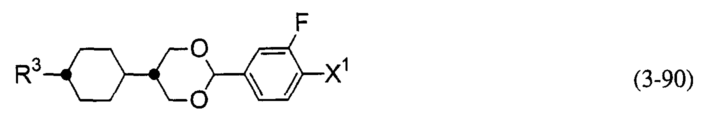 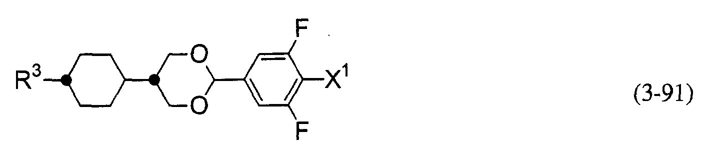 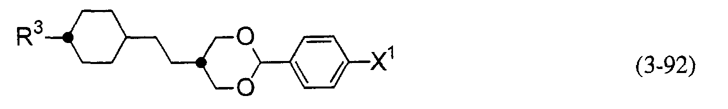 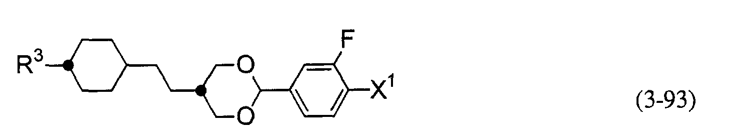 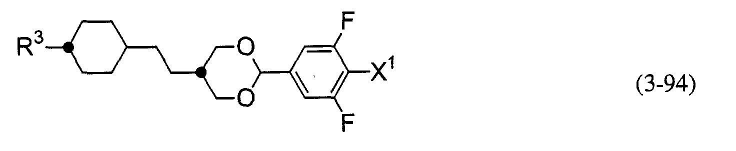 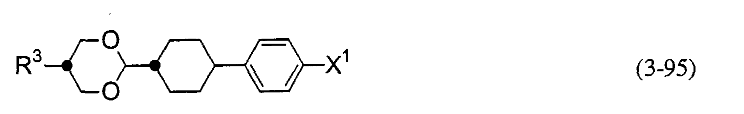 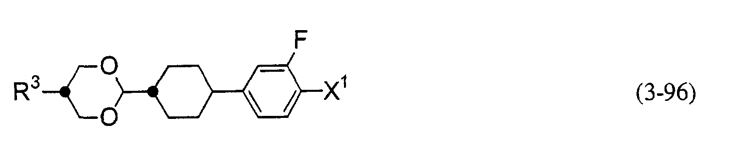 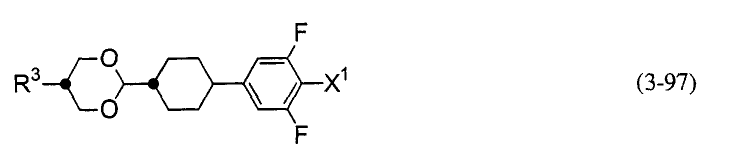 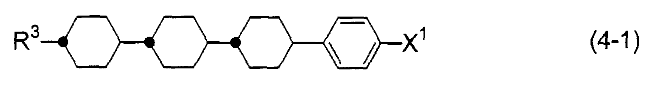 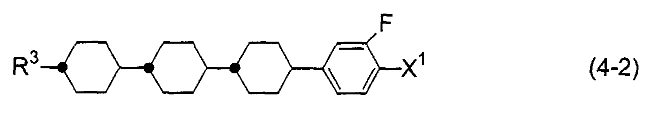 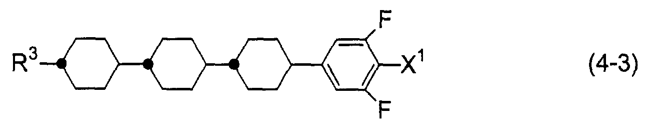 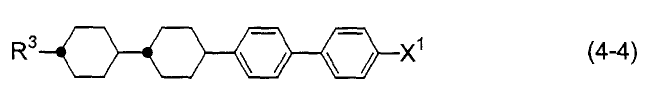 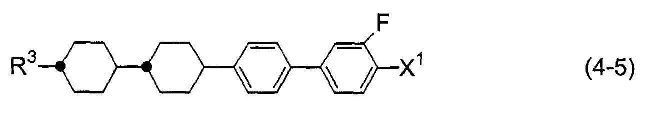 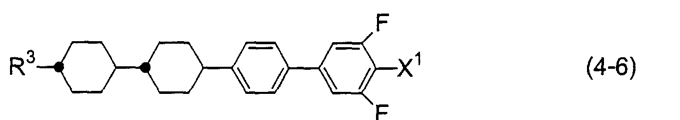 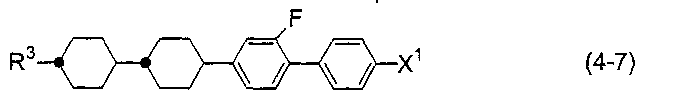 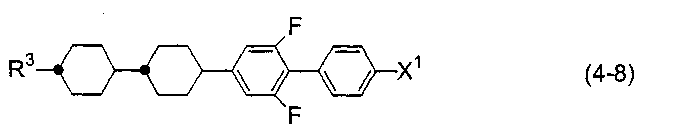 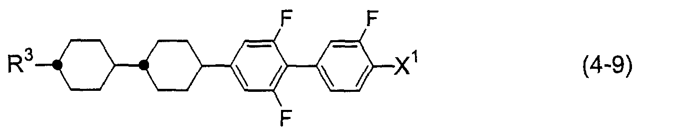 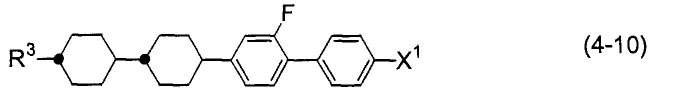 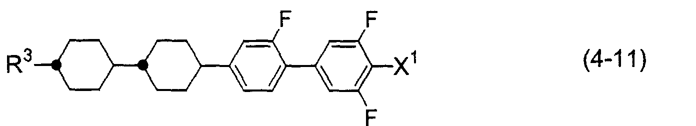 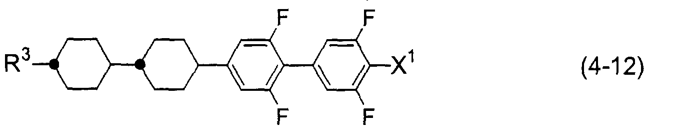 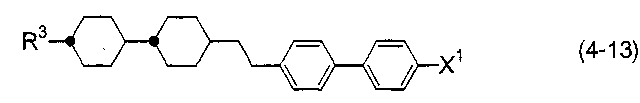 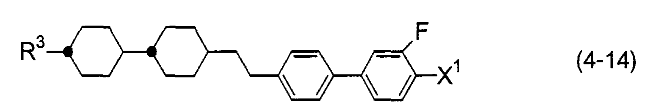 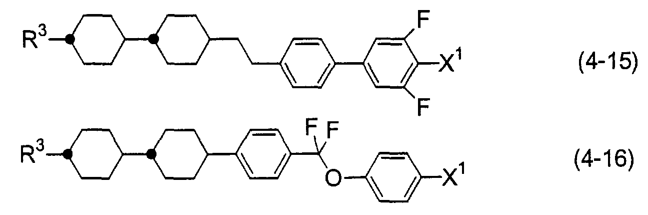 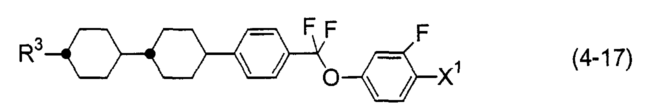 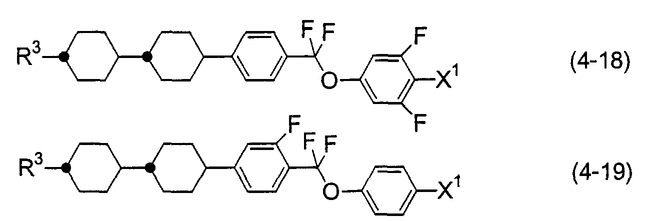 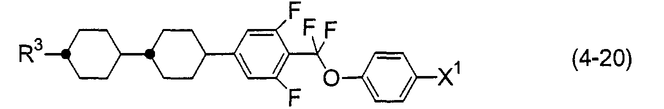 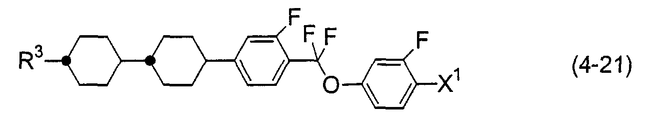 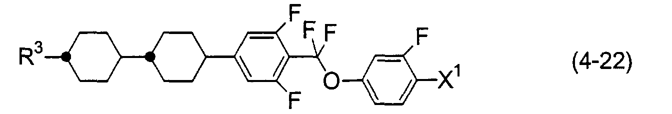 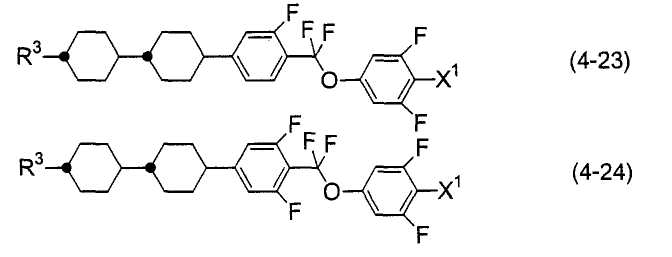 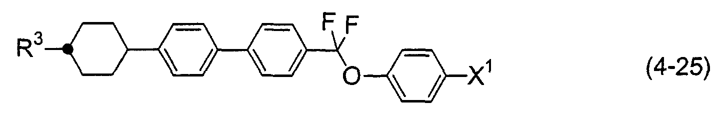 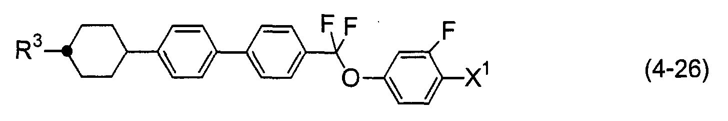 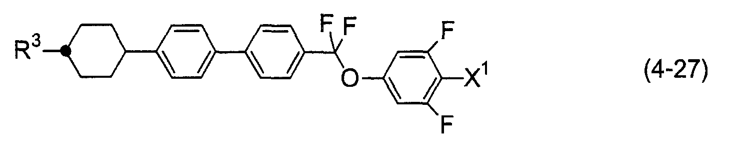 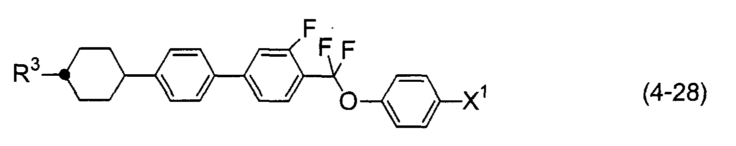 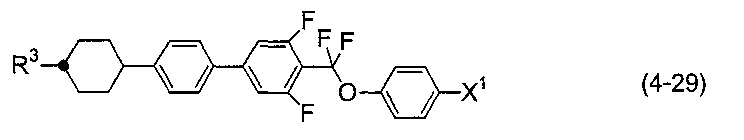 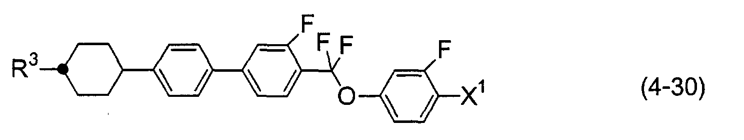 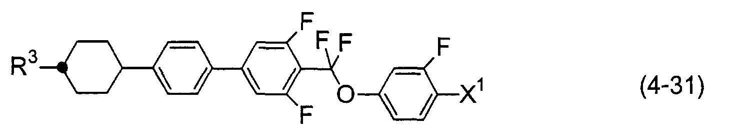 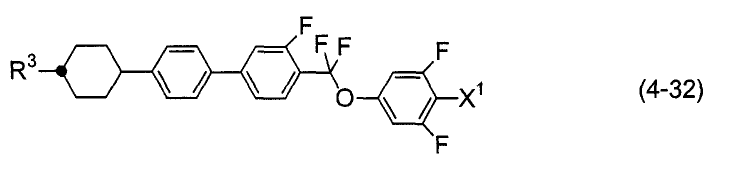 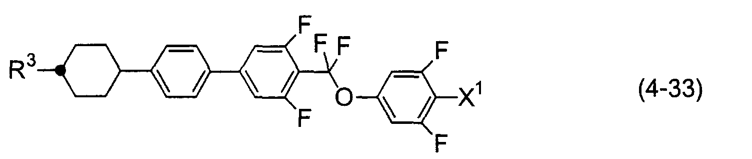 wherein R³ and X¹ have the same meanings as defined above.

The compounds of formulas (2) to (4) have positive dielectric anisotropy and very excellent thermal and chemical stability, and therefore are mainly used in the liquid crystal composition for TFT. When the liquid crystal composition for TFT is prepared, the amount of the compound used is suitably in the range of 0.1 to 99.9% by weight, preferably 10 to 97% by weight and more preferably 40 to 95% by weight based on the total weight of the liquid crystal composition. The liquid crystal composition may further contain the compounds of formulas (10) to (12) for the purpose of viscosity adjustment.

Of the second B component as mentioned above, suitable examples of the compounds included in the formulas (5) and (6) can include those of the following formulas (5-1) to (5-58) and (6-1) to (6-3). 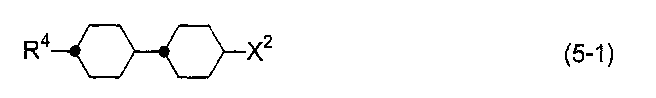 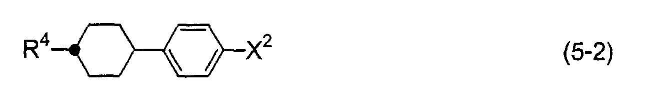 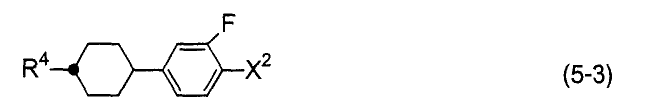 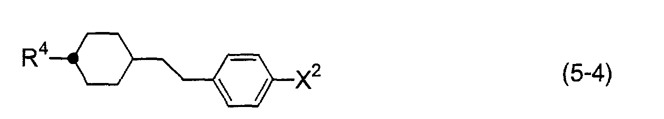 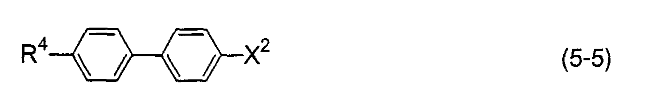 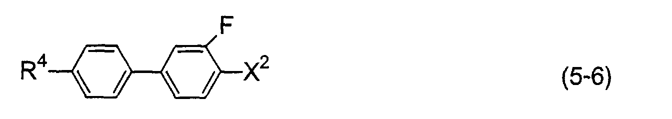 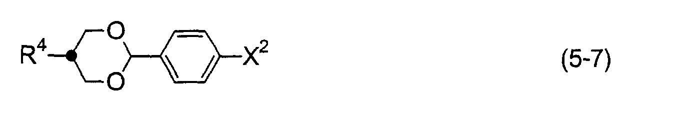 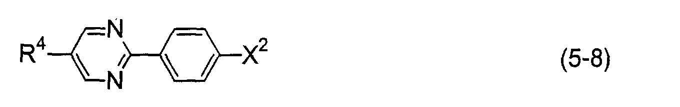 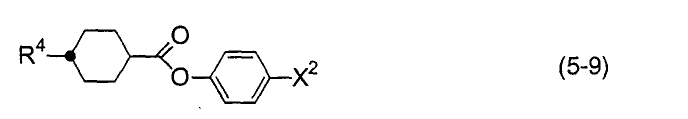 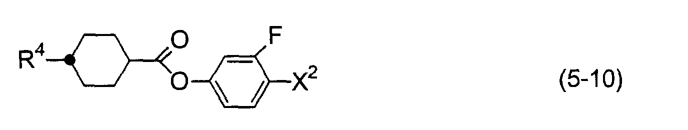 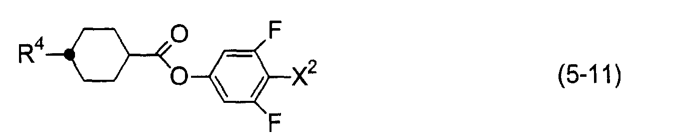 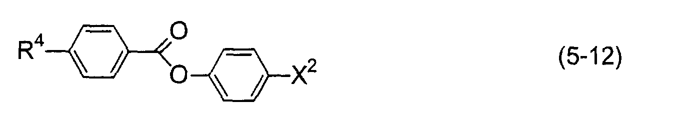 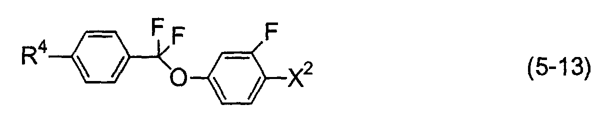 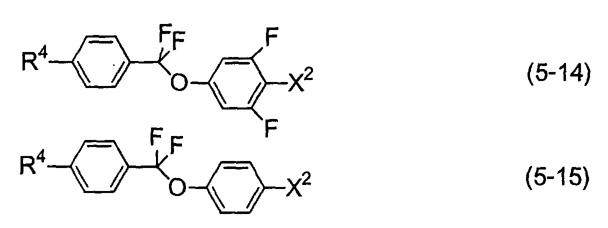 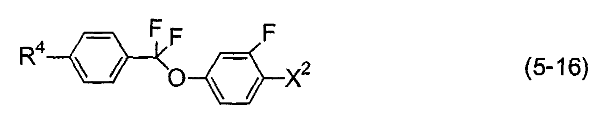 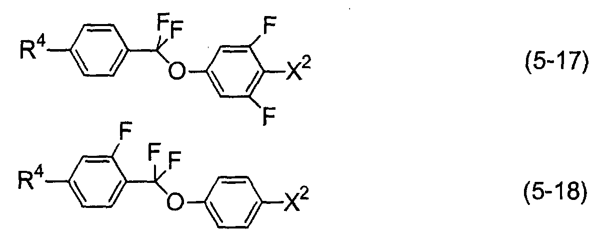 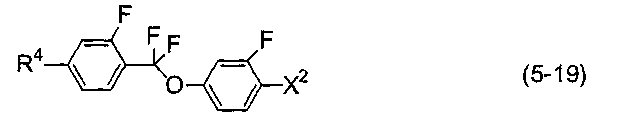 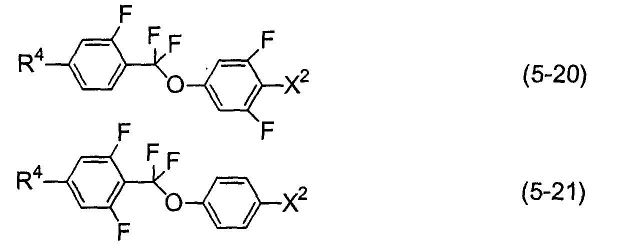 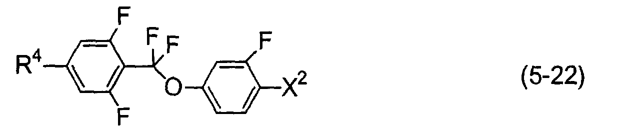 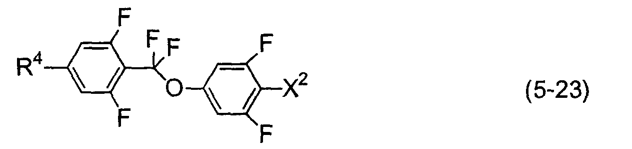 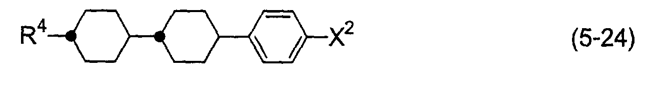 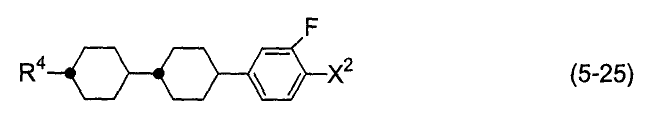 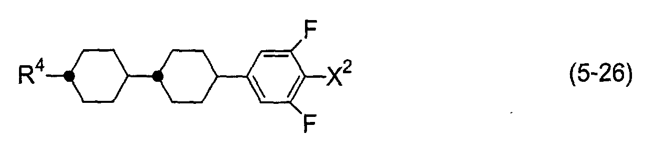 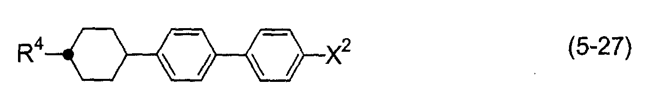 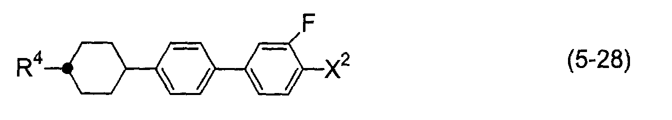 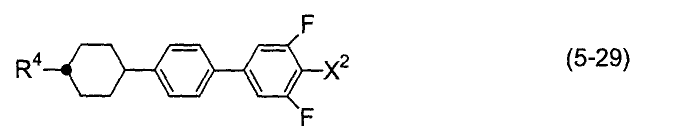 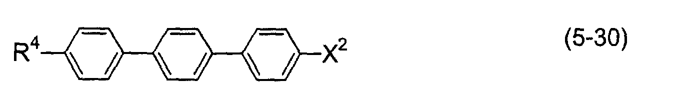 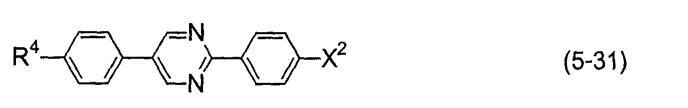 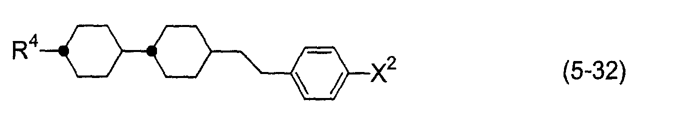 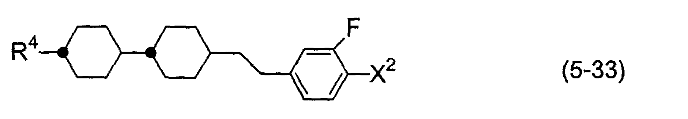 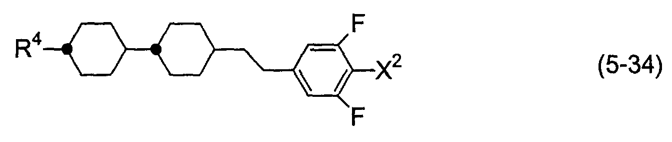 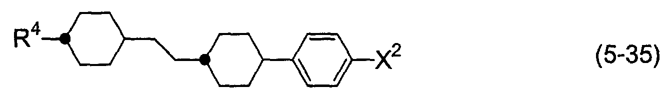 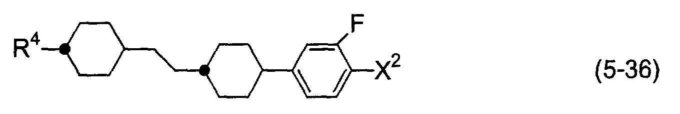 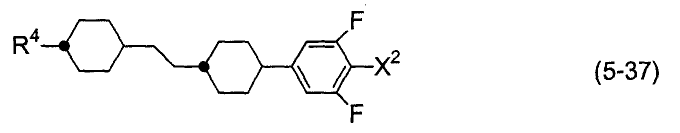 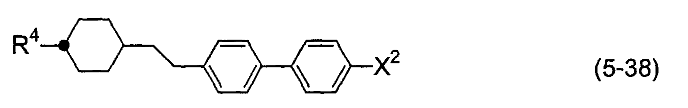 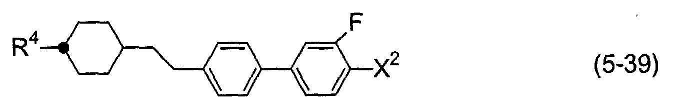 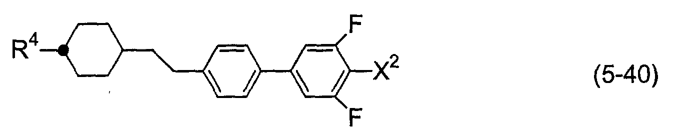 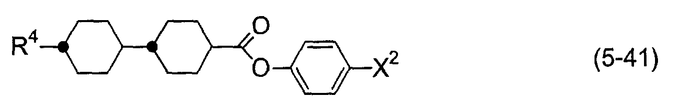 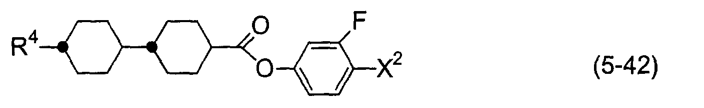 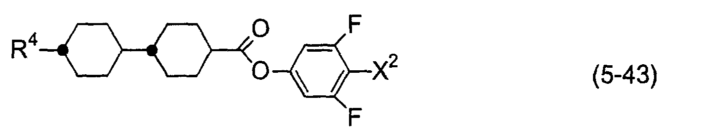 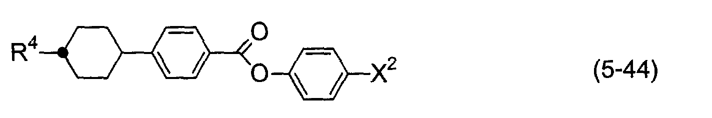 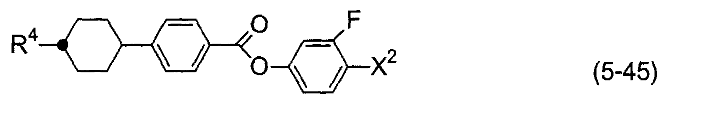 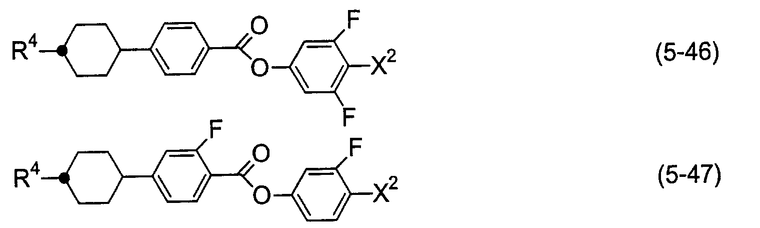 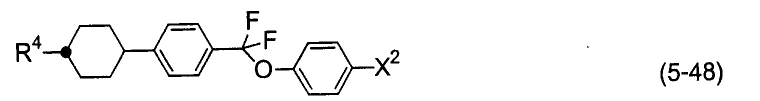 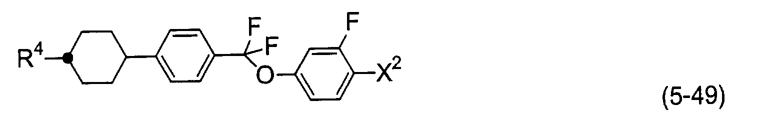 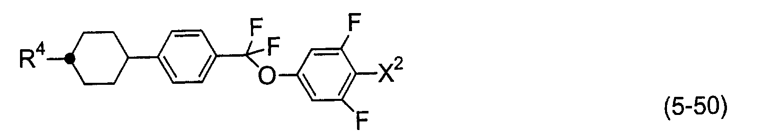 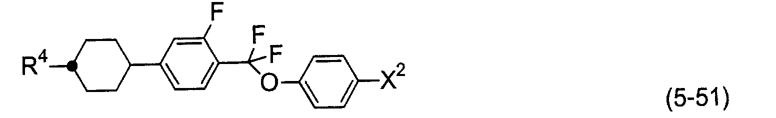 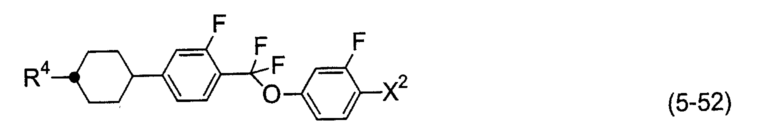 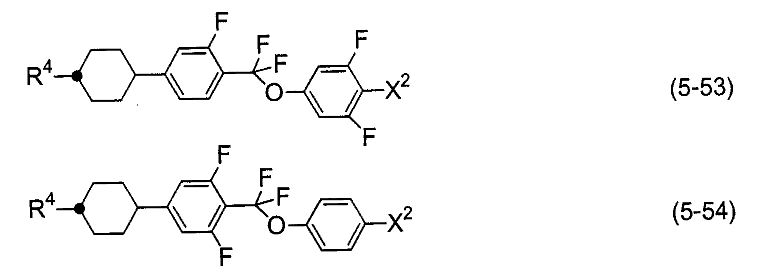 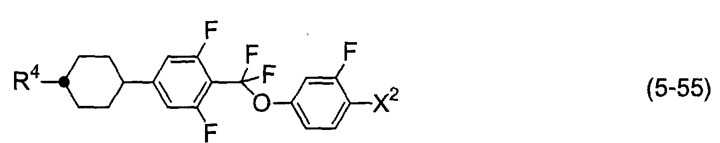 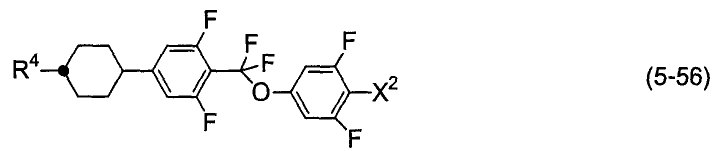 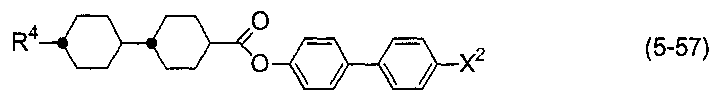 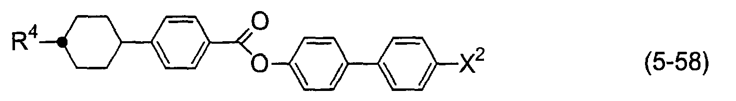 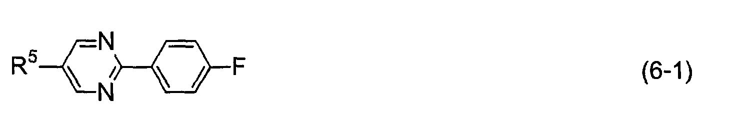 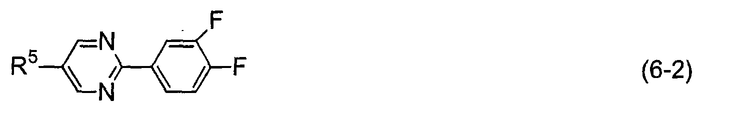 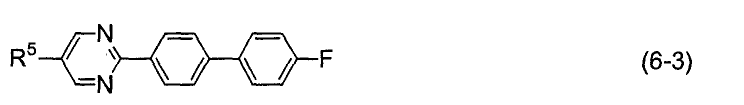 wherein R⁴, R⁵ and X² have the same meanings as defined above.

These compounds of formulas (5) and (6) have positive dielectric anisotropy and their very large values, and therefore are used mainly in the liquid crystal compositions for STN and TN. These compounds are used as a component of the composition especially for the purpose of reducing the threshold voltage. Further, they are used for the purpose of adjusting the viscosity and optical anisotropy, extending the liquid crystal phase temperature range and improving the steepness.

The amount of the compounds of formulas (5) and (6) used is in the range of 0.1 to 99.9% by weight, preferably 10 to 97% by weight and more preferably 40 to 95% by weight, when the liquid crystal composition for STN or TN is prepared. In that case, the third component as mentioned later can be incorporated for the purpose of adjusting the threshold voltage, liquid crystal phase temperature range, optical anisotropy, dielectric anisotropy and viscosity.

When the liquid crystal composition having a negative dielectric anisotropy used as the liquid crystal composition of the invention in the vertically aligned mode (VA mode) or the like is prepared, it is preferable to incorporate at least one compound selected from the group consisting of the compounds of the following formulas (7)-(9) (called hereafter "second C component"). 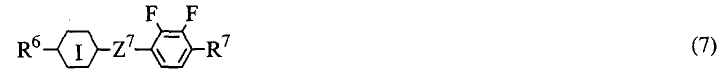 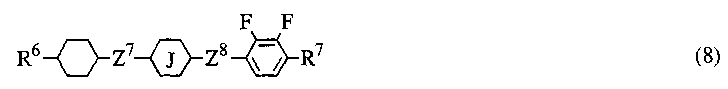 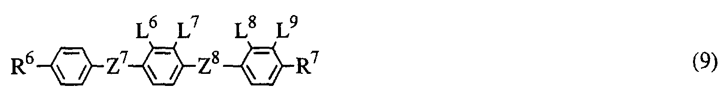 wherein R⁶ and R⁷ each independently represent C₁-C₁₀ alkyl in which any nonadjacent -CH₂- may be replaced by -O- or - CH=CH- and any hydrogen may be replaced by fluorine; rings I and J each independently represent trans-1,4-cyclohexylene or 1,4-pehnylene; L⁶, L⁷, L⁸ and L⁹ each independently represent hydrogen or fluorine, but all of them do not represent hydrogen; and Z⁷ and Z⁸ each independently represent -(CH₂)₂-, -COO- or a single bond.

Suitable examples of such second C component can include the compounds of the following formulas (7-1) to (7-3), (8-1) to (8-5) and (9-1) to (9-3). 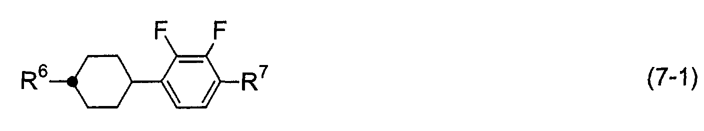 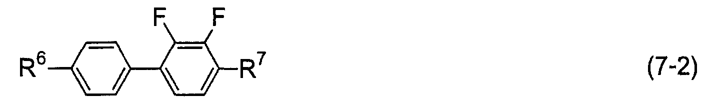 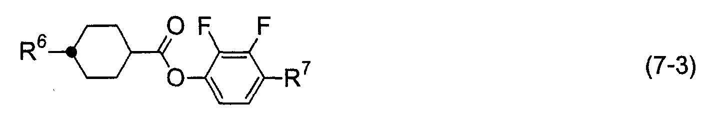 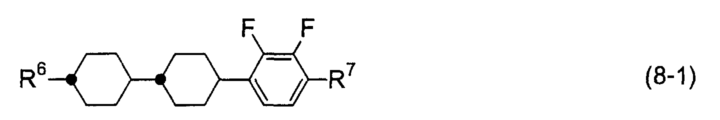 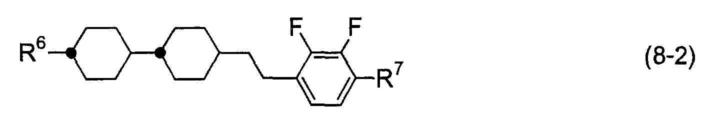 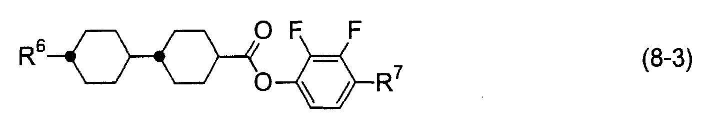 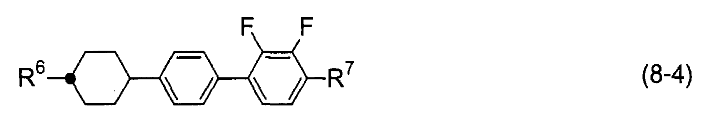 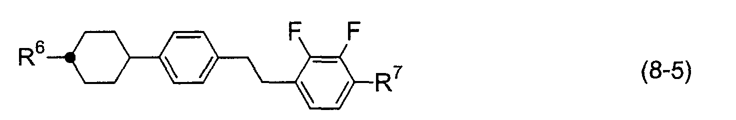 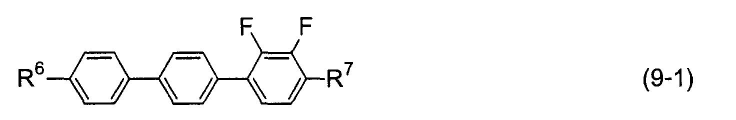 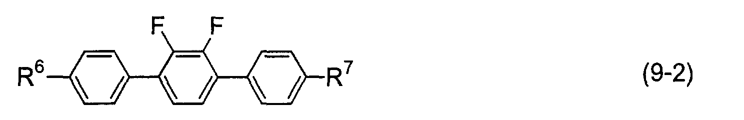 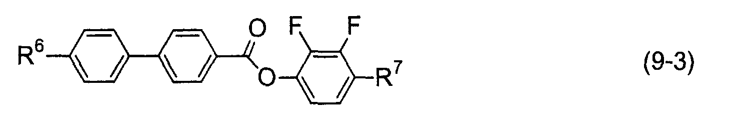 wherein R⁶ and R⁷ have the same meanings as defined above.

The compounds of formulas (7) to (9) are those wherein the dielectric anisotropy is negative. The compound of formula (7) is a compound having two rings, and therefore used mainly for the purpose of adjusting the threshold voltage, viscosity and optical anisotropy. The compound of formula (8) is used for the purpose of extending a nematic phase range such as increasing a clearing point, reducing threshold voltage and increasing optical anisotropy.

The compounds of formulas (7) to (9) are used mainly in the liquid crystal composition for VA mode wherein the dielectric anisotropy is negative. If the amount of the compound used is increased, the threshold voltage of the composition reduces, but the viscosity increases. Thus it is preferable to use the compound in small amount, as far as the value required for the threshold voltage is satisfied. However, less than 40% by weight of the compound may make low voltage driving impossible, since the absolute value of the dielectric anisotropy is 5 or less. The amount of the compounds of formulas (7) to (9) used is preferably 40% or more by weight, but suitably 50 to 90% by weight, for the preparation of the composition for VA mode. Optionally, the compounds of formulas (7) to (9) may be incorporated in the composition wherein the dielectric anisotropy is positive for the purpose of controlling the elastic constant and the voltage-transmittance curve of the composition. In this case, the amount of the compounds of formulas (7)-(9) used is preferably 30% and less by weight.

Of the third components in the liquid crystal composition of the invention, suitable examples of the compounds included in formulas (10) to (12) can include those of the following formulas (10-1) to (10-11), (11-1) to (11-12) and (12-1) to (12-6). 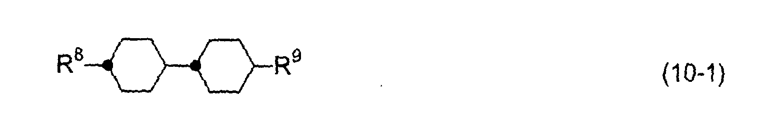 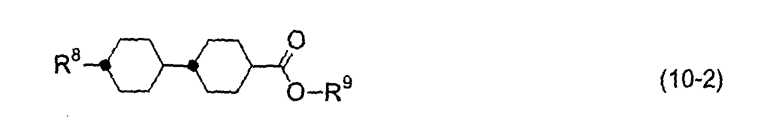 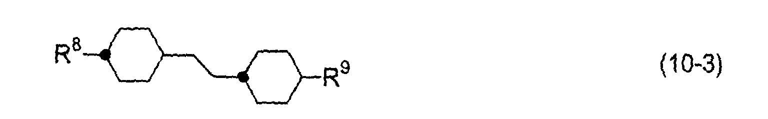 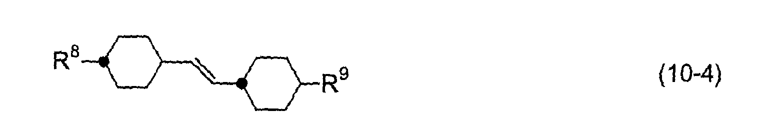 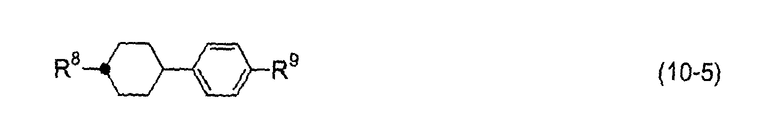 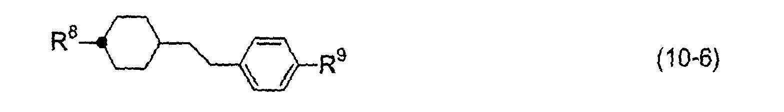 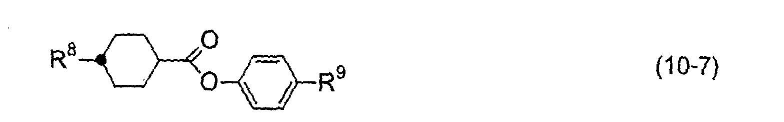 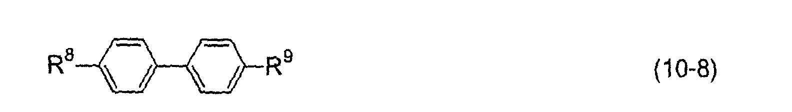 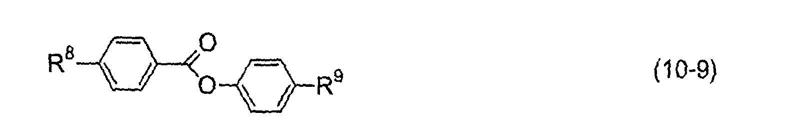 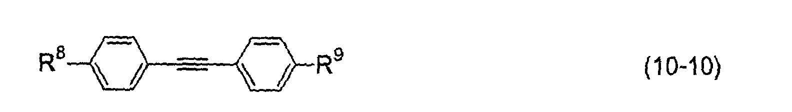 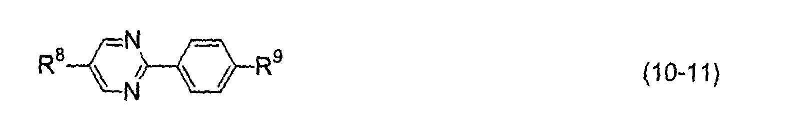 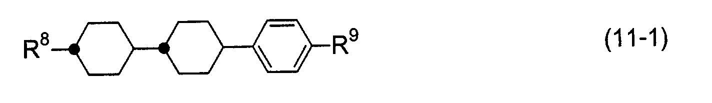 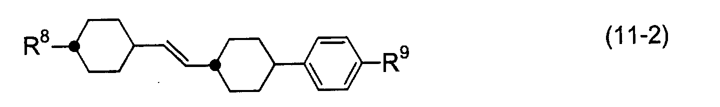 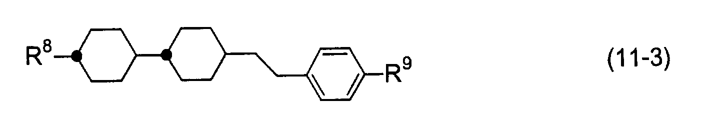 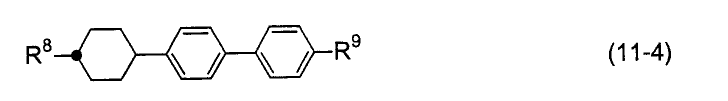 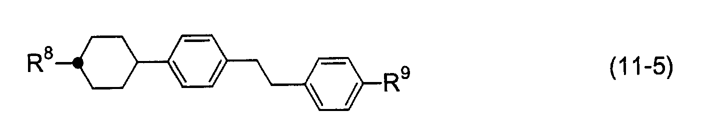 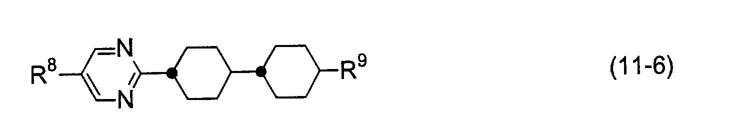 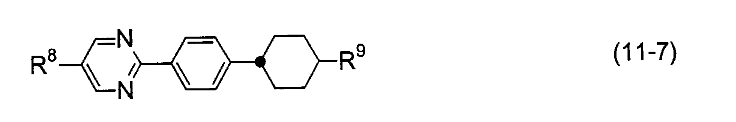 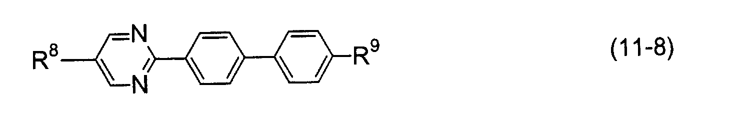 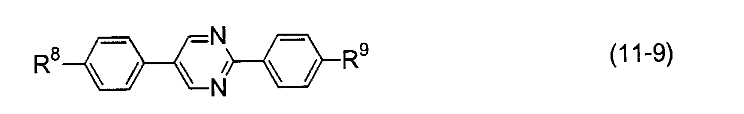 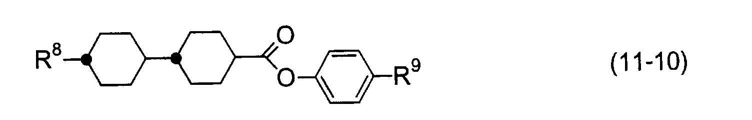 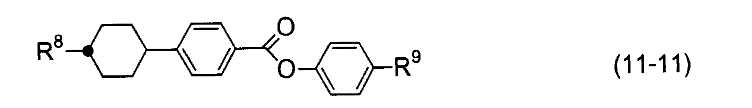 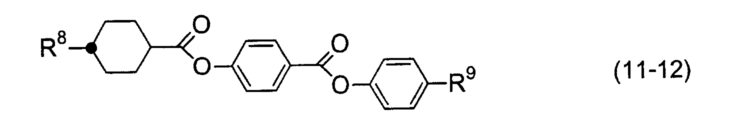 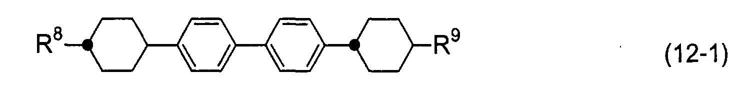 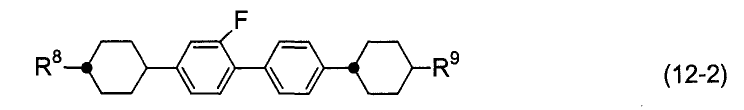 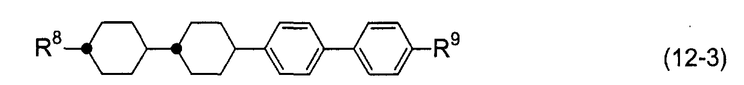 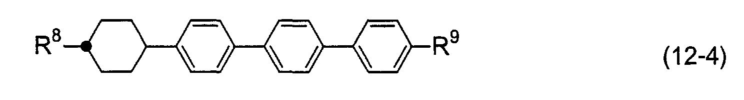 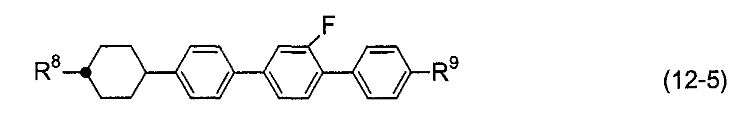 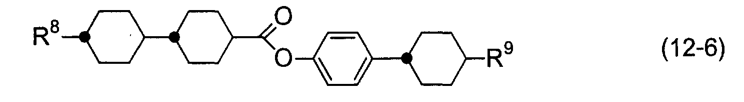 wherein R⁸ and R⁹ have the same meanings as defined above.

The compounds of formulas (10) to (12) are those which are small in the absolute value of the dielectric anisotropy and close to neutrality. The compound of formula (10) is used mainly for the purpose of adjusting the viscosity or optical anisotropy. The compounds of formulas (11) and (12) are used for the purpose of extending a nematic phase range such as increasing a clearing point or the like or adjusting the optical anisotropy.

When the amount of the compounds of formulas (10) to (11) used is increased, the threshold voltage of the liquid crystal composition increases and the velocity reduces. Accordingly, it is desirable to use larger amount of the compounds, as long as the value required for the threshold voltage of the liquid crystal composition is satisfied. For the preparation of the liquid crystal composition for TFT, the amount of the compounds of formulas (10) to (12) used is preferably 40% and less by weight and more preferably 35% and less by weight. For the preparation of the liquid crystal composition for STN or TN, the amount of the compounds of formulas (10) to (12) used is preferably not more than 70% by weight and more preferably 60% and less by weight.

The liquid crystal composition of the invention is generally prepared by the method known per se, for example, the method for dissolving various components mutually at elevated temperatures or the like. If necessary, suitable additives can be added, thereby improving and optimizing the composition in accordance with the intended use. Such additives are well known to those skilled in the art and fully described in the literature or the like. Usually, a chiral dopant or the like is added which has the effect of causing a helical structure of the liquid crystal to adjust necessary twist angle, thereby preventing a reverse twist. Examples of chiral dopants used in this case can include the optically active compounds of the following formulas (Op-1) to (Op-8).

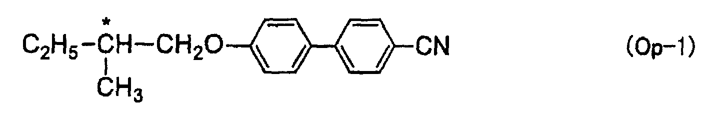

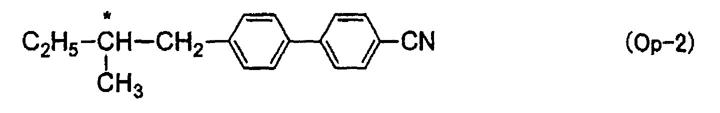

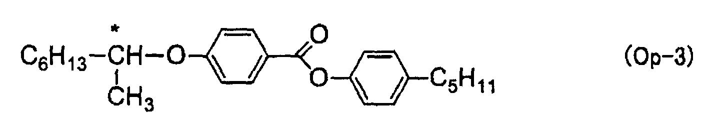

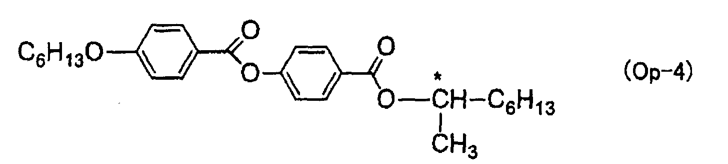

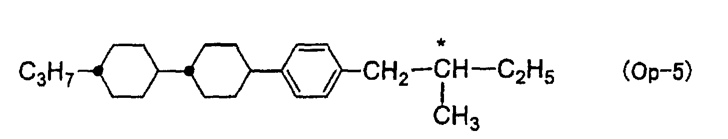

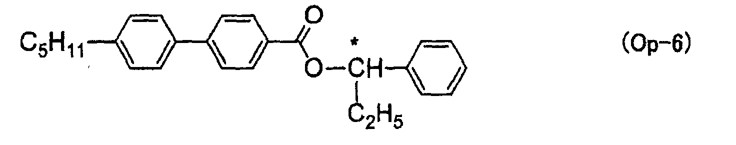

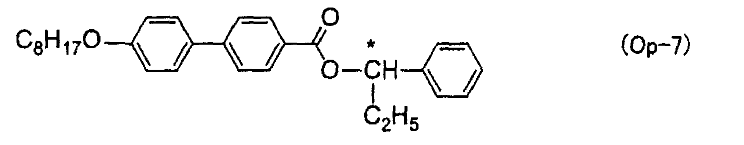

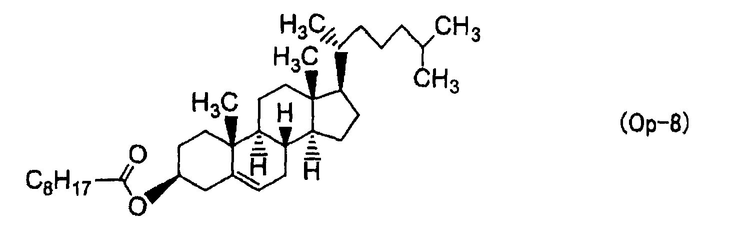

In the liquid crystal composition of the present invention, the pitch of twist is usually adjusted by addition of these optically active compounds.

Preferably, the pitch length of twist is adjusted in the range of 40 to 200 *µ*m for the liquid crystal composition for TFT and TN, the range of 6 to 20 *µ*m for STN and the range of 1.5 to 4 *µ*m for the composition for bistable TN mode. Further, two or more optically active compounds may be added for the purpose of adjusting a temperature dependence of pitch length.

Further, the present composition can be used as a liquid crystal composition for guest-host (GH) mode by incorporating therein diachronic dyes such as merocyanines, styryls, azo, azomethines, azoxy, quinophthalones, anthraquinones, tetrazines or the like.

The composition of the present invention can also be used as a liquid crystal composition for the display devices which include NCAP prepared by microcapsulating nematic liquid crystals, a polymer dispersed liquid crystal device (PDLCD) prepared by forming a three-dimentional network polymer in liquid crystals such as a polymer network liquid crystal display device (PNLCD), a birefringence controlled type (ECB) and DS type.

### EXAMPLES

The invention is further illustrated by the following examples which do not limit the invention.

In the examples, C stands for crystals, SA for a smectic A phase, SB for a smectic B phase, N for a nematic phase, Iso for an isotropic liquid phase, and the unit of the phase transition temperature is shown by °C. In the data of ¹H-NMR and 19F-NMR, t stands for triplet and m for multiplet. M⁺ shown in the data of mass spectrometric analysis stands for molecular ion peak.

In the following Examples relating to the liquid crystal composition, a part of the components is designated in accordance with the abbreviated notation as shown in Table 1 later.

### Example 1

### Preparation of 4-(trans-4-(trans-4-butylcyclohexyl) cyclohexylmethylsilyl)-2-fluorotrifluoromethoxybenzene

### (Compound No. 2-4)

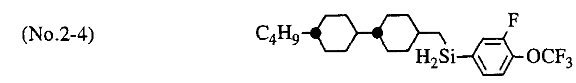

### (First stage)

### Preparation of trans-4-(trans-4-butylcyclohexyl) cyclohexylchloromethane

A mixture of 139 g (0.550 mol) of trans-4-(trans-4-butylcyclohexyl)cyclohexylmethanol, 300 ml of toluene and 1 ml of pyridine was heated to 60°C under a nitrogen atmosphere, and 68.7 g (0.577 mol) of thionyl chloride were added slowly. The mixture was heated and stirred for 2 hrs. After completion of the reaction, 1000 ml of toluene were added, an organic layer was washed once with water, once with an aqueous solution of dilute sodium hydroxide, twice with an aqueous solution of sodium bicarbonate and three times with water, and was dried over anhydrous magnesium sulfate. The solvent was distilled off under reduced pressure, and the residue was subjected to silica gel column chromatography (eluate: heptane) to afford 116 g (0.429 mol, 78% yield) of trans-4-(trans- 4-butylcyclohexyl) cyclohexylchloromethane.

### (Second stage)

### Preparation of trans-4-(trans-4-butylcyclohexyl) cyclohexyltrimethoxysilylmethane

A THF solution (60 ml) of 17.2 g (63.5 mmol) of trans-4-(trans-4-butylcyclohexyl)cyclohexylchloromethane prepared in the first stage was added dropwise under a nitrogen atmosphere to a mixture of 1.54 g (63.5 mmol) of fully dried magnesium and 5 ml of THF, a mixture was heated under reflux for 2 hrs to prepare a Grignard reagent. Subsequently, the Grignard reagent as prepared was added dropwise to a THF solution (40 ml) of 10.6 g (69.8 mmol) of tetramethoxysilane, and a mixture was heated under reflux for 2 hrs. From the reaction mixture, the solvent was distilled off under reduced pressure. The residue was distilled under reduced pressure (181-190°C/4 hPa) to isolate 15.8 g (44.4 mmol, 78% yield) of trans-4-(trans-4-butylcyclohexyl) cyclohexyltrimethoxy silylmethane.

### (Third stage)

### Preparation of the title compound

A THF solution (20 ml) of 6.37 g (24.6 mmol) of 3-fluoro-4-trifluoromethoxybromobenzene was added dropwise under a nitrogen atmosphere to a mixture of 0.598 g (24.6 mmol) of fully dried magnesium and 5 ml of THF, a mixture was stirred at 40°C for one hour to prepare a Grignard reagent. Subsequently, the Grignard reagent as prepared was added dropwise to a THF solution of 7.30 g (20.5 mmol) of trans-4-(trans-4- butylcyclohexyl) cyclohexyltrimethoxy silylmethane prepared in the second stage, and a mixture was heated under reflux for 2 hrs.

The mixture was cooled to room temperature, 1.63 g (43.1 mmol) of lithium aluminum hydride were added to a reaction solution and a mixture was heated under reflux for one hour to crystallize in a (1N) HCl solution (20 ml). The reaction solution was extracted with toluene (200 ml), an organic layer was washed once with an aqueous solution of sodium bicarbonate and three times with water, and dried over anhydrous magnesium sulfate. The solvent was distilled off under reduced pressure, and the residue was subjected twice to silica gel column chromatography (eluate: heptane) and then recrystallized (solvent: methanol/heptane) to afford 0.420 g (0.946 mmol, 4.6% yield) of the title compound.

This product exhibited a liquid crystal phase, the transition temperature of which was C-SB: -11.23°C, SB-Iso: 51.92°C. Various spectral data well supported its structure. Mass spectroscopy: 444 (M⁺)
¹H-NMR: δ (ppm) 0.86-1.27 (m, 2 0 H) , 1.56-1.68 (m, 1 1 H) , 4.29 (t, 2 H) , 7.26-7.38 (m, 3 H) .
19F-NMR: δ (ppm) -59.14 (t, 3 F) ,-130.50 (t, 1 F) .

### Example 2

### Preparation of 1- (trans-4-(trans-4-propylcyclohexyl) cyclohexylmethylsilyl)-3,4,5-trifluorobenzene (Compound No. 2-2)

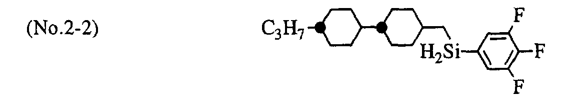

### (First stage)

### Preparation of trans-4-(trans-4-propylcyclohexyl) cyclohexylchloromethane

A mixture of 130 g (0.550 mol) of trans-4-(trans-4-propylcyclohexyl)cyclohexylmethanol, 400 ml of toluene and 1 ml of pyridine was heated to 60°C under a nitrogen atmosphere, and 68.7 g (0.577 mol) of thionyl chloride were added slowly. The mixture was heated and stirred for 2 hrs. 1000 ml of toluene were added, an organic layer was washed once with water, once with an aqueous solution of dilute sodium hydroxide, twice with an aqueous solution of sodium bicarbonate and three times with water, and dried over anhydrous magnesium sulfate. The solvent was distilled off under reduced pressure, and the residue was subjected to silica gel column chromatography (eluate: heptane) to afford 110 g (0.429 mol, 77% yield) of trans-4-(trans-4-propylcyclohexyl)cyclohexylchloromethane.

### (Second stage)

### Preparation of trans-4-(trans-4-propylcyclohexyl) cyclohexyltrimethoxysilylmethane

A THF solution (300 ml) of 112 g (0.437 mol) of trans-4-(trans-4-propylcyclohexyl)cyclohexylchloromethane prepared in the first stage was added dropwise under a nitrogen atmosphere to a mixture of 10.6 g (0.437 mol) of fully dried magnesium and 300 ml of THF, a mixture was heated under reflux for 2 hrs to prepare a Grignard reagent. Subsequently, the Grignard reagent as prepared was added dropwise to a THF solution (300 ml) of 133 g (0.873 mol) of tetramethoxy silane, and a mixture was heated under reflux for 2 hrs. From the reaction mixture, the solvent was distilled off under reduced pressure. The residue was distilled under reduced pressure (185-192°C/4 hPa) to isolate 106 g (0.310 mol, 71% yield) of trans-4-(trans-4-propylcyclohexyl) cyclohexyltrimethoxy silylmethane.

### (Third stage)

### Preparation of the title compound

A THF solution (20 ml) of 3.70 g (17.5 mmol) of 3,4,5-trifluorobromobenzene was added dropwise under a nitrogen atmosphere to a mixture of 0.426 g (17.5 mmol) of fully dried magnesium and 5 ml of THF, a mixture was heated at 40°C for one hour to prepare a Grignard reagent. Subsequently, the Grignard reagent as prepared was added dropwise to a THF solution of 5.00 g (14.6 mmol) of trans-4-(trans-4-propylcyclohexyl)cyclohexyltrimethoxy silylmethane prepared in the second stage, and a mixture was heated under reflux for 2 hrs.

The mixture was cooled to room temperature, 0.333 g (8.77 mmol) of lithium aluminum hydride was added to a reaction solution and a mixture was heated under reflux for one hour to crystallize in a (1N) HCl solution (20 ml). The reaction solution was extracted with toluene (100 ml), an organic layer was washed once with an aqueous solution of sodium bicarbonate and three times with water, and dried over anhydrous magnesium sulfate. The solvent was distilled off under reduced pressure, and the residue was subjected twice to silica gel column chromatography (eluate: heptane) and then recrystallized (solvent: ethanol) to afford 0.670 g (1.75 mmol, 10.0% yield) of the title compound.

This product exhibited a liquid crystal phase, the transition temperature of which was C-SB: 28.8°C, SB-Iso:
37.8°C. Various spectral data well supported its structure. Mass spectroscopy: 382 (M⁺)
¹H-NMR : δ (ppm) 0.85-1.29 (m, 2 OH), 1.66-1.68 (m, 9 H) , 4.27 (t, 2H), 7.09-7.15 (m, 2H).
19F-NMR:δ (ppm) -135.5 (t, 3F).

### Example 3

### Preparation of 1-(trans-4-propylcyclohexylmethylsilyl)-3,5-difluoro-4-cyanobenzene (Compound No. 1-4)

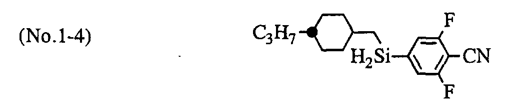

### (First stage)

### Preparation of trans-4-propylcyclohexylchloromethane

A mixture of 178 g (1.14 mol) of trans-4-propylcyclohexylmethanol, 400 ml of toluene and 1 ml of pyridine was heated to 60°C under a nitrogen atmosphere, and 143 g (1.20 mol) of thionyl chloride were added slowly. The mixture was heated and stirred for 2 hrs. 1000 ml of toluene were added, an organic layer was washed once with water, once with an aqueous solution of dilute sodium hydroxide, twice with an aqueous solution of sodium bicarbonate and three times with water, and dried over anhydrous magnesium sulfate. The solvent was distilled off under reduced pressure, and the residue was subjected to silica gel column chromatography (eluate: heptane) to afford 170 g (0.974 mol, 86% yield) of trans-4-propylcyclohexylchloromethane.

### (Second stage)

### Preparation of trans-4-propylcyclohexyltrimethoxy silylmethane

A THF solution (300 ml) of 120 g (0.688 mol) of trans-4-propylcyclohexylchloromethane prepared in the first stage was added dropwise under a nitrogen atmosphere to a mixture of 17.5 g (0.722 mol) of fully dried magnesium and 400 ml of THF, a mixture was heated under reflux for 2 hrs to prepare a Grignard reagent. Subsequently, the Grignard reagent as prepared was added dropwise to a THF solution (400 ml) of 209 g (1.38 mol) of tetramethoxysilane, and a mixture was heated under reflux for 2 hrs. From the reaction mixture, the solvent was distilled off under reduced pressure. The residue was distilled under reduced pressure (185-192°C/4 hPa) to isolate 140 g (0.538 mol, 78% yield) of trans-4-propylcyclohexyl trimethoxysilylmethane.

### (Third stage)

### Preparation of 1- (trans-4-propylcyclohexylmethylsilyl)-3,5-difluorobenzene

A THF solution (20 ml) of 8.90 g (46.2 mmol) of 3,5-difluorobromobenzene was added dropwise under a nitrogen atmosphere to a mixture of 1.12 g (46.2 mmol) of fully dried magnesium and 10.0 ml of THF, a mixture was heated at 40°C for one hour to prepare a Grignard reagent. Subsequently, the Grignard reagent as prepared was added dropwise to a THF solution of 8.00 g (30.8 mmol) of trans-4-propylcyclohexyl cyclohexyltrimethoxy silylmethane prepared in the second stage, and a mixture was heated under reflux for 2 hrs.

The mixture was cooled to room temperature, 0.710 g (18.5 mmol) of lithium aluminum hydride was added to a reaction solution and a mixture was heated under reflux for one hour to crystallize in a (1N) HCl solution (30 ml). The reaction solution was extracted with toluene (100 ml), an organic layer was washed once with an aqueous solution of sodium bicarbonate and three times with water, and dried over anhydrous magnesium sulfate. The solvent was distilled off under reduced pressure, and the residue was subjected to silica gel column chromatography (eluate: heptane) to afford 6.10 g (21.6 mmol, 70.0% yield) of 1-(trans-4-propylcyclo hexylmethylsilyl)-3,5-difluorobenzene.

### (Fourth stage)

### Preparation of 1-(trans-4-propylcyclohexylmethylsilyl)-3,5-difluoro-4-iodobenzene

A mixture of 6.08g (21.6 mmol) of 1-(trans-4-propylcyclohexylmethylsilyl)-3,5-difluorobenzene prepared in the third stage and 50.0 ml of THF was cooled to -70°C or lower under a nitrogen atmosphere, a hexane solution (12.5 ml) of n-butyl lithium (corresponding to 24.8 mol) was added dropwise while keeping -70°C or lower and a mixture was stirred at the same temperature for one hour.

Subsequently, a THF solution (20 ml) of 6.57 g (25.5 mmol) of iodine was added dropwise while keeping -65°C and a mixture was stirred at the same temperature for one hour. After completion of the reaction, the mixture was crystallized in 1 L of water and then extracted with toluene (100 ml). An organic layer was washed twice with an aqueous solution of sodium thiosulfate and three times with water, and dried over anhydrous magnesium sulfate. The solvent was distilled off under reduced pressure, and the residue was subjected to silica gel column chromatography (eluate:
heptane) to afford 3.30 g (8.10 mmol, 38% yield) of 1-(trans-4-propylcyclohexylmethylsilyl)-3,5-difluoro-4-iodobenzene.

### (Fifth stage)

### Preparation of the title compound

A mixture of 3.30 g (8.10 mmol) of 1-(trans-4-propylcyclohexylmethylsilyl)-3,5-difluoro-4-iodobenzene prepared in the fourth stage, copper(I)cyanide (1.09 mmol) and 20 ml of DMF was heated and stirred at 160°C for 2 hrs. The reaction mixture was extracted with 100 ml of toluene, an organic layer was washed four times with ammonia water, once with (2N) HCl, once with an aqueous solution of sodium bicarbonate and three times with water, and dried over anhydrous magnesium sulfate. The solvent was distilled off under reduced pressure and the residue was subjected to silica gel column chromatography (eluate: heptane) to afford 0.273 g (0.89 mmol, 11% yield) of the title compound.

Various spectral data well supported its structure. Mass spectroscopy: 307 (M⁺)

### Example 4

### Preparation of 4-(trans-4-propylcyclohexylmethylsilyl)-2 ,3',4',5'-tetra-fluorobiphenyl (Compound No. 2-40)

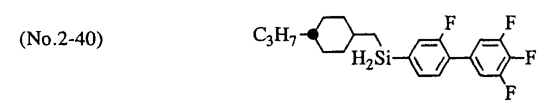

### (First stage)

### Preparation of 4-bromo-2,3',4',5'-tetrafluorobiphenyl

A mixture of 28.0 g (93.0 mmol) of 3-fluoro-4-iodobromobenzene, 19.6 g (111 mmol) of 3,4,5-trifluorophenylboronic acid, 25.7 g (186 mmol) of potassium carbonate, 3.20 g (27.9 mmol) of tetrakis(triphenylphosphine) palladium, 200 ml of dimethoxyethane and 150 ml of water was heated and stirred at 70°C for 20 hrs. The reaction mixture was extracted with toluene, an organic layer was washed once with an aqueous solution of sodium bicarbonate and three times with water, and dried over anhydrous magnesium sulfate. The solvent was distilled off under reduced pressure, the residue was subjected to silica gel column chromatography (eluate:
heptane) and recrystallized (methanol) to isolate 7.0 g (22.9 mmol, 25% yield) of 4-bromo-2,3',4',5'-tetrafluorobiphenyl.

### (Second stage)

### Preparation of the title compound

A THF solution (10 ml) of 9.20 g (30.2 mmol) of 4-bromo-2,3',4',5'-tetrafluorobiphenyl prepared in the first stage was added dropwise under a nitrogen atmosphere to a mixture of 0.73 g (30.2 mmol) of fully dried magnesium and 5 ml of THF, a mixture was heated at 40°C for one hour to prepare a Grignard reagent. Subsequently, the Grignard reagent as prepared was added dropwise to a THF solution of 5.00 g (20.2 mmol) of trans-4-propylcyclohexyltrimethoxy silylmethane prepared in the second stage of Example 3, and a mixture was heated under reflux for 5 hrs.

The mixture was cooled to room temperature, 0.460 g (1.81 mmol) of lithium aluminum hydride was added to a reaction solution and a mixture was heated under reflux for one hour to crystallize in a (1N) HCl solution (20 ml). The reaction solution was extracted with toluene (100 ml), an organic layer was washed once with an aqueous solution of sodium bicarbonate and three times with water, and dried over anhydrous magnesium sulfate. The solvent was distilled off under reduced pressure, and the residue was subjected twice to silica gel column chromatography (eluate: heptane) and then recrystallized (solvent: ethanol) to afford 0.477 g (1.21 mmol, 6.0% yield) of the title compound.

Various spectral data well supported its structure. Mass spectroscopy: 394 (M⁺)

The following compounds (No. 1-1) to (No. 1-26), (No. 2-1) to (No. 2-67) and (No. 3-1) to (No. 3-90) can be prepared by similar processes as described in Examples 1-4. In the following compound lists, the compounds (No. 1-4), (No. 2-2), (No. 2-4) and (No. 2-40) prepared in Examples 1-4 are also included.

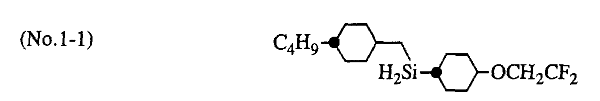

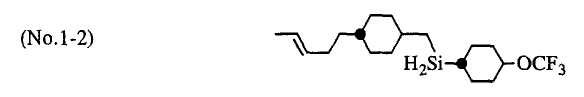

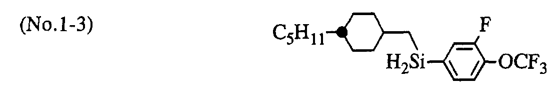

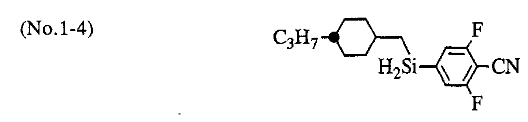

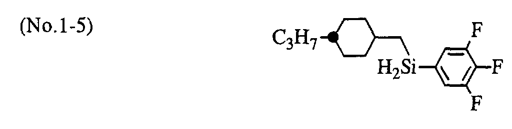

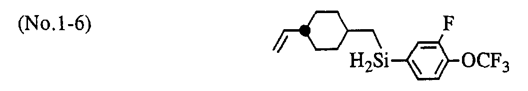

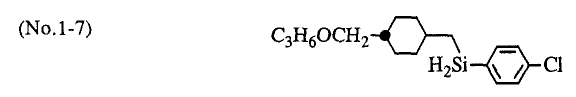

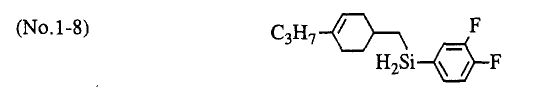

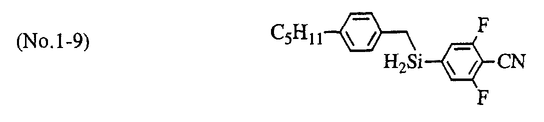

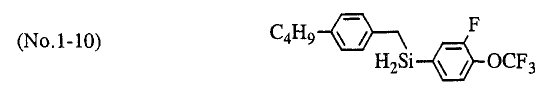

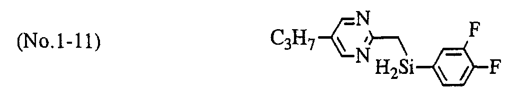

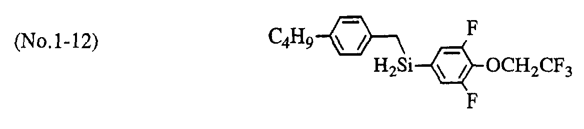

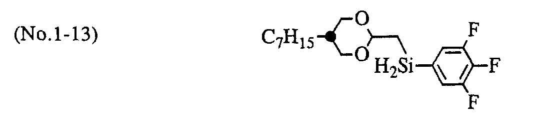

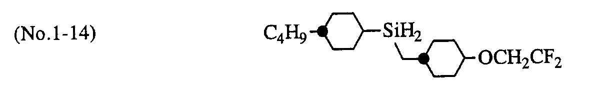

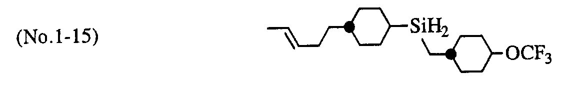

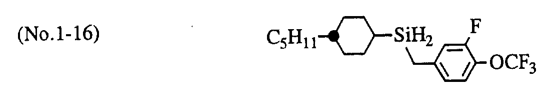

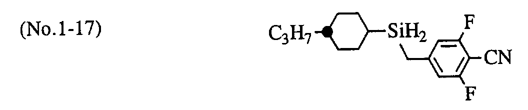

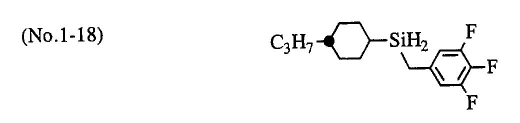

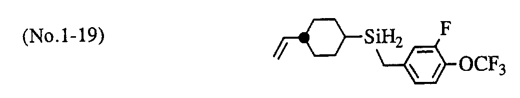

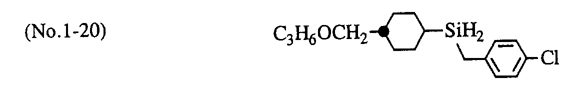

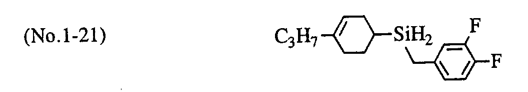

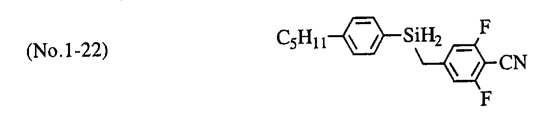

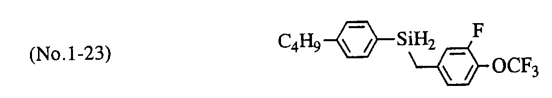

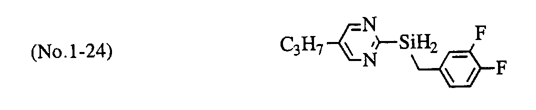

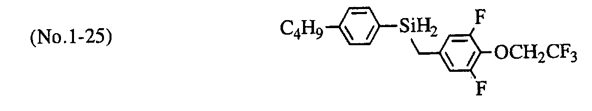

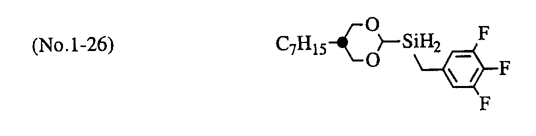

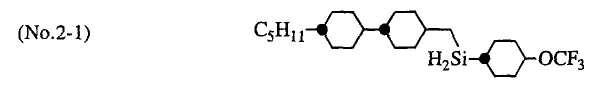

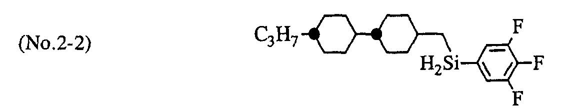

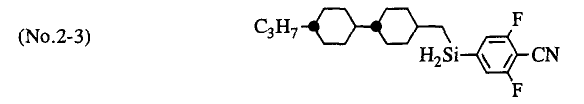

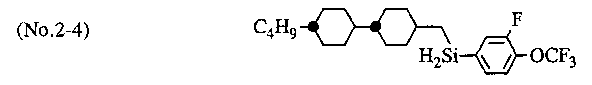

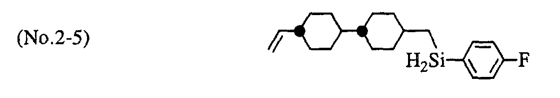

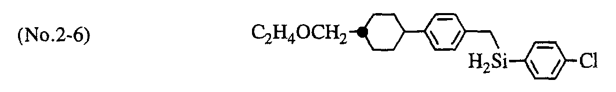

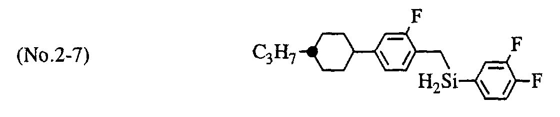

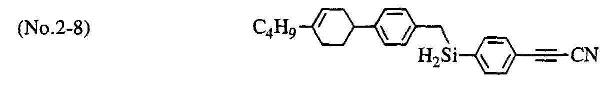

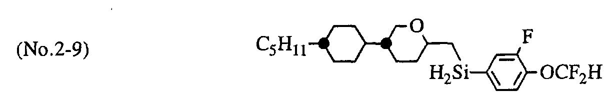

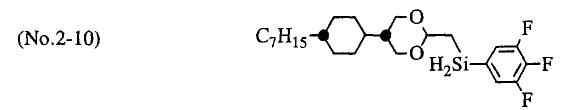

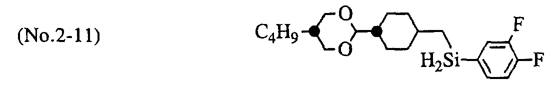

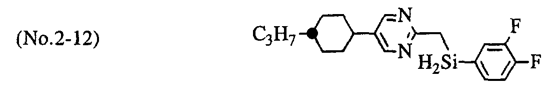

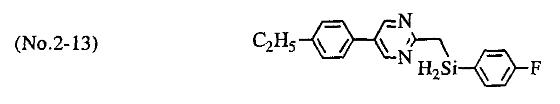

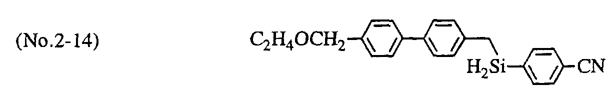

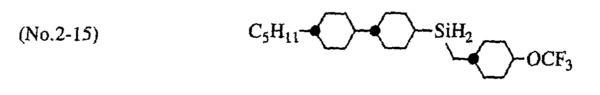

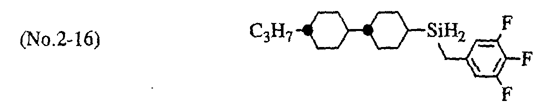

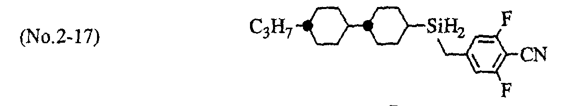

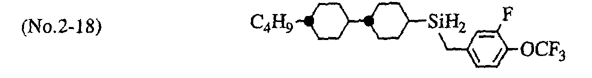

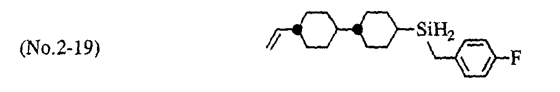

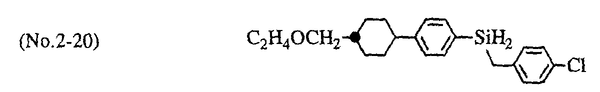

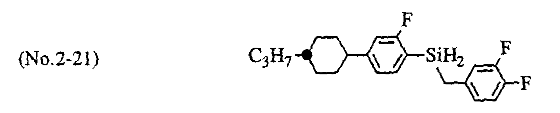

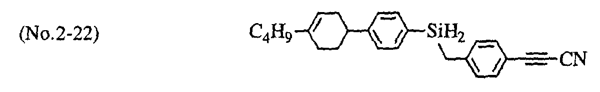

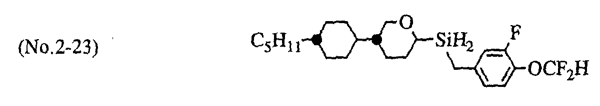

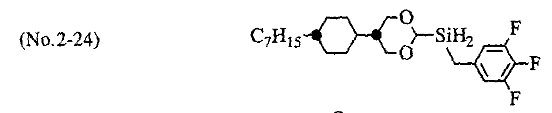

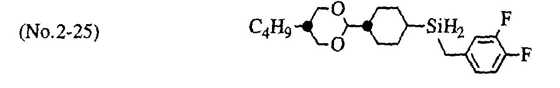

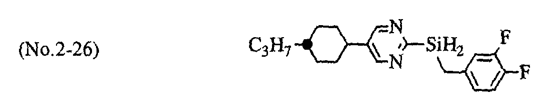

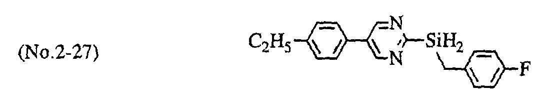

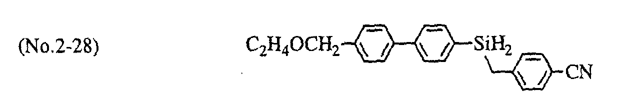

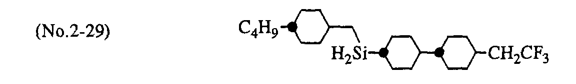

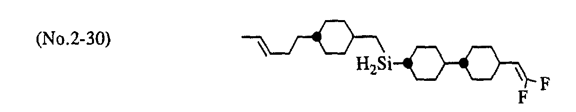

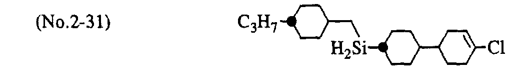

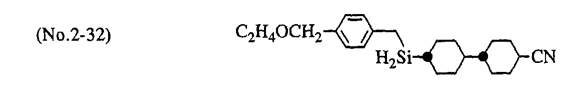

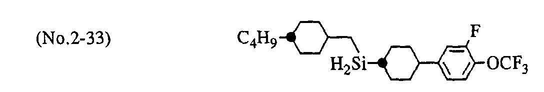

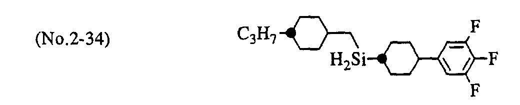

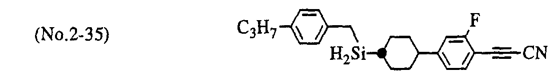

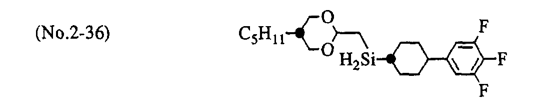

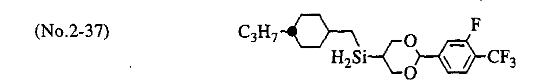

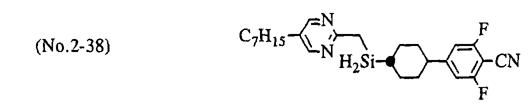

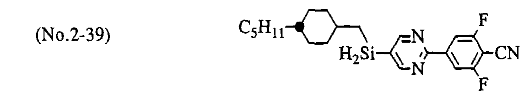

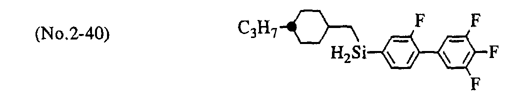

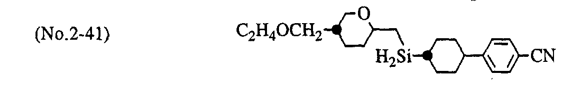

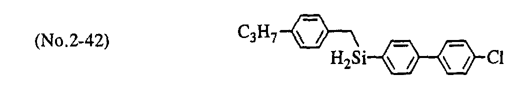

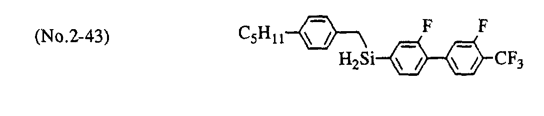

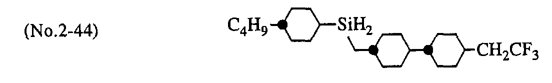

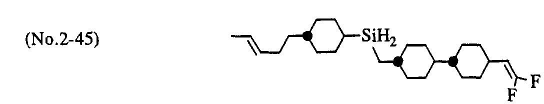

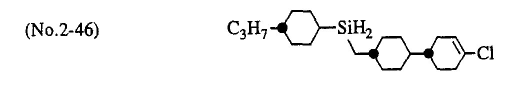

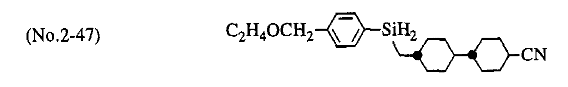

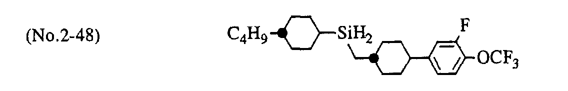

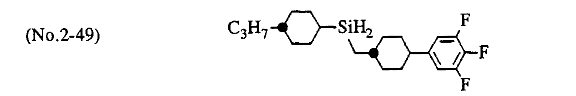

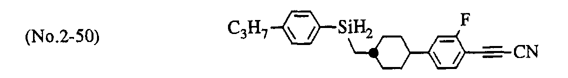

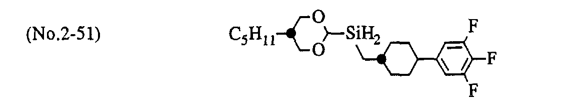

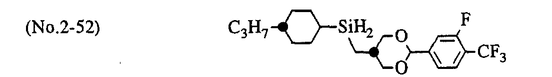

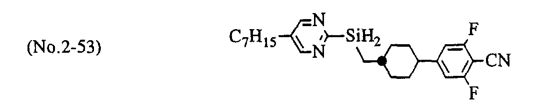

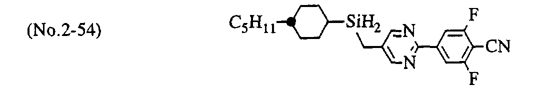

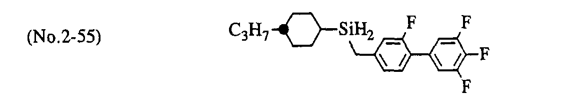

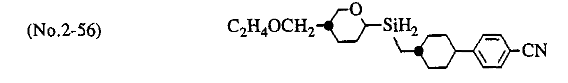

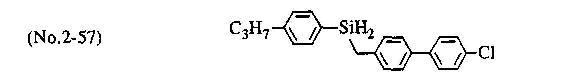

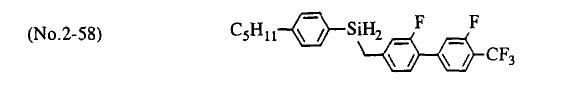

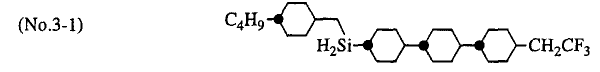

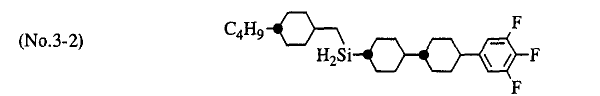

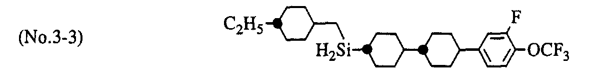

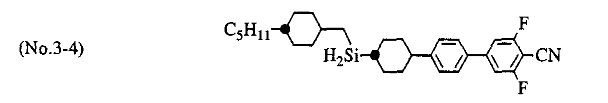

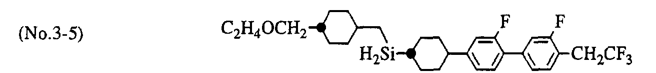

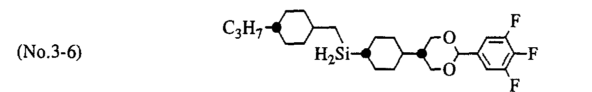

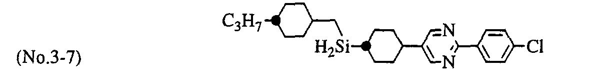

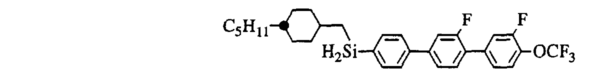

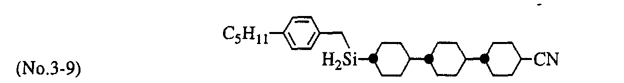

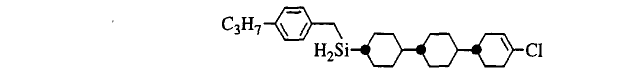

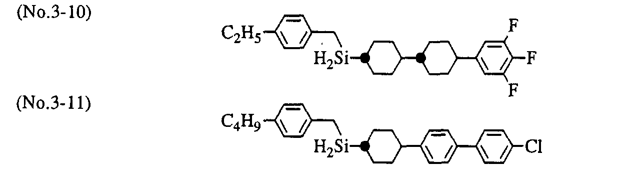

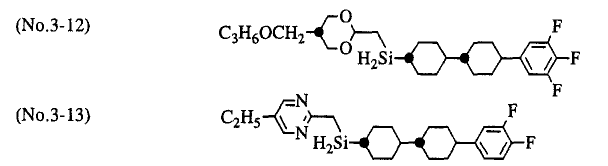

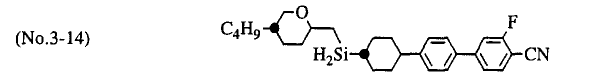

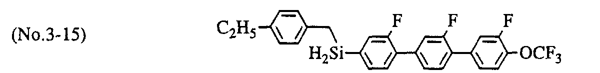

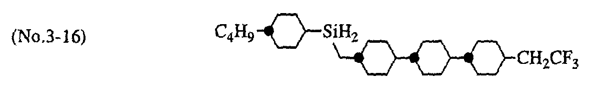

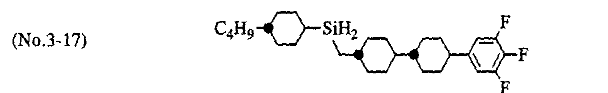

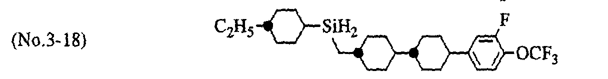

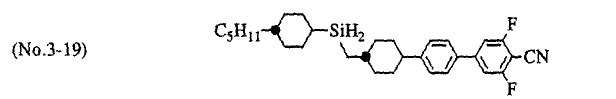

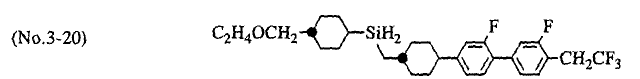

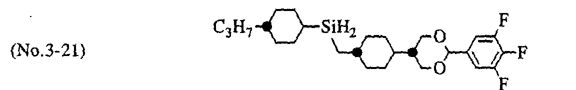

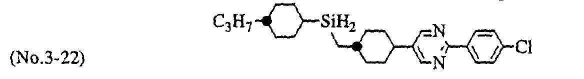

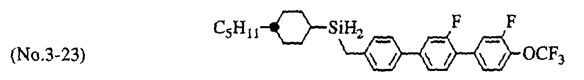

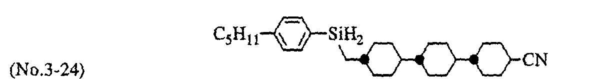

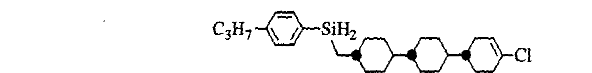

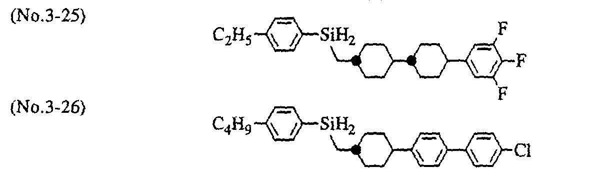

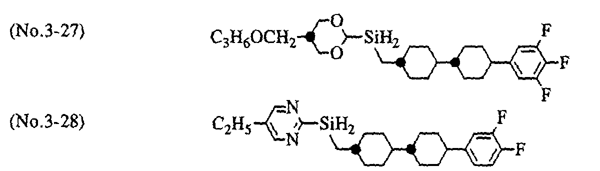

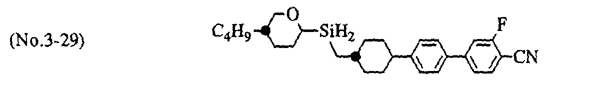

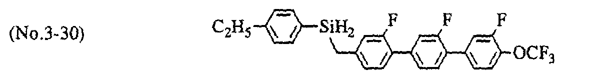

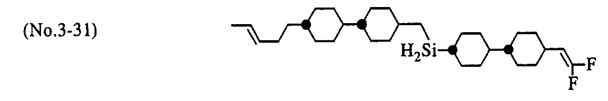

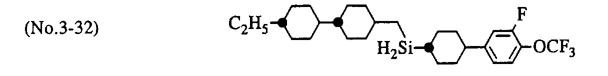

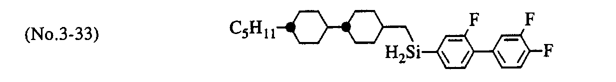

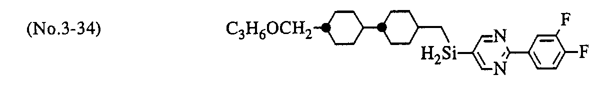

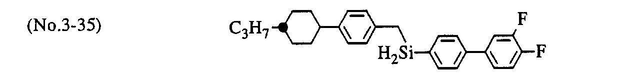

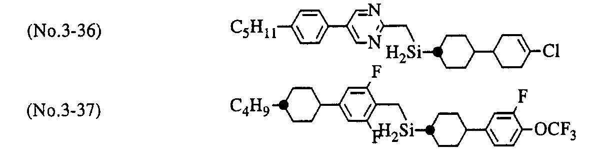

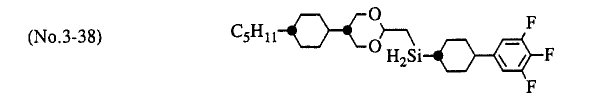

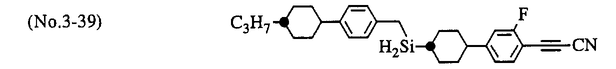

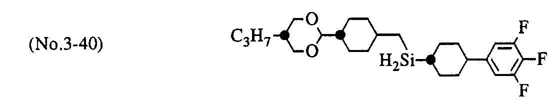

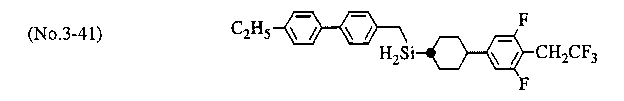

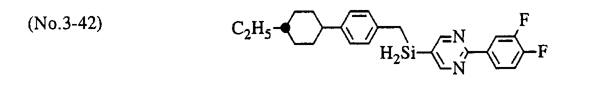

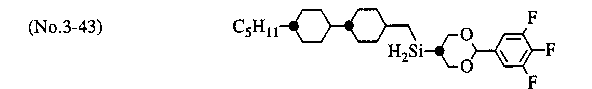

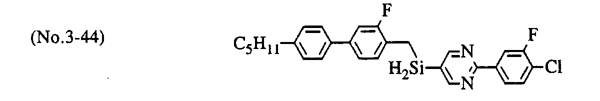

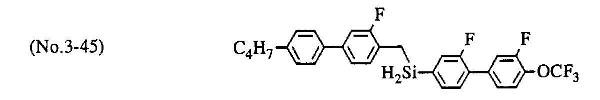

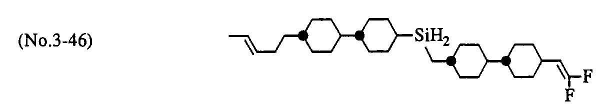

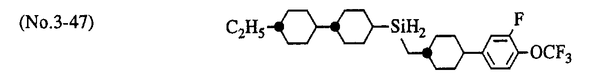

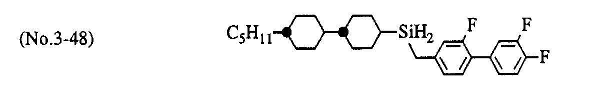

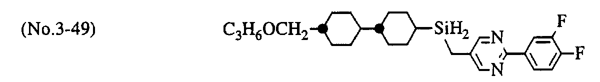

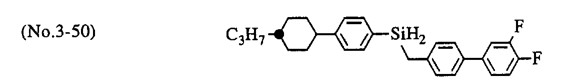

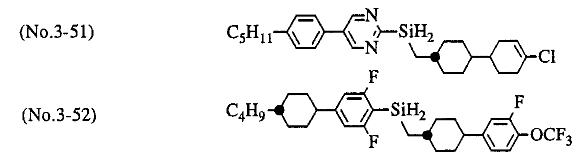

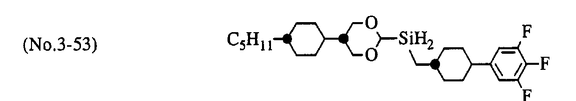

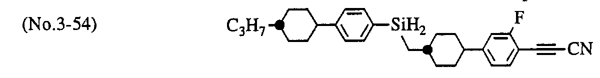

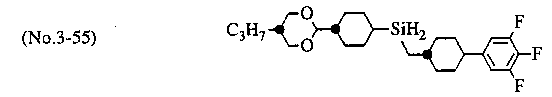

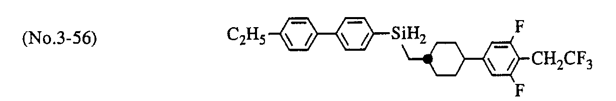

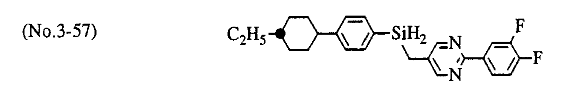

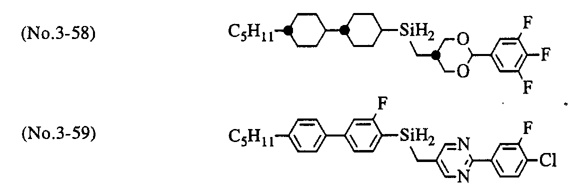

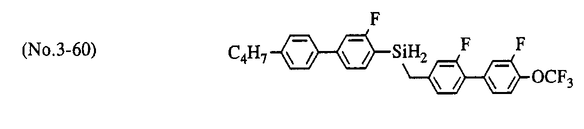

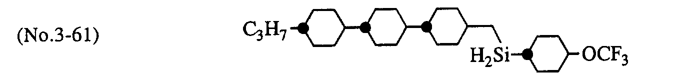

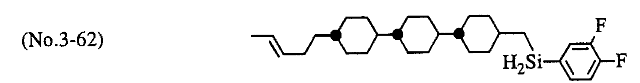

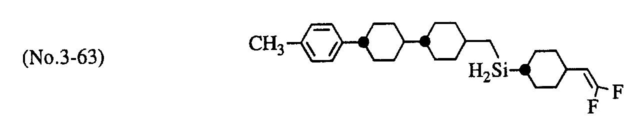

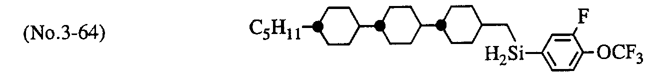

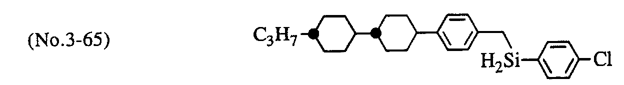

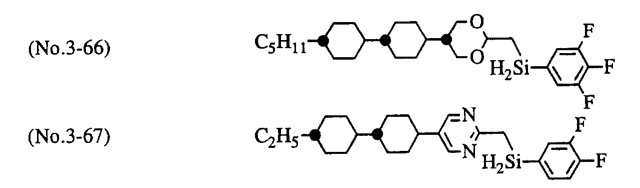

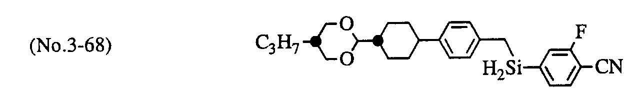

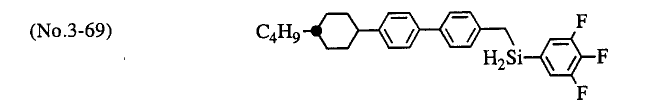

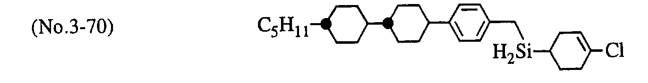

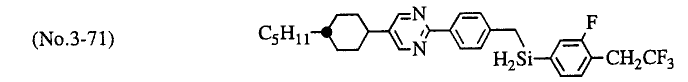

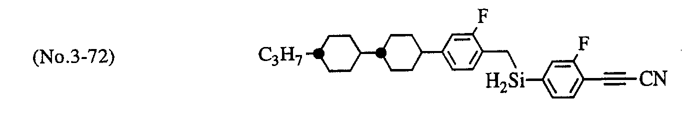

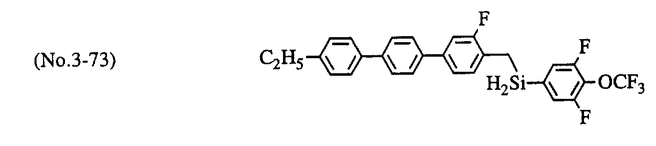

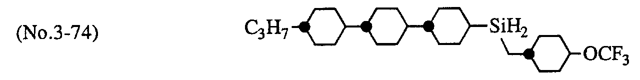

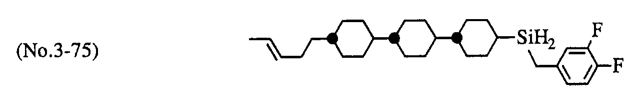

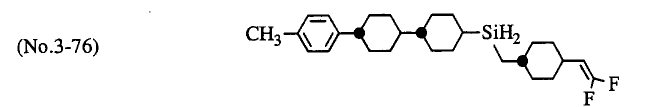

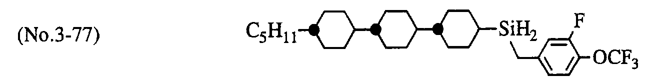

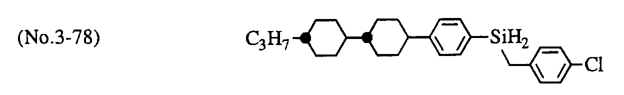

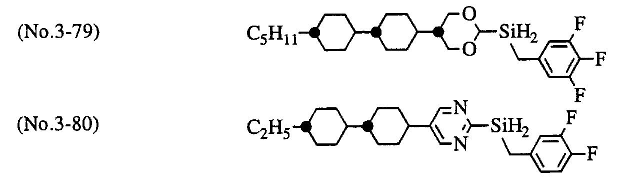

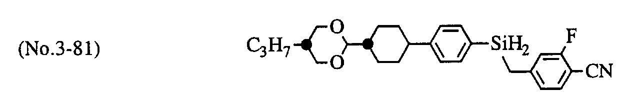

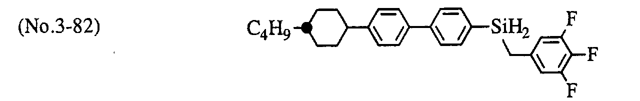

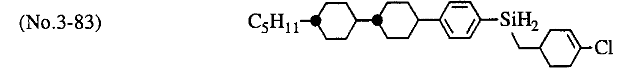

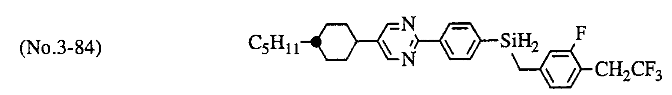

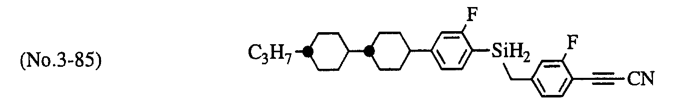

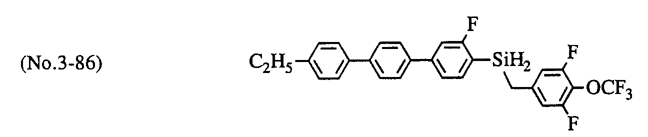

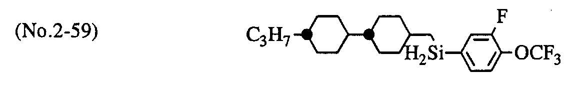

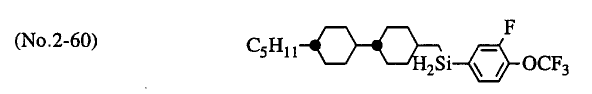

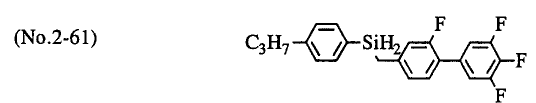

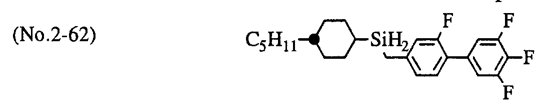

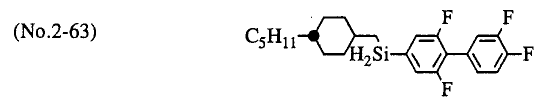

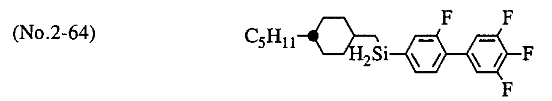

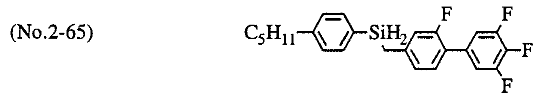

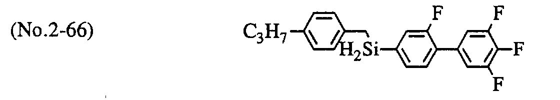

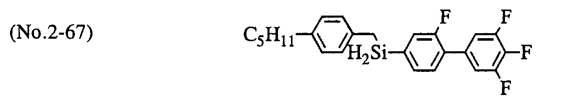

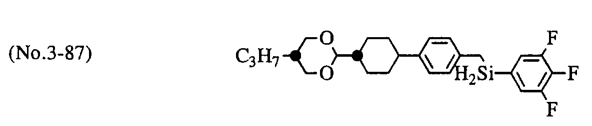

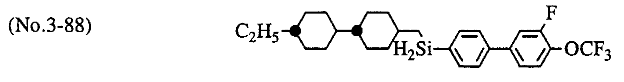

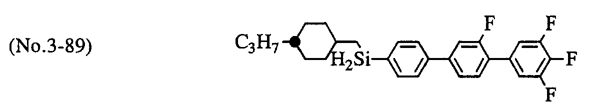

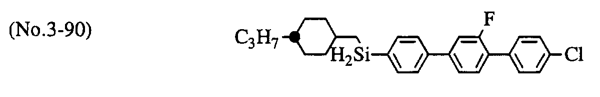

The liquid crystal composition comprising the compound of the present invention as a component is illustrated by the following Examples (Use Examples) in which most of the components (compounds) are designated in accordance with the abbreviated notation shown in the following Table 1. In the following Examples, % indicating the content of the component is by weight, unless otherwise stated. The components which have possible isomers of cis-trans forms means only trans forms. The characteristic data of the liquid crystal composition are shown by NI (transition temperature of nematic-isotropic liquid or a clearing point), η (viscosity measured at 20.0°C), Δn (optical anisotropy measured at 25.0°C), Δ ε (dielectric anisotropy measured at 25.0°C), Vth (threshold voltage measured at 25.0°C) and pitch (measured at 25.0°C).

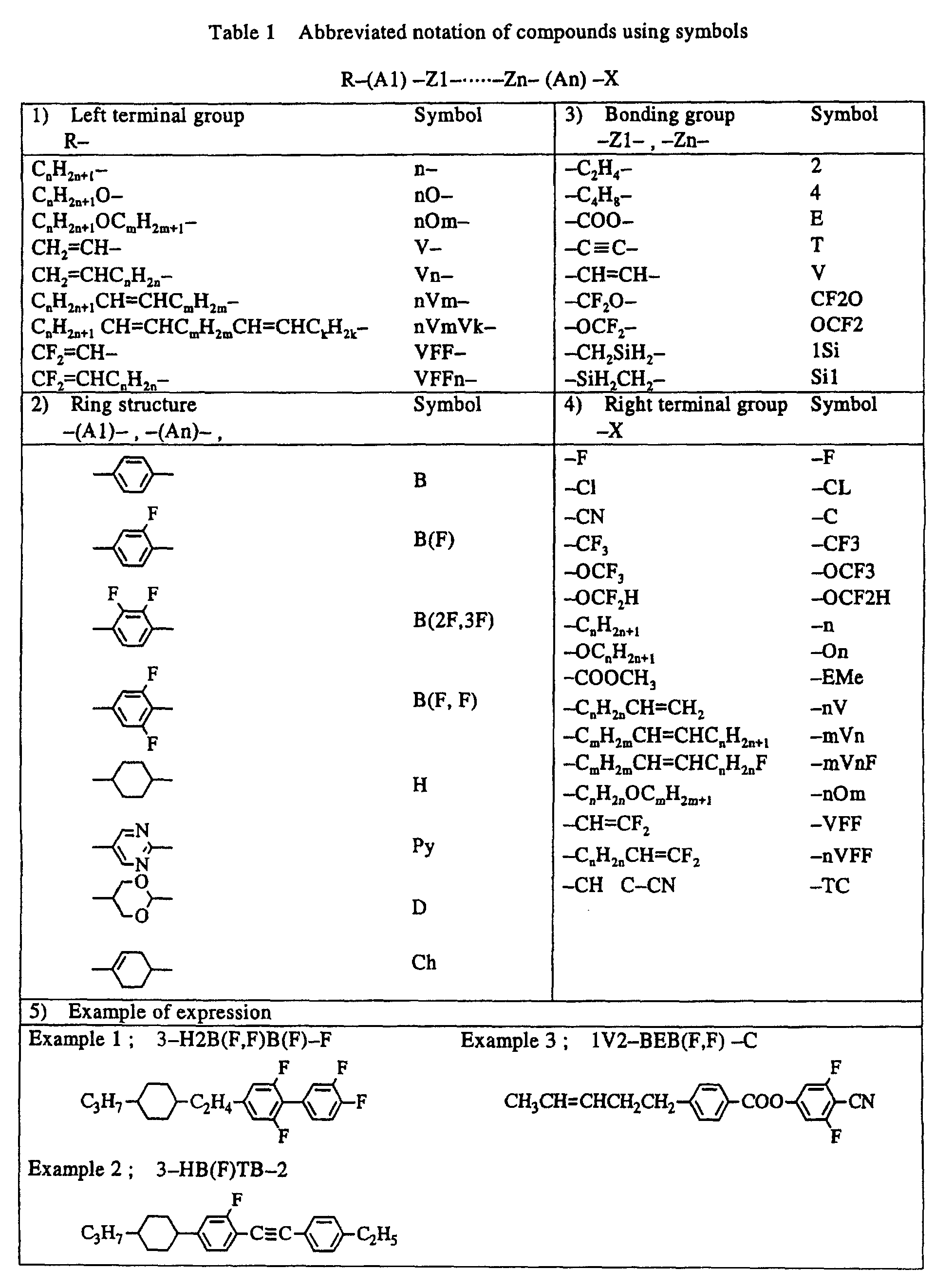

### Example 5 (Use Example 1)

A liquid crystal composition was prepared with the following components.

### First component:

| | |
|---|---|
| 5-H1SiB (F) -OCF3 | 5. 0% |

### Other components:

| | |
|---|---|
| 1V2-BEB (F, F)-C | 5. 0% |
| 3-HB-C | 20. 0% |
| 1-BTB-3 | 5. 0% |
| 2-BTB-1 | 10. 0% |
| 3-HH-4 | 11. 0% |
| 3-HHB-1 | 11. 0% |
| 3-HHB-3 | 9. 0% |
| 3-H2BTB-2 | 4. 0% |
| 3-H2BTB-3 | 4. 0% |
| 3-H2BTB-4 | 4. 0% |
| 3-HB(F)TB-2 | 6. 0% |
| 3-HB(F)TB-3 | 6. 0% |

The characteristics of the composition were measured as shown below.
NI = 83.3 (°C)
η = 12.7 (mPa·s)
△ n = 0.155
△ ε = 6.5
V t h = 2.21 (V)

0.8 part of the optically active compound represented by the formula (Op-1) was added to 100 parts of the above liquid composition to prepare the second composition. The pitch of the second composition was measured to be 10.7 *µ*m.

### Example 6 (Use Example 2)

A liquid crystal composition was prepared with the following components.

### First component:

| | |
|---|---|
| 3-HH1SiB(F, F)-F | 5. 0% |

### Other components:

| | |
|---|---|
| 3O1-BEB(F)-C | 15. 0% |
| 4O1-BEB(F)-C | 13. 0% |
| 5O1-BEB(F)-C | 13. 0% |
| 2-HHB(F)-C | 15. 0% |
| 3-HHB(F)-C | 15. 0% |
| 3-HB(F)TB-2 | 4. 0% |
| 3-HB(F)TB-3 | 4. 0% |
| 3-HB(F)TB-4 | 4. 0% |
| 3-HHB-1 | 8. 0% |
| 3-HHB-O1 | 4. 0% |

The characteristics of the composition were measured as shown below.
N I = 92.6 (°C)
η = 84.2 (mPa·s)
△ n = 0.146
△ ε = 29.4
V t h = 0.90 (V)

### Example 7 (Use Example 3)

A liquid crystal composition was prepared with the following components.

### First component:

| | |
|---|---|
| 3-HSi1B(F,F)-C | 4.0% |

### Other components:

| | |
|---|---|
| 5-PyB-F | 4.0% |
| 3-PyB(F)-F | 4.0% |
| 2-BB-C | 5.0% |
| 5-BB-C | 5.0% |
| 2-PyB-2 | 2.0% |
| 3-PyB-2 | 2.0% |
| 4-PyB-2 | 2.0% |
| 6-PyB-O5 | 3.0% |
| 6-PyB-O6 | 3.0% |
| 6-PyB-O7 | 3.0% |
| 6-PyB-O8 | 3.0% |
| 3-PyBB-F | 6.0% |
| 4-PyBB-F | 6.0% |
| 5-PyBB-F | 6.0% |
| 3-HHB-1 | 6.0% |
| 3-HHB-3 | 8.0% |
| 2-H2BTB-2 | 4.0% |
| 2-H2BTB-3 | 4.0% |
| 2-H2BTB-4 | 5.0% |
| 3-H2BTB-2 | 5.0% |
| 3-H2BTB-3 | 5.0% |
| 3-H2BTB-4 | 5.0% |

The characteristics of the composition were measured as shown below.
NI = 89.2 (°C)
η = 35.5 (mPa·s)
△n = 0.196
△ε = 7.2
Vth = 1.84 (V)

### Example 8 (Use Example 4)

A liquid crystal composition was prepared with the following components.

### First component:

| | |
|---|---|
| 3-HISiB(F, F)-C | 10.0% |

### Other components:

| | |
|---|---|
| 3-GB-C | 10.0% |
| 2-BEB-C | 12.0% |
| 3-BEB-C | 4.0% |
| 3-PyB(F)-F | 6.0% |
| 3-HEB-O4 | 8.0% |
| 4-HEB-O2 | 6.0% |
| 5-HEB-O1 | 6.0% |
| 3-HEB-O2 | 5.0% |
| 5-HEB-O2 | 4.0% |
| 5-HEB-5 | 5.0% |
| 4-HEB-5 | 5.0% |
| 1O-BEB-2 | 4.0% |
| 3-HHB-1 | 6.0% |
| 3-HHEBB-C | 3.0% |
| 3-HBEBB-C | 3.0% |
| 5-HBEBB-C | 3.0% |

### Example 9 (Use Example 5)

A liquid crystal composition was prepared with the following components.

### First component:

| | |
|---|---|
| 3-HH1SiB(F)-OCF3 | 5.0% |
| 4-HH1SiB(F)-OCF3 | 5.0% |
| 5-HH1SiB(F)-OCF3 | 5.0% |

### Other components:

| | |
|---|---|
| 3-HB-C | 3.0% |
| 7-HB-C | 3.0% |
| 1O1-HB-C | 10.0% |
| 3-HB(F)-C | 10.0% |
| 2-PyB-2 | 2.0% |
| 3-PyB-2 | 2.0% |
| 4-PyB-2 | 2.0% |
| 1O1-HH-3 | 7.0% |
| 2-BTB-O1 | 7.0% |
| 3-HHB-1 | 7.0% |
| 3-HHB-F | 4.0% |
| 3-HHB-O1 | 4.0% |
| 3-HHB-3 | 8.0% |
| 3-H2BTB-2 | 3.0% |
| 3-H2BTB-3 | 3.0% |
| 2-PyBH-3 | 4.0% |
| 3-PyBH-3 | 3.0% |
| 3-PyBB-2 | 3.0% |

The characteristics of the composition were measured as shown below.
NI = 78.2 (°C)
η = 18.2 (mPa·s)
△ n = 0.129
△ ε = 7.3
Vth = 1.85 (V)

### Example 10 (Use Example 6)

A liquid crystal composition was prepared with the following components.

### First component:

| | |
|---|---|
| 5-HSi1B(F)-OCF3 | 5.0% |

### Other components:

| | |
|---|---|
| 3-BEB(F)-C | 4.0% |
| 4-BEB(F)-C | 12.0% |
| 1V2-BEB(F, F)-C | 10.0% |
| 3-HH-EMe | 10.0% |
| 3-HB-O2 | 18.0% |
| 7-HEB-F | 2.0% |
| 3-HHEB-F | 2.0% |
| 5-HHEB-F | 2.0% |
| 3-HBEB-F | 4.0% |
| 2O1-HBEB(F)-C | 2.0% |
| 3-HB(F)EB(F)-C | 2.0% |
| 3-HBEB(F,F)-C | 2.0% |
| 3-HHB-F | 4.0% |
| 3-HHB-O1 | 4.0% |
| 3-HHB-3 | 13.0% |
| 3-HEBEB-F | 2.0% |
| 3-HEBEB-1 | 2.0% |

The characteristics of the composition were measured as shown below.
NI = 72.1 (°C)
η = 32.4 (mPa·s)
△ n = 0.111
△ ε = 22.0
Vth = 0.98 (V)

### Example 11 (Use Example 7)

A liquid crystal composition was prepared with the following components.

### First component:

| | |
|---|---|
| 3-BSi1B(F)B(F,F)-F | 5.0% |

### Other components:

| | |
|---|---|
| 3-BEB(F)-C | 4.0% |
| 4-BEB(F)-C | 12.0% |
| 1V2-BEB(F,F)-C | 16.0% |
| 3-HB-O2 | 10.0% |
| 3-HH-4 | 3.0% |
| 3-HHB-F | 3.0% |
| 3-HHB-1 | 8.0% |
| 3-HHB-O1 | 4.0% |
| 3-HBEB-F | 4.0% |
| 3-HHEB-F | 7.0% |
| 5-HHEB-F | 7.0% |
| 3-H2BTB-2 | 4.0% |
| 3-H2BTB-3 | 4.0% |
| 3-H2BTB-4 | 4.0% |
| 3-HB(F)TB-2 | 5.0% |

The characteristics of the composition were measured as shown below.
NI = 87.9 (°C)
η = 38.9 (mPa·s)
△ n = 0.142
△ ε = 27.9
Vth = 1.06 (V)

### Example 12 (Use Example 8)

A liquid crystal composition was prepared with the following components.

### First component:

| | |
|---|---|
| 3-HH1SiB(F)-OCF3 | 5.0% |
| 4-HH1SiB(F)-OCF3 | 5.0% |
| 5-HH1SiB(F)-OCF3 | 5.0% |
| 3-HSi1B(F)B(F,F)-F | 5.0% |
| 5-HSi1B(F)B(F,F)-F | 5.0% |

### Other components:

| | |
|---|---|
| 2-BEB-C | 12.0% |
| 3-BEB-C | 4.0% |
| 4-BEB-C | 6.0% |
| 3-HB-C | 3.0% |
| 3-HEB-O4 | 12.0% |
| 4-HEB-O2 | 8.0% |
| 5-HEB-O1 | 8.0% |
| 3-HEB-O2 | 6.0% |
| 5-HEB-O2 | 5.0% |
| 3-HHB-1 | 7.0% |
| 3-HHB-O1 | 4.0% |

The characteristics of the composition were measured as shown below.
NI = 55.6 (°C)
η = 24.1 (mPa·s)
△n = 0.099
△ ε = 9.6
Vth = 1.38 (V)

### Example 13 (Use Example 9)

A liquid crystal composition was prepared with the following components.

### First component:

| | |
|---|---|
| 5-H1SiB(F,F)B(F)-F | 7.0% |

### Other components:

| | |
|---|---|
| 2-BEB-C | 10.0% |
| 5-BB-C | 12.0% |
| 1-BTB-3 | 7.0% |
| 2-BTB-1 | 10.0% |
| 1O-BEB-2 | 10.0% |
| 1O-BEB-5 | 12.0% |
| 2-HHB-1 | 4.0% |
| 3-HHB-F | 4.0% |
| 3-HHB-1 | 7.0% |
| 3-HHB-O1 | 4.0% |
| 3-HHB-3 | 13.0% |

The characteristics of the composition were measured as shown below.
NI = 63.2 (°C)
η = 19.5 (mPa·s)
△ n = 0.154
△ ε = 6.6
Vth = 1.76 (V)

### Example 14 (Use Example 10)

A liquid crystal composition was prepared with the following components.

### First component:

| | |
|---|---|
| 3-BSi1B(F)B(F,F)-F | 6.0% |
| 5-BSi1B(F)B(F,F)-F | 6.0% |

### Other components:

| | |
|---|---|
| 2-HB-C | 5.0% |
| 3-HB-O2 | 15.0% |
| 2-BTB-1 | 3.0% |
| 3-HHB-1 | 8.0% |
| 3-HHB-F | 4.0% |
| 3-HHB-O1 | 5.0% |
| 3-HHB-3 | 14.0% |
| 3-HHEB-F | 4.0% |
| 5-HHEB-F | 4.0% |
| 2-HHB(F)-F | 7.0% |
| 3-HHB(F)-F | 7.0% |
| 5-HHB(F)-F | 7.0% |
| 3-HHB(F,F)-F | 5.0% |

The characteristics of the composition were measured as shown below.
N I = 93.9 (°C)
η = 20.0 (mPa·s)
Δ n = 0.101
△ ε = 5.6
Vth = 2.29 (V)

### Example 15 (Use Example 11)

A liquid crystal composition was prepared with the following components.

### First component:

| | |
|---|---|
| 3-H1SiHB(F,F)-F | 3.0% |

### Other components:

| | |
|---|---|
| 3-BEB(F)-C | 8.0% |
| 3-HB-C | 5.0% |
| V-HB-C | 8.0% |
| 1V-HB-C | 8.0% |
| 3-HB-O2 | 3.0% |
| 3-HH-2V | 14.0% |
| 3-HH-2V1 | 7.0% |
| V2-HHB-1 | 15.0% |
| 3-HHB-1 | 5.0% |
| 3-HHEB-F | 7.0% |
| 3-H2BTB-2 | 6.0% |
| 3-H2BTB-3 | 6.0% |
| 3-H2BTB-4 | 5.0% |

### Example 16 (Use Example 12)

A liquid crystal composition was prepared with the following components.

### First component:

| | |
|---|---|
| 3-HSi1B(F)B(F,F)-F | 5.0% |
| 5-HSi1B(F)B(F,F)-F | 5.0% |
| 3-BSi1B(F)B(F,F)-F | 5.0% |
| 5-BSi1B(F)B(F,F)-F | 5.0% |

### Other components:

| | |
|---|---|
| V2-HB-C | 12.0% |
| 1V2-HB-C | 1 2.0% |
| 3-HB-C | 4.0% |
| 3-HB (F) -C | 5.0% |
| 2-BTB-1 | 2.0% |
| 3-HH-4 | 8.0% |
| 3-HH-VFF | 6.0% |
| 2-HHB-C | 3.0% |
| 3-HHB-C | 6.0% |
| 3-HB(F)TB-2 | 8.0% |
| 3-H2BTB-2 | 5.0% |
| 3-H2BTB-3 | 5.0% |
| 3-H2BTB-4 | 4.0% |

The characteristics of the composition were measured as shown below.
NI = 76.1 (°C)
η = 19.8 (mPa·s)
Δn = 0.151
Δε = 10.0
Vth = 1.87 (V)

### Example 17 (Use Example 13)

A liquid crystal composition was prepared with the following components.

### First component:

| | |
|---|---|
| 3-GHB1SiB(F,F)-F | 3.0% |

### Other components:

| | |
|---|---|
| 5-BEB(F)-C | 5.0% |
| V-HB-C | 11.0% |
| 5-PyB-C | 6.0% |
| 4-BB-3 | 11.0% |
| 3-HH-2V | 10.0% |
| 5-HH-V | 11.0% |
| V-HHB-1 | 7.0% |
| V2-HHB-1 | 15.0% |
| 3-HHB-1 | 6.0% |
| 1V2-HBB-2 | 10.0% |
| 3-HHEBH-3 | 5.0% |

### Example 18 (Use Example 14)

A liquid crystal composition was prepared with the following components.

### First component:

| | |
|---|---|
| 2-HH1SiBB(F)-OCF3 | 4.0% |

### Other components:

| | |
|---|---|
| 1V2-BEB(F,F)-C | 8.0% |
| 3-HB-C | 10.0% |
| V2V-HB-C | 14.0% |
| V2V-HH-3 | 19.0% |
| 3-HB-O2 | 4.0% |
| 3-HHB-1 | 10.0% |
| 3-HHB-3 | 15.0% |
| 3-HB (F) TB-2 | 4.0% |
| 3-HB (F) TB-3 | 4.0% |
| 3-H2BTB-2 | 4.0% |
| 3-H2BTB-3 | 4.0% |

### Example 19 (Use Example 15)

A liquid crystal composition was prepared with the following components.

### First component:

| | |
|---|---|
| 3-H1SiBB(F)B(F,F)-F | 3.0% |

### Other components:

| | |
|---|---|
| V2-HB-TC | 10.0% |
| 3-HB-TC | 10.0% |
| 3-HB-C | 7.0% |
| 5-HB-C | 7.0% |
| 5-BB-C | 3.0% |
| 2-BTB-1 | 10.0% |
| 2-BTB-O1 | 5.0% |
| 3-HH-4 | 5.0% |
| 3-HHB-1 | 10.0% |
| 3-HHB-3 | 11.0% |
| 3-H2BTB-2 | 3.0% |
| 3-H2BTB-3 | 3.0% |
| 3-HB(F)TB-2 | 3.0% |
| 5-BTB(F)TB-3 | 10.0% |

### Example 20 (Use Example 16)

A liquid crystal composition was prepared with the following components.

### First component:

| | |
|---|---|
| 3-H1SiBB(F)B-C1 | 3.0% |

### Other components:

| | |
|---|---|
| 1V2-BEB (F, F)-C | 6.0% |
| 3-HB-C | 5.0% |
| 2-BTB-1 | 10.0% |
| 5-HH-VFF | 30.0% |
| 1-BHH-VFF | 8.0% |
| 1-BHH-2VFF | 11.0% |
| 3-H2BTB-2 | 5.0% |
| 3-H2BTB-3 | 4.0% |
| 3-H2BTB-4 | 4.0% |
| 3-HHB-1 | 4.0% |

### Example 21 (Use Example 17)

A liquid crystal composition was prepared with the following components.

### First component:

| | |
|---|---|
| 3-H1SiB(F)B(F,F)-F | 6.0% |
| 5-H1SiB(F)B(F,F)-F | 6.0% |

### Other components:

| | |
|---|---|
| 5-HBCF2OB(F,F)-C | 3.0% |
| 3-HB(F,F)CF2OB(F,F)-C | 3.0% |
| 3-HB-C | 6.0% |
| 2-BTB-1 | 10.0% |
| 5-HH-VFF | 30.0% |
| 1-BHH-VFF | 8.0% |
| 1-BHH-2VFF | 11.0% |
| 3-H2BTB-2 | 5.0% |
| 3-H2BTB-3 | 4.0% |
| 3-H2BTB-4 | 4.0% |
| 3-HHB-1 | 4.0% |

The characteristics of the composition were measured as shown below.
NI = 77.0 (°C)
η = 12.8 (mPa·s)
△n = 0.123
Δε = 4.9
Vth = 2.44 (V)

### Example 22 (Use Example 18)

A liquid crystal composition was prepared with the following components.

### First component:

| | |
|---|---|
| 3-HH1SiB(F)-OCF3 | 8.0% |
| 5-HH1SiB(F)-OCF3 | 8.0% |

### Other components:

| | |
|---|---|
| 2-HHB(F)-F | 7.0% |
| 3-HHB(F)-F | 17.0% |
| 2-H2HB(F)-F | 0.0% |
| 3-H2HB(F)-F | 5.0% |
| 5-H2HB(F)-F | 10.0% |
| 2-HBB(F)-F | 6.0% |
| 3-HBB(F)-F | 6.0% |
| 5-HBB(F)-F | 13.0% |

The characteristics of the composition were measured as shown below.
NI = 88.2 (°C)
η = 25.2 (mPa·s)
Δn = 0.089
△ε = 5.3
Vth = 2.15 (V)

0.3 part of the optically active compound represented by the formula (Op-8) was added to 100 parts of the above liquid composition to prepare the second composition. The pitch of the second composition was measured to be 78.8ìm.

### Example 23 (Use Example 19)

A liquid crystal composition was prepared with the following components.

### First component:

| | |
|---|---|
| 3-B1SiB(F)B(F,F)-F | 5.0% |
| 5-B1SiB(F)B(F,F)-F | 5.0% |

### Other components:

| | |
|---|---|
| 7-HB(F,F)-F | 3.0% |
| 3-HB-O2 | 7.0% |
| 2-HHB(F)-F | 10.0% |
| 3-HHB(F)-F | 10.0% |
| 2-HBB(F)-F | 9.0% |
| 3-HBB(F)-F | 9.0% |
| 5-HBB(F)-F | 16.0% |
| 2-HBB-F | 4.0% |
| 3-HBB-F | 4.0% |
| 5-HBB-F | 3.0% |
| 3-HBB(F,F)-F | 5.0% |
| 5-HBB(F,F)-F | 10.0% |

The characteristics of the composition were measured as shown below.
NI = 72.7 (°C)
η = 26.3 (mPa·s)
△n = 0,121
△ε = 7.3
Vth = 1.74 (V)

### Example 24 (Use Example 20)

A liquid crystal composition was prepared with the following components.

### First component:

| | |
|---|---|
| 5-H1SiB(F)-OCF3 | 3.0% |
| 3-H1SiB(F,F)-C | 3.0% |
| 3-HSi1B(F,F)-C | 3.0% |

### Other components:

| | |
|---|---|
| 5-HB-CL | 6.0% |
| 3-HH-4 | 12.0% |
| 3-HH-5 | 4.0% |
| 3-HHB-F | 4.0% |
| 3-HHB-CL | 3.0% |
| 4-HHB-CL | 4.0% |
| 3-HHB(F)-F | 10.0% |
| 4-HHB(F)-F | 9.0% |
| 7-HHB(F)-F | 8.0% |
| 5-HBB(F)-F | 4.0% |
| 5-HBBH-1O1 | 3.0% |
| 3-HHBB(F,F)-F | 2.0% |
| 4-HHBB(F,F)-F | 3.0% |
| 5-HHBB(F,F)-F | 3.0% |
| 3-HH2BB(F,F)-F | 3.0% |
| 4-HH2BB(F,F)-F | 3.0% |

### Example 25 (Use Example 21)

A liquid crystal composition was prepared with the following components.

### First component:

| | |
|---|---|
| 3-H1SiB(F)B(F,F)-F | 5.0% |
| 5-H1SiB(F)B(F,F)-F | 5.0% |
| 3-B1SiB(F)B(F,F)-F | 5.0% |
| 5-B1SiB(F)B(F,F)-F | 5.0% |

### Other components:

| | |
|---|---|
| 3-HHB(F,F)-F | 9.0% |
| 3-H2HB(F,F)-F | 8.0% |
| 4-H2HB(F,F)-F | 8.0% |
| 5-H2HB(F,F)-F | 8.0% |
| 3-HBB(F,F)-F | 21.0% |
| 3-H2BB(F,F)-F | 10.0% |
| 5-HHBB(F,F)-F | 3.0% |
| 5-HHEBB-F | 2.0% |
| 3-HH2BB(F,F)-F | 3.0% |
| 4-HBBH-1O1 | 4.0% |
| 5-HBBH-1O1 | 4.0% |

The characteristics of the composition were measured as shown below.
NI = 83.4 (°C)
η = 33.3 (mPa·s)
Δn=0.115
Δε = 10.5
Vth = 1.63 (V)

0.25 part of the optically active compound represented by the formula (Op-5) was added to 100 parts of the above liquid composition to prepare the second composition. The pitch of the second composition was measured to be 64.1ìm.

### Example 26 (Use Example 22)

A liquid crystal composition was prepared with the following components.

### First component:

| | |
|---|---|
| 3-HH1SiB(F,F)-F | 5.0% |
| 3-HHSi1B(F,F)-F | 5.0% |

### Other components:

| | |
|---|---|
| 5-HB-F | 12.0% |
| 6-HB-F | 9.0% |
| 7-HB-F | 7.0% |
| 2-HHB-OCF3 | 7.0% |
| 3-HHB-OCF3 | 7.0% |
| 4-HHB-OCF3 | 7.0% |
| 5-HHB-OCF3 | 5.0% |
| 3-HH2B-OCF3 | 4.0% |
| 5-HH2B-OCF3 | 4.0% |
| 3-HHB(F,F)-OCF3 | 5.0% |
| 3-HBB(F)-F | 10.0% |
| 3-HH2B(F)-F | 3.0% |
| 3-HB(F)BH-3 | 3.0% |
| 5-HBBH-3 | 3.0% |
| 3-HHB(F,F)-OCF2H | 4.0% |

The characteristics of the composition were measured as shown below.
NI = 78.8 (°C)
η = 13.9 (mPa·s)
△n = 0.084
△ε = 4.4
Vth = 2.43 (V)

### Example 27 (Use Example 23)

A liquid crystal composition was prepared with the following components.

### First component:

| | |
|---|---|
| 2-HH1SiBB(F)-OCF3 | 3.0% |
| 3-H1SiBB(F)B(F,F)-F | 3.0% |

### Other components:

| | |
|---|---|
| 2-HHB(F)-F | 3.0% |
| 2-HBB(F)-F | 7.0% |
| 3-HBB(F)-F | 7.0% |
| 4-HBB(F)-F | 2.0% |
| 5-HBB(F)-F | 15.0% |
| 2-H2BB(F)-F | 10.0% |
| 3-H2BB(F)-F | 10.0% |
| 3-HBB(F,F)-F | 22.0% |
| 2-HHB(F,F)-F | 5.0% |
| 3-HHB(F,F)-F | 5.0% |
| 4-HHB(F,F)-F | 5.0% |
| 3-HHB-F | 3.0% |

### Example 28 (Use Example 24)

A liquid crystal composition was prepared with the following components.

### First component:

| | |
|---|---|
| 3-H1SiBB(F)B-C1 | 5.0% |

### Other components:

| | |
|---|---|
| 5-HB-CL | 11.0% |
| 3-HH-4 | 8.0% |
| 3-HBB(F,F)-F | 20.0% |
| 5-HBB(F,F)-F | 10.0% |
| 3-HHB(F,F)-F | 8.0% |
| 3-HHEB(F,F)-F | 10.0% |
| 4-HHEB(F,F)-F | 3.0% |
| 5-HHEB(F,F)-F | 3.0% |
| 2-HBEB(F,F)-F | 3.0% |
| 3-HBEB(F,F)-F | 5.0% |
| 5-HBEB(F,F)-F | 3.0% |
| 3-HHBB(F,F)-F | 6.0% |
| 3-HHB-1 | 5.0% |

### Example 29 (Use Example 25)

A liquid crystal composition was prepared with the following components.

### First component:

| | |
|---|---|
| 3-GHB1SiB(F,F)-F | 4.0% |

### Other components:

| | |
|---|---|
| 7-HB(F)-F | 6.0% |
| 5-H2B(F)-F | 6.0% |
| 3-HB-O2 | 4.0% |
| 3-HH-4 | 12.0% |
| 2-HHB(F)-F | 11.0% |
| 3-HHB(F)-F | 11.0% |
| 5-HHB(F)-F | 11.0% |
| 2-HBB(F)-F | 2.0% |
| 3-HBB(F)-F | 2.0% |
| 3-HBB(F,F)-F | 3.0% |
| 2-HHBB(F,F)-F | 4.0% |
| 3-HHBB(F,F)-F | 5.0% |
| 3-HHEB-F | 4.0% |
| 5-HHEB-F | 4.0% |
| 3-HHB-1 | 7.0% |
| 3-HHB-3 | 4.0% |

### Example 30 (Use Example 26)

A liquid crystal composition was prepared with the following components.

### First component:

| | |
|---|---|
| 3-HH1SiB(F)-OCF3 | 8.0% |
| 5-HH1SiB(F)-OCF3 | 8.0% |
| 3-H1SiB(F)B(F,F)-F | 8.0% |
| 5-H1SiB(F)B(F,F)-F | 8.0% |

### Other components:

| | |
|---|---|
| 3-HH-4 | 4.0% |
| 3-H2HB(F,F)-F | 10.0% |
| 4-H2HB(F,F)-F | 10.0% |
| 5-H2HB(F,F)-F | 8.0% |
| 3-HBB(F,F)-F | 33.0% |
| 3-HHBB(F,F)-F | 3.0% |

The characteristics of the composition were measured as shown below.
NI = 50.0 (°C)
n = 25.0 (mPa·s)
Δn = 0.091
△ε = 8.9
Vth = 1.44 (V)

### Example 31 (Use Example 27)

A liquid crystal composition was prepared with the following components.

### First component:

| | |
|---|---|
| 4-HH1SiB (F)-OCF3 | 5.0% |

### Other components:

| | |
|---|---|
| 7-HB(F,F)-F | 5.0% |
| 3-H2HB(F,F)-F | 12.0% |
| 4-H2HB(F,F)-F | 10.0% |
| 3-HHB(F,F)-F | 10.0% |
| 3-HBB(F,F)-F | 10.0% |
| 3-HHEB(F,F)-F | 10.0% |
| 4-HHEB(F,F)-F | 3.0% |
| 5-HHEB(F,F)-F | 3.0% |
| 2-HBEB(F,F)-F | 3.0% |
| 3-HBEB(F,F)-F | 5.0% |
| 5-HBEB(F,F)-F | 3.0% |
| 3-HGB(F,F)-F | 15.0% |
| 3-HHBB(F,F)-F | 6.0% |

The characteristics of the composition were measured as shown below.
NI = 73.6 (°C)
η = 33.6 (mPa·s)
△n = 0.084
△ε = 12.9
Vth = 1.41 (V)

### Example 32 (Use Example 28)

A liquid crystal composition was prepared with the following components.

### First component:

| | |
|---|---|
| 5-H1SiB(F,F)B(F)-F | 5.0% |

### Other components:

| | |
|---|---|
| 5-H4HB(F,F)-F | 7.0% |
| 5-H4HB-OCF3 | 15.0% |
| 3-H4HB(F,F)-CF3 | 8.0% |
| 5-H4HB(F,F)-CF3 | 10.0% |
| 3-HB-CL | 6.0% |
| 5-HB-CL | 4.0% |
| 2-H2BB(F)-F | 5.0% |
| 3-H2BB(F)-F | 10.0% |
| 5-H2HB(F,F)-F | 5.0% |
| 3-HHB-OCF3 | 5.0% |
| 3-H2HB-OCF3 | 5.0% |
| V-HHB(F)-F | 5.0% |
| 3-HHB(F)-F | 5.0% |
| 3-HBEB(F,F)-F | 5.0% |

The characteristics of the composition were measured as shown below.
NI = 63.4 (°C)
η = 25.4 (mPa·s)
Δn = 0.097
Δε = 8.6
Vth = 1.71 (V)

### Example 33 (Use Example 29)

A liquid crystal composition was prepared with the following components.

### First component:

| | |
|---|---|
| 3-H1SiHB(F,F)-F | 7.0% |

### Other components:

| | |
|---|---|
| 5-HB-CL | 17.0% |
| 7-HB(F,F)-F | 3.0% |
| 3-HH- 4 | 10.0% |
| 3 -HH-5 | 5.0% |
| 3-HB-O2 | 15.0% |
| 3-H2HB(F,F)-F | 5.0% |
| 4-H2HB(F,F)-F | 5.0% |
| 3-HHB(F,F)-F | 6.0% |
| 2-HHB(F)-F | 7.0% |
| 3-HHB(F)-F | 7.0% |
| 3-HHB-1 | 8.0% |
| 3-HHB-O1 | 5.0% |

### Example 34 (Use Example 30)

A liquid crystal composition was prepared with the following components.

### First component:

| | |
|---|---|
| 3-HHSi1B(F,F)-F | 9.0% |

### Other components:

| | |
|---|---|
| 5-HB-CL | 4.0% |
| 4-HHB(F)-F | 10.0% |
| 7-HHB(F)-F | 9.0% |
| 3-HHB(F,F)-F | 8.0% |
| 4-HHB(F,F)-F | 3.0% |
| 3-H2HB(F,F)-F | 12.0% |
| 3-HBB(F,F)-F | 22.0% |
| 2-HHBB(F,F)-F | 6.0% |
| 3-GHB(F,F)-F | 3.0% |
| 4-GHB(F,F)-F | 8.0% |
| 5-GHB(F,F)-F | 6.0% |

The characteristics of the composition were measured as shown below.
NI = 72.0 (°C)
η = 31.8 (mPa·s)
△n = 0.088
△ε = 8.8
Vth = 1.64 (V)

### Example 35 (Use Example 31)

A liquid crystal composition was prepared with the following components.

### First component:

| | |
|---|---|
| 5-HSi1B(F)-OCF3 | 7.0% |

### Other components:

| | |
|---|---|
| 2-HHB(F)-F | 7.0% |
| 3-HHB(F)-F | 8.0% |
| 3-HHB(F,F)-F | 8.0% |
| 3-HBB(F,F)-F | 21.0% |
| 3-H2HB(F,F)-F | 10.0% |
| 3-HHEB(F,F)-F | 10.0% |
| 4-HHEB(F,F)-F | 3.0% |
| 2-HBEB(F,F)-F | 2.0% |
| 3-HBEB(F,F)-F | 3.0% |
| 3-GHB(F,F)-F | 3.0% |
| 4-GHB(F,F)-F | 7.0% |
| 5-GHB(F,F)-F | 7.0% |
| 3-HHBB(F,F)-F | 4.0% |

The characteristics of the composition were measured as shown below.
NI = 64.2 (°C)
η = 34.7 (mPa s)
Δn = 0.084
△ε = 10.3
Vth = 1.50 (V)

### Example 36 (Use Example 32)

A liquid crystal composition was prepared with the following components.

### First component:

| | |
|---|---|
| 4-HH1SiB(F)-OCF3 | 5.0% |

### Other components:

| | |
|---|---|
| 7-HB(F)-F | 7.0% |
| 5-HB-CL | 3.0% |
| 3-HH-4 | 9.0% |
| 3-HH-EMe | 23.0% |
| 3-HHEB(F,F)-F | 10.0% |
| 3-HHEB-F | 8.0% |
| 5-HHEB-F | 8.0% |
| 4-HGB(F,F)- F | 5.0% |
| 5-HGB(F,F)-F | 6.0% |
| 2-H2GB(F,F)-F | 4.0% |
| 3-H2GB(F,F)-F | 5.0% |
| 5-GHB(F,F)-F | 7.0% |

The characteristics of the composition were measured as shown below.
NI = 76.3 (°C)
η = 18.9 (mPa·s)
△n = 0.063
Δε = 5.5
Vth = 2.14 (V)

### Example 37 (Use Example 33)

A liquid crystal composition was prepared with the following components.

### First component:

| | |
|---|---|
| 3-HH1SiB(F)-OCF3 | 10.0% |
| 4-HH1SiB(F)-OCF3 | 10.0% |
| 5-HH1SiB(F)-OCF3 | 10.0% |

### Other components:

| | |
|---|---|
| 3-H2HB(F,F)-F | 5.0% |
| 5-H2HB(F,F)-F | 5.0% |
| 3-HBB(F,F)-F | 30.0% |
| 5-HBB(F)B-2 | 10.0% |
| 5-HBB(F)B-3 | 10.0% |
| 3-BB(F)B(F,F)-F | 5.0% |
| 5-B2B(F,F)B(F)-F | 5.0% |

The characteristics of the composition were measured as shown below.
NI = 98.7 (°C)
η = 44.9 (mPa·s)
Δn = 0.133
Δε = 8.9
Vth = 1.84 (V)

### Example 38 (Use Example 34)

A liquid crystal composition was prepared with the following components.

### First component:

| | |
|---|---|
| 3-H1SiB(F,F)-C | 3.0% |

### Other components:

| | |
|---|---|
| 3-HB(F,F)CF2OB(F,F)-F | 11.0% |
| 5-HB(F,F)CF2OB(F,F)-F | 11.0% |
| 5-HB-CL | 7.0% |
| 3-HH-4 | 14.0% |
| 2-HH-5 | 4.0% |
| 3-HHB-1 | 4.0% |
| 3-HHEB-F | 6.0% |
| 5-HHEB-F | 6.0% |
| 3-HHB(F,F)-F | 6.0% |
| 3-HHEB(F,F)-F | 8.0% |
| 4-HHEB(F,F)-F | 3.0% |
| 5-HHEB(F,F)-F | 2.0% |
| 2-HBEB(F,F)-F | 3.0% |
| 3-HBEB(F,F)-F | 3,0% |
| 5-HBEB(F,F)-F | 3.0% |
| 2-HHBB(F,F)-F | 3.0% |
| 3-HHBB(F,F)-F | 3.0% |

### Example 39 (Use Example 35)

A liquid crystal composition was prepared with the following components.

### First component:

| | |
|---|---|
| 3-H1SiB(F)B(F,F)-F | 5.0% |

### Other components:

| | |
|---|---|
| 3-BB(F,F)CF2OB(F,F)-F | 35.0% |
| 3-HH-4 | 8.0% |
| 3-HHB(F,F)-F | 10.0% |
| 3-H2HB(F,F)-F | 9.0% |
| 3-HBB(F,F)-F | 10.0% |
| 2-HHBB(F,F)-F | 3.0% |
| 3-HHBB(F,F)-F | 3.0% |
| 3-HH2BB(F,F)-F | 4.0% |
| 3-HHB-1 | 6.0% |
| 5-HBBH-1O1 | 7.0% |

The characteristics of the composition were measured as shown below.
NI = 77.1 (°C)
η = 28.2 (mPa·s)
Δn = 0.114
Δε = 12.5
Vth = 1.38 (V)

### Example 40 (Use Example 36)

A liquid crystal composition was prepared with the following components.

### First component:

| | |
|---|---|
| 3-HH1SiB(F)-OCF3 | 7.0% |
| 5-HH1SiB(F)-OCF3 | 7.0% |

### Other components:

| | |
|---|---|
| 3-HEB-O4 | 28.0% |
| 4-HEB-O2 | 20.0% |
| 5-HEB-O1 | 20.0% |
| 3-HEB-O2 | 18.0% |

The characteristics of the composition were measured as shown below.
NI = 70.8 (°C)
η = 18.7 (mPa·s)
Δn = 0.086

### Example 41 (Use Example 37)

A liquid crystal composition was prepared with the following components.

### First component:

| | |
|---|---|
| 5-H1SiB(F)-OCF3 | 6.0% |

### Other components:

| | |
|---|---|
| 3-HH-2 | 5.0% |
| 3-HH-O1 | 4.0% |
| 3-HH-O3 | 5.0% |
| 5-HH-O1 | 4.0% |
| 3-HB(2F,3F)-O2 | 12.0% |
| 5-HB(2F,3F)-O2 | 11.0% |
| 3-HHB(2F,3F)-O2 | 14.0% |
| 5-HHB(2F,3F)-O2 | 15.0% |
| 3-HHB(2F,3F)-2 | 24.0% |

The characteristics of the composition were measured as shown below.
NI = 75.4 (°C)
△n = 0.077
△ε = - 3.9

### Example 42 (Use Example 38)

A liquid crystal composition was prepared with the following components.

### First component:

| | |
|---|---|
| 3-H1SiB(F)B(F,F)-F | 5.0% |

### Other components:

| | |
|---|---|
| 3-HH-5 | 5.0% |
| 3-HH-O1 | 6.0% |
| 3-HH-O3 | 6.0% |
| 3-HB-O1 | 5.0% |
| 3-HB-O2 | 5.0% |
| 3-HB(2F,3F)-O2 | 10.0% |
| 5-HB(2F,3F)-O2 | 10.0% |
| 3-HHB(2F,3F)-O2 | 12.0% |
| 5-HHB(2F,3F)-O2 | 13.0% |
| 3-HHB(2F,3F)-2 | 4.0% |
| 2-HHB(2F,3F)-1 | 4.0% |
| 3-HHEH-3 | 5.0% |
| 3-HHEH-5 | 5.0% |
| 4-HHEH-3 | 5.0% |

The characteristics of the composition were measured as shown below.
NI = 81.7 (°C)
△n = 0.080
△ε = - 2.5

### Example 43 (Comparative Example)

Comparative compound (C-1) and its analogous compound (C-2) were synthesized in accordance with the method disclosed in WO 97/05144.

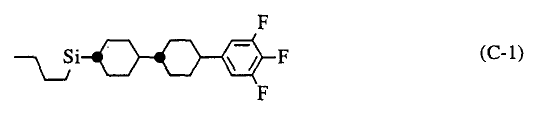

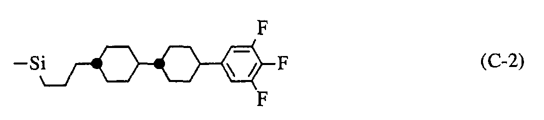

On the other hand, a nematic liquid crystal composition (A) comprising 24% of 4-(4-propylcyclohexyl) benzonitrile, 36% of 4-(4-pentylcyclohexyl)benzonitrile, 25% of 4-(4-heptyl cyclohexyl)benzonitrile and 15% of 4-(4-pentylcyclohexyl)-4'-cyanobiphenyl was prepared and measured for the liquid crystal characteristics with the following results. Nematic phase-isotropic phase transition temperature: 71.7°C, △ ε : 11.0, △ n: 0.13, Viscosity at 20°C: 27.0 mPa.s.

A nematic liquid crystal composition (B) comprising 85% by weight of the nematic liquid crystal composition (A) and 15% by weight of the above analogous compound (C-2) was prepared and measured for the liquid crystal characteristics with the following results. Nematic phase-isotropic phase transition temperature: 57.9°C, △ ε : 5.7, △ n : 0.050, Viscosity at 20°C: 62.33 mPa.s.

### Example 44

A nematic liquid crystal composition (C) comprising 85% by weight of the nematic liquid crystal composition (A) and 15% by weight of the present liquid crystal compound (Compound No. 2-2) was prepared. Nematic phase-isotropic phase transition temperature: 64.7°C, △ ε : 7.7, △ n : 0.057, Viscosity at 20°C: 18.1 mPa.s.

Further, this liquid crystal composition was allowed to stand in a freezer at -20°C for 30 days, but no precipitation of crystals and no occurrence of a nematic phase were observed.

### Example 45

A nematic liquid crystal composition (C) comprising 85% by weight of the nematic liquid crystal composition (A) and 15% by weight of the present liquid crystal compound (Compound No. 2-4) was prepared. Nematic phase-isotropic phase transition temperature: 65.6°C, △ ε : 6.3, △ n : 0.057, Viscosity at 20°C: 22.2 mPa.s.

Further, this liquid crystal composition was allowed to stand in a freezer at -20°C for 30 days, but no precipitation of crystals and no occurrence of a nematic phase were observed.

### Example 46

A nematic liquid crystal composition (C) comprising 85% by weight of the nematic liquid crystal composition (A) and 15% by weight of the present liquid crystal compound (Compound No. 1-3) was prepared. Nematic phase-isotropic phase transition temperature: 44.2°C, △ ε : 9.5, △ n: 0.114.

Further, this liquid crystal composition was allowed to stand in a freezer at -20°C for 30 days, but no precipitation of crystals and no occurrence of nematic phase were observed.

### EFFECT OF THE INVENTION

The liquid crystalline compounds of the present invention have excellent compatibility with other liquid crystal materials, high clearing points, positive dielectric anisotropy, extremely low viscosity, suitable optical anisotropy, low threshold voltage, high electrical insulation properties (high specific resistance or high voltage holding ratio), extremely small temperature dependence and improved compatibility with other liquid crystal materials. Further, they are sufficiently stable physically and chemically under the condition where the liquid crystal display device is usually used, and extremely excellent as a constitutive component for the nematic liquid crystal composition. Suitable choice of the substituents in the liquid crystal compounds of the present invention can provide new liquid crystal compounds having the desired physical properties.

Accordingly, the use of the present liquid crystalline compounds as a component for the liquid crystal composition can provide new liquid crystal compositions having extremely low threshold voltage, high voltage holding ratio, extremely low temperature dependence and excellent compatibility with other liquid crystal materials, and also it can provide excellent liquid crystal display device.

## Claims

1. A liquid crystalline compound represented by formula (1) 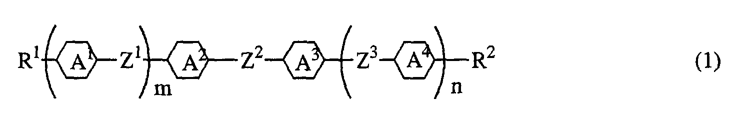 wherein rings A¹, A², A³ and A⁴ each independently represent 1,4-cyclohexylene, cyclohexene-1,4-diyl, 1,4-phenylene, pyridine-2,5-diyl, pyrimidine-2,5-diyl, 1,3-dioxane-2,5-diyl, tetrahydropyran-2,5-diyl or bicycle[1,1,1]pentane-1,3-diyl, and one or more hydrogen in these rings may be replaced by halogen or cyano; R¹ represents straight or branched C₁-C₂₀ alkyl in which any methylene may be replaced by -O-, -S-, - CO-, -CS-, -CH=CH-, -C≡C-, cyclopropane-1,2-diyl, cyclobutane-1,3-diyl or bicyclo[1,1,1]pentane-1,3-diyl, but -O- and -S- are not successive, and one or more hydrogen in R¹ may be replaced by halogen or cyano; R² represents halogen, cyano or C₁-C₁₀ alkyl in which at least one hydrogen is replaced by halogen and any methylene may be replaced by -O-, -S-, -CO-, -CS-, -CH=CH-, -C≡C-, -CH=CF- or -CF=CF-, but -O- and -S- are not successive; Z¹, Z² and Z³ each independently represent a single bond, -SiH₂CH₂-, -CH₂SiH₂-or C₁-C₄ alkylene in which one or more hydrogen may be replaced by halogen and any methylene may be replaced by -O-, -S-, -CO-, -CS-, -CH=CH- or -C≡C-, but -O- and -S- are not successive; m and n each independently represent 0 or 1, provided that at least one of Z¹, Z² and Z³ is -SiH₂CH₂- or - CH₂SiH₂-.

2. The liquid crystalline compound of claim 1 wherein m is 0 and n is 0.

3. The liquid crystalline compound of claim 1 wherein m plus n is 1.

4. The liquid crystalline compound of claim 1 wherein m is 1 and n is 1.

5. The liquid crystalline compound of claim 2 wherein rings A² and A³ each independently represent 1,4-cyclohexylene or 1,4-phenylene in which one or more hydrogen may be replaced by halogen.

6. The liquid crystalline compound of claim 3 wherein rings A¹, A², A³ and A⁴ each independently represent 1,4-cyclohexylene or 1,4-phenylene in which one or more hydrogen may be replaced by halogen.

7. The liquid crystalline compound of claim 4 wherein rings A¹_{,} A²_{,} A³ and A⁴ each independently represent 1,4-cyclohexylene or 1,4-phenylene in which one or more hydrogen may be replaced by halogen.

8. The liquid crystalline compound of claim 1 represented by any one of the following formulas (1-a) to (1-l) 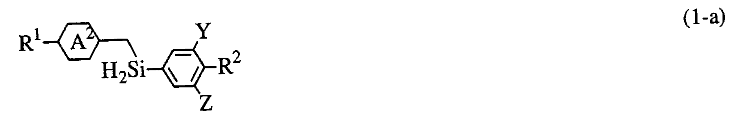 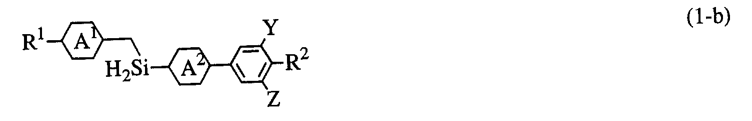 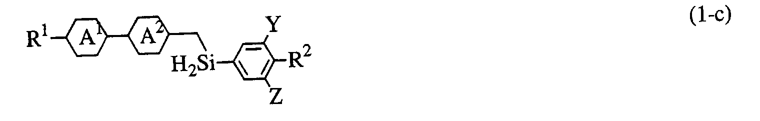 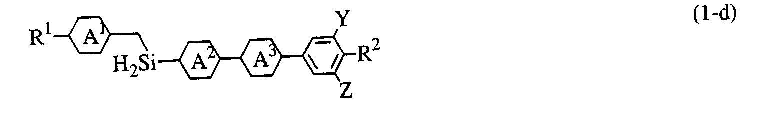 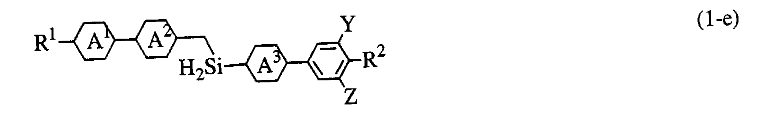 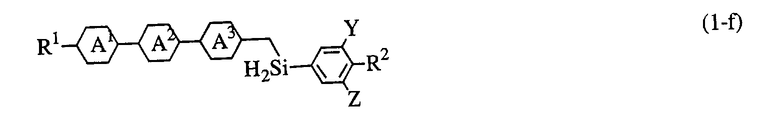 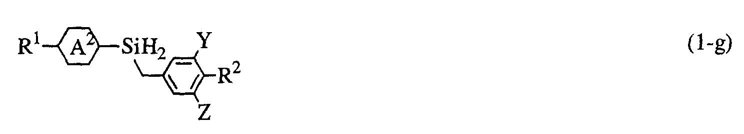 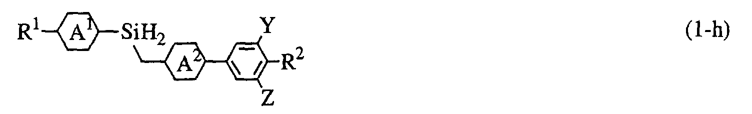 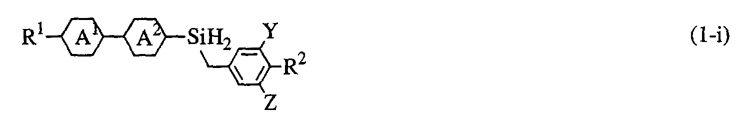 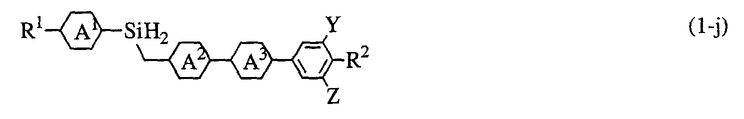 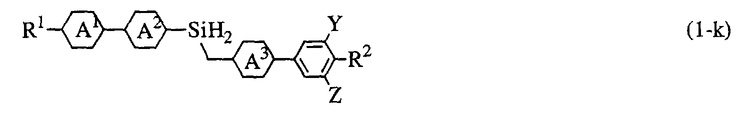 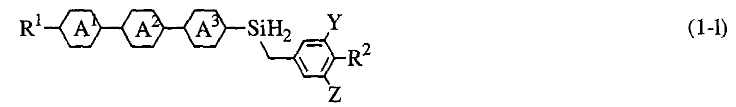 wherein R¹, R² and rings A¹, A² and A³ have the same meanings as defined in claim 1, and Y and Z each independently represent hydrogen or halogen.

9. A liquid crystal composition which comprises at least one liquid crystalline compound as claimed in any one of claims 1 to 8.

10. The liquid crystal composition of claim 9 which further comprises as a second component at least one compound selected from the group consisting of the compound of formula (2), the compound of formula (3) and the compound of formula (4) 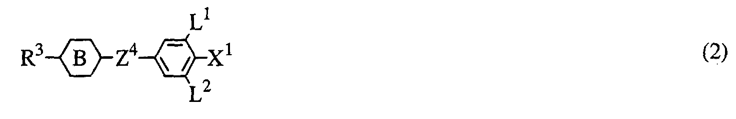 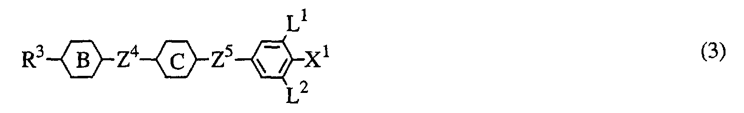 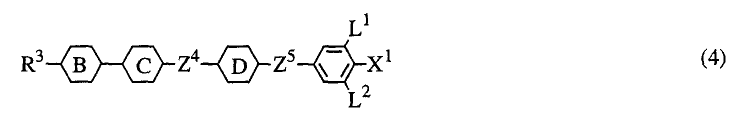 wherein R³ represents C₁-C₁₀ alkyl in which any nonadjacent - CH₂- may be replaced by -O- or -CH=CH- and any hydrogen may be replaced by fluorine; X¹ represents fluorine, chlorine, - OCF₃ -OCF₂H, -CF₃, -CF₂H, -CFH₂, -OCF₂CF₂H or -OCF₂CFHCF₃; L¹ and L² each independently represent hydrogen or fluorine; Z⁴ and Z⁵ each independently represent - (CH₂)₂-, - (CH₂)₄-, -COO-, - CF₂O-, -OCF₂-, -CH=CH- or a single bond; rings B and C each independently represent trans-1,4-cyclohexylene, 1,3-dioxane-2,5-diyl or 1,4-phenylene in which hydrogen may be replaced by fluorine; ring D represents trans-1,4-cyclohexylene or 1,4-phenylene in which hydrogen may be replaced by fluorine.

11. The liquid crystal composition of claim 9 which further comprises as a second component at least one compound selected from the group consisting of the compound of formula (5) and the compound of formula (6) 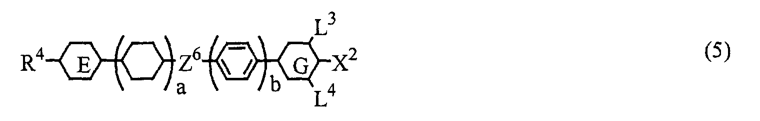 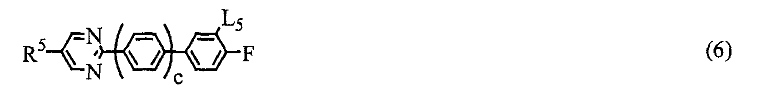 wherein R⁴ and R⁵ each independently represent C₁-C₁₀ alkyl in which any nonadjacent -CH₂- may be replaced by -O- or - CH=CH- and any hydrogen may be replaced by fluorine; X² represents -CN or -C≡C-CN; ring E represents trans-1,4-cyclohexylene, 1,4-phenylene, 1,3-dioxane-2,5-diyl, or pyrimidine-2,5-diyl; ring F represents trans-1,4-cyclohexylene, 1,4-phenylene in which hydrogen may be replaced by fluorine or pyrimidine-2,5-diyl; ring G represents trans-1,4-cyclohexylene or 1,4-phenylene; Z⁶ represents - (CH₂)₂-, -COO-, -CF₂O-, -OCF₂- or a single bond; L³, L⁴ and L⁵ each independently represent hydrogen or fluorine; and a, b and c each independently represent 0 or 1.

12. The liquid crystal composition of claim 9 which further comprises as a second component at least one compound selected from the group consisting of the compound of formula (7), the compound of formula (8) or the compound of formula (9) 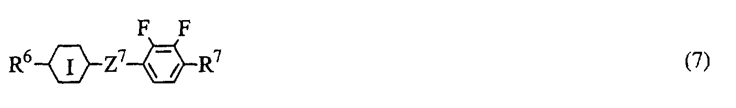 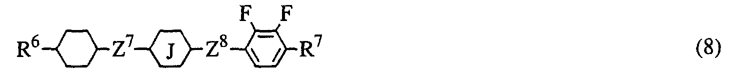 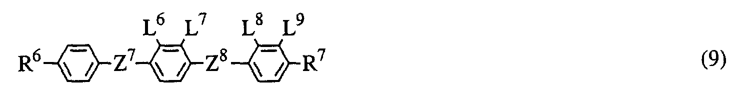 wherein R⁶ and R⁷ each independently represent C₁-C₁₀ alkyl in which any nonadjacent -CH₂- may be replaced by -O- or - CH=CH- and any hydrogen may be replaced by fluorine; rings I and J each independently represent trans-1,4-cyclohexylene or 1,4-pehnylene; L⁶, L⁷, L⁸ and L⁹ each independently represent hydrogen or fluorine, but all do not represent hydrogen; and Z⁷ and Z⁸ each independently represent - (CH₂)₂-, -COO- or a single bond.

13. The liquid crystal composition of claim 9 which further comprises as a second component at least one compound selected from the group consisting of the compound of formula (2), the compound of formula (3) and the compound of formula (4), and as a third component at least one compound selected from the group consisting of the compound of formula (10), the compound of formula (11) and the compound of formula (12) 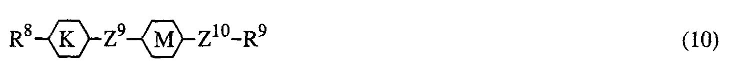 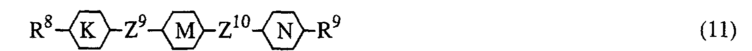 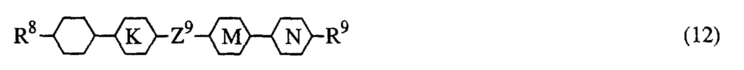 wherein R⁸ and R⁹ each independently represent C₁-C₁₀ alkyl in which any nonadjacent -CH₂- may be replaced by -O- or - CH=CH- and any hydrogen may be replaced by fluorine; rings K, M and N each independently represent trans-1,4-cyclohexylene, pyrimidine-2,5-diyl or 1,4-phenylene in which hydrogen may be replaced by fluorine; Z⁹ and Z¹⁰ each independently represent -C≡C-, -COO-, -(CH₂)₂-, -CH=CH- or a single bond.

14. The liquid crystal composition of claim 9 which further comprises as a second component at least one compound selected from the group consisting of the compound of formula (5) and the compound of formula (6), and as a third component at least one compound selected from the group consisting of the compound of formula (10), the compound of formula (11) and the compound of formula (12).

15. The liquid crystal composition of claim 9 which further comprises as a second component at least one compound selected from the group consisting of the compound of formula (7), the compound of formula (8) and the compound of formula (9), and as a third component at least one compound selected from the group consisting of the compound of formula (10), the compound of formula (11) and the compound of formula (12).

16. The liquid crystal composition of claim 9 which further comprises as a second component at least one compound selected from the group consisting of the compound of formula (2), the compound of formula (3) and the compound of formula (4), and as a third component at least one compound selected from the group consisting of the compound of formula (5) and the compound of formula (6), and as a fourth component at least one of the compound selected from the group consisting of the compound of formula (10), the compound of formula (11) and the compound of formula (12).

17. The liquid crystal composition of any one of claims 9 to 16 which further comprises one or more optically active compounds.

18. A liquid crystal display device comprising the liquid crystal composition as claimed in any one of claims 9 to 17.
